(19) Europäisches Patentamt / European Patent Office / Office européen des brevets

(11) **EP 4 355 020 A1**

(12) **EUROPEAN PATENT APPLICATION**
published in accordance with Art. 153(4) EPC

(43) Date of publication:
**17.04.2024 Bulletin 2024/16**

(21) Application number: **22819358.7**

(22) Date of filing: **24.05.2022**

(51) International Patent Classification (IPC):
**H04W 84/12** (2009.01)      **H04B 17/309** (2015.01)
**H04W 24/10** (2009.01)

(52) Cooperative Patent Classification (CPC):
**H04B 17/309; H04W 24/10; H04W 28/06;
H04W 84/12**

(86) International application number:
**PCT/CN2022/094799**

(87) International publication number:
**WO 2022/257760 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.06.2021  CN 202110633428**

(71) Applicant: **Huawei Technologies Co., Ltd.
Longgang
Shenzhen, Guangdong 518129 (CN)**

(72) Inventors:
• **YU, Jian**
  **Shenzhen, Guangdong 518129 (CN)**
• **HU, Mengshi**
  **Shenzhen, Guangdong 518129 (CN)**
• **GUO, Yuchen**
  **Shenzhen, Guangdong 518129 (CN)**
• **GAN, Ming**
  **Shenzhen, Guangdong 518129 (CN)**

(74) Representative: **Huawei European IPR
Huawei Technologies Duesseldorf GmbH
Riesstraße 25
80992 München (DE)**

(54) **COMMUNICATION METHOD AND DEVICE**

(57) This application provides a communication method and apparatus, to support a case in which a number of segments is greater than 8 or a case in which a size of an EHT compressed beamforming/channel quality indication report is greater than 91632 bytes. The communication method and apparatus may be applied to a Wi-Fi system. The method includes: A first device sends a first frame to a second device, and receives an EHT compressed beamforming/channel quality indication report from the second device. The first frame is used to request one or more of N segments of the extremely high throughput EHT compressed beamforming/channel quality indication report, and N is an integer greater than 8.

FIG. 2

EP 4 355 020 A1

## Description

This application claims priority to Chinese Patent Application No. 202110633428.X, filed with the China National Intellectual Property Administration on June 7, 2021 and entitled "COMMUNICATION METHOD AND APPARATUS", which is incorporated herein by reference in its entirety.

## TECHNICAL FIELD

This application relates to the communication field, and in particular, to a communication method and apparatus.

## BACKGROUND

In a channel sounding process, a responder may perform channel estimation, and feed back an extremely high throughput (extremely high throughput, EHT) compressed beamforming/channel quality indication frame. For example, when a size of an EHT compressed beamforming/channel quality indication report exceeds 11454 bytes (Bytes) (also referred to as Octets, octets), the EHT compressed beamforming/channel quality indication report needs to be divided into a maximum of eight segments (segments) (also referred to as fragments). Specifically, lengths of all segments except a last segment need to be the same, and a length of each segment is 11454 bytes. The last segment is used to carry a remaining byte of the EHT compressed beamforming/channel quality indication report. A length of the last segment may be less than or equal to 11454 bytes. Each segment is carried in a separate EHT compressed beamforming/channel quality indication frame.

With development of communication technologies, a size of a bandwidth that can be supported in a communication system accordingly increases (for example, a 320 MHz bandwidth can be supported), and a number of transceiver antennas also increases (for example, a maximum number is up to 16). In this case, a feedback amount in the channel sounding process also exponentially increases. In other words, the size of the EHT compressed beamforming/channel quality indication report is greater than 91632 bytes, or a number of segments is greater than 8. However, in the conventional technology, only a case in which the number of segments is less than or equal to 8 or a case in which the size of the EHT compressed beamforming/channel quality indication report is less than or equal to 91632 bytes (11454 × 8 = 91632) is supported. For a case in which the number of segments is greater than 8 or a case in which the size of the EHT compressed beamforming/channel quality indication report is greater than 91632 bytes, no corresponding solution is provided in the industry.

## SUMMARY

Embodiments of this application provide a communication method and apparatus, to support a case in which a number of segments is greater than 8 or a case in which a size of an EHT compressed beamforming/channel quality indication report is greater than 91632 bytes.

To achieve the foregoing objective, the following technical solutions are used in this application.

According to a first aspect, a communication method is provided. The communication method includes: A first device sends a first frame to a second device, and receives an EHT compressed beamforming/channel quality indication report from the second device. The first frame is used to request one or more of N segments of the extremely high throughput EHT compressed beamforming/channel quality indication report, and N is an integer greater than 8.

According to the communication method provided in the first aspect, the first device sends the first frame to the second device, where the first frame is used to request one or more of the N segments of the EHT compressed beamforming/channel quality indication report, and N is an integer greater than 8; and the second device receives the first frame, and feeds back the EHT compressed beamforming/channel quality indication report. In this way, a case in which a number of segments is greater than 8 or a case in which a size of the EHT compressed beamforming/channel quality indication report is greater than 91632 bytes can be supported. Therefore, a channel sounding process in which a bandwidth is 320 MHz and a number of transceiver antennas (or spatial streams) are 16 can be implemented, so that data transmission of the 16 spatial streams on the 320 MHz bandwidth is supported, and a system throughput can be increased.

Optionally, the first frame may include a beamforming report poll trigger frame (beamforming report poll trigger frame, BFRP TF).

In a possible design manner, any one of the N segments is carried in a second frame, the second frame may include a first field and any one of the N segments, and the first field may indicate a segment that is not fed back in the N segments. In this way, the first device may learn, by using the second frame, the segment that is not fed back in the N segments, to continue to request the segment that is not fed back, where N is an integer greater than 8. This can implement a channel sounding process in which a number of segments is greater than 8.

Optionally, the second frame may be an EHT compressed beamforming/channel quality indication frame, the EHT compressed beamforming/channel quality indication frame may include an EHT multiple-input multiple-output control (EHT multiple-input multiple-output control, EHT MIMO Control) field, and the first field may be carried in the EHT MIMO Control field.

For example, a number of bits of the first field may be greater than 3. The first field may include a remaining feedback segment-high (Remaining Feedback Segment-high) field and a remaining feedback segment-low (Remaining Feedback Segment-low) field. For example, a number of bits of the remaining feedback segment-low field is 3, and a number of bits of the remaining feedback segment-high field is greater than 1. In this way, the first field can indicate more than seven segments that are not fed back, so that a case of more than eight segments is supported.

In a possible design manner, that the first frame is used to request one or more of N segments of the extremely high throughput EHT compressed beamforming/channel quality indication report may include: The first frame may include a second field, and the second field may be used to request one or more of the N segments of the EHT compressed beamforming/channel quality indication report. In other words, the first device requests one or more of the more than eight segments by using the second field of the first frame. In this way, the channel sounding process in which the number of segments is greater than 8 can be implemented, and the case in which the number of segments is greater than 8 or the case in which the size of the EHT compressed beamforming/channel quality indication report is greater than 91632 bytes can be supported.

Optionally, the second field may include a feedback segment retransmission bitmap (Feedback Segment Retransmission Bitmap) field of the beamforming report poll trigger frame.

In a possible design manner, a number of bits of the second field is W, at least one of the W bits may indicate to request at least two of the segments, and W is an integer greater than or equal to 1. In this way, at least one of the W bits indicates to request at least two of the segments, so that the case in which the number of segments is greater than 8 or the case in which the size of the EHT compressed beamforming/channel quality indication report is greater than 91632 bytes can be supported.

In a possible design manner, a number of bits of the second field is greater than or equal to N.

For example, the second field includes a bitmap. In this way, 1 bit may represent one segment at a fine granularity. Because the number of bits of the second field is greater than or equal to N, that is, a current frame structure is changed to introduce more bits for requesting the extremely high throughput EHT compressed beamforming/channel quality indication report, the case in which the number of segments is greater than 8 or the case in which the size of the EHT compressed beamforming/channel quality indication report is greater than 91632 bytes can be supported.

Optionally, the first frame may further include a trigger type field, and the trigger type field indicates that the number of bits of the second field in the first frame is greater than 8 or the first frame is an enhanced BFRP trigger frame. In other words, the trigger type field may indicate a variant type of the current first frame, and may identify the first frame provided in this embodiment of this application.

In a possible design manner, that the first frame is used to request one or more of N segments of the extremely high throughput EHT compressed beamforming/channel quality indication report may include: The first frame may include a second field, the second field may indicate an index R of a first segment in consecutive (N-R) segments that need to be requested, and R is an integer greater than or equal to 0 and less than or equal to N-1. In this way, the index R of the first segment in the consecutive (N-R) segments that need to be requested may be indicated, to request a segment. When the second field occupies less than or equal to 8 bits, more than eight segments can be solicited without a need of changing a frame structure.

Optionally, the second field may indicate a first segment in a segment that is incorrectly received and a segment that is not fed back in the N segments. In this way, it can be ensured that all segments that need to be further fed back are solicited.

Optionally, the second field may indicate to request a number of segments that are not fed back in the N segments. In this way, the first device may request, by using the second field, a number of segments that are not fed back in the N segments, where N is greater than 8, so that the second device selects, for feedback, a segment that is not fed back.

Optionally, the first frame may further include a plurality of user information (User Info) fields, and the user information field includes the second field.

In this way, for a second device that implements a basic feature (a maximum value of a supported bandwidth is 160 MHz or 320 MHz, and a maximum value of a number of included antennas is 8), the second field may indicate one or more of a maximum of eight segments of the EHT compressed beamforming/channel quality indication frame. For a second device that implements an evolution feature (a maximum value of a supported bandwidth is 320 MHz, and a maximum value of a number of included antennas is 16), the second field may indicate the first segment in the segment that is incorrectly received and the segment that is not fed back in the N segments, or indicate the index R of the first segment in the consecutive (N-R) segments that need to be requested.

Optionally, the second field is a feedback segment retransmission bitmap field. Optionally, the first frame may further include a first indication field, and the first indication field may indicate an indication meaning of the second field. In this way, the first indication field may indicate a specific user information field carrying the second field that indicates the first segment in the segment that is incorrectly received and the segment that is not fed back in the N segments, or indicates the index R of the first segment in the consecutive (N-R) segments that need to be requested.

In a possible design manner, that the first frame is used to request one or more of N segments of the extremely high throughput EHT compressed beamforming/channel quality indication report may include: The first frame may include a plurality of user information fields, association identifiers of at least two of the plurality of user information fields are the same, and the at least two user information fields are used to request the EHT compressed beamforming/channel quality indication report. In other words, user information fields with a same association identifier correspond to a same second device. In this way, the feedback segment retransmission bitmap field is extended, and more than eight segments are solicited.

Optionally, in the at least two user information fields with the same association identifier, one user information field includes indication information required by a user, and a field other than an association identifier field in another user information field may indicate to request one or more segments.

In other words, the at least two user information fields with the same association identifier are used to request the N segments of the EHT compressed beamforming/channel quality indication report, and a part of user information fields are redefined. In this way, the frame structure of the first frame may not be changed, so that feedback segment retransmission bitmap fields of a part or all of users are extended without a change in a length of the user information field and effect on reception of another user.

Optionally, in the at least two user information fields with the same association identifier, each user information field includes a feedback segment retransmission bitmap field, and the feedback segment retransmission bitmap field is used to request one or more of the N segments of the EHT compressed beamforming/channel quality indication report.

In this way, the frame structure of the first frame may not be changed, so that feedback segment retransmission bitmap fields of a part or all of users are extended without a change in a length of the user information field and effect on reception of another user. In addition, interpretation of other fields is not affected.

In a possible design manner, the communication method provided in the first aspect may further include: receiving a third frame from the second device, and parsing the third frame. The third frame includes a media access control protocol data unit MPDU and an MPDU delimiter field. The MPDU includes one of T segments of the extremely high throughput EHT compressed beamforming/channel quality indication report, and T is an integer greater than or equal to 1. The MPDU delimiter includes a third field, the third field indicates that a number of bytes of the MPDU is M, and M is an integer greater than 11454.

In this way, in this application, a maximum length of the MPDU is extended, to reduce a maximum number of required segments, so that a case in which the size of the EHT compressed beamforming/channel quality indication report is greater than 91632 bytes can be supported.

Optionally, the third frame may include an aggregated media access control protocol data unit (aggregated MAC protocol data unit, A-MPDU) of the EHT compressed beamforming/channel quality indication frame.

In a possible design manner, a number of bits of the third field may be 14.

Optionally, the third field may include an MPDU length (MPDU Length) field. In this way, the MPDU length field is not changed, and a length of the MPDU is increased, to reduce a number of segments, so that the case in which the number of segments is greater than 8 or the case in which the size of the EHT compressed beamforming/channel quality indication report is greater than 91632 bytes can be supported.

In a possible design manner, a number of bits of the third field may be greater than or equal to 15. In this way, the maximum length of the MPDU is further doubled. In comparison with that in the conventional technology in which the MPDU length field indicates a maximum of 11454 bytes, the maximum number of segments may be reduced by a half, so that the case in which the size of the EHT compressed beamforming/channel quality indication report is greater than 91632 bytes can be supported.

In a possible design manner, the number M of bytes of the MPDU may be greater than an index value L of the third field. In this way, the length of the MPDU may be increased, to reduce a maximum number of required segments, so that the case in which the size of the EHT compressed beamforming/channel quality indication report is greater than 91632 bytes can be supported.

In a possible design manner, the third frame may further include a fourth field, the fourth field may be used to check the MPDU, and a number of bits of the fourth field is greater than 32. In this way, a check capability of a frame check sequence can be improved.

Optionally, the fourth field may include a frame check sequence (frame check sequence, FCS) field.

According to a second aspect, a communication method is provided. The communication method includes: A second device receives a first frame from a first device, and sends an EHT compressed beamforming/channel quality indication report to the first device. The first frame is used to request one or more of N segments of the extremely high throughput EHT compressed beamforming/channel quality indication report, and N is an integer greater than 8.

Optionally, the first frame may include a beamforming report poll trigger frame.

In a possible design manner, any one of the N segments is carried in a second frame, the second frame may include a first field and any one of the N segments, and the first field may indicate a segment that is not fed back in the N segments.

Optionally, the second frame may be an EHT compressed beamforming/channel quality indication frame, the EHT compressed beamforming/channel quality indication frame may include an EHT multiple-input multiple-output control (EHT MIMO Control) field, and the first field may be carried in the EHT MIMO Control field.

For example, a number of bits of the first field may be greater than 3. The first field may include a remaining feedback segment-high field and a remaining feedback segment-low field.

In a possible design manner, that the first frame is used to request one or more of N segments of the extremely high throughput EHT compressed beamforming/channel quality indication report may include: The first frame may include a second field, and the second field may be used to request one or more of the N segments of the EHT compressed beamforming/channel quality indication report.

Optionally, the second field may include a feedback segment retransmission bitmap field of the beamforming report poll trigger frame.

In a possible design manner, a number of bits of the second field is W, at least one of the W bits may indicate to request at least two of the segments, and W is an integer greater than or equal to 1.

In a possible design manner, a number of bits of the second field is greater than or equal to N.

Optionally, the first frame may further include a trigger type field, and the trigger type field indicates that the number of bits of the second field in the first frame is greater than 8 or the first frame is an enhanced BFRP trigger frame.

In a possible design manner, that the first frame is used to request one or more of N segments of the extremely high throughput EHT compressed beamforming/channel quality indication report may include: The first frame may include a second field, the second field may indicate an index R of a first segment in consecutive (N-R) segments that need to be requested, and R is an integer greater than or equal to 0 and less than or equal to N-1.

Optionally, the second field may indicate a first segment in a segment that is incorrectly received and a segment that is not fed back in the N segments.

Optionally, the second field may indicate to request a number of segments that are not fed back in the N segments.

Optionally, the first frame may further include a plurality of user information fields, and the second field is carried in one or more of the plurality of user information fields.

Optionally, the first frame may further include a first indication field, and the first indication field may indicate the user information field including the second field.

In a possible design manner, that the first frame is used to request one or more of N segments of the extremely high throughput EHT compressed beamforming/channel quality indication report may include: The first frame may include a plurality of user information fields, association identifiers of at least two of the plurality of user information fields are the same, and the at least two user information fields are used to request the EHT compressed beamforming/channel quality indication report.

Optionally, in the at least two user information fields with the same association identifier, one user information field includes indication information required by a user, and a field other than an association identifier field in another user information field may indicate to request one or more segments.

Optionally, in the at least two user information fields with the same association identifier, each user information field includes a feedback segment retransmission bitmap field, and the feedback segment retransmission bitmap field is used to request one or more of the N segments of the EHT compressed beamforming/channel quality indication report.

In a possible design manner, the communication method provided in the second aspect may further include: generating a third frame, and sending the third frame to the first device. The third frame includes a media access control protocol data unit MPDU and an MPDU delimiter field. The MPDU includes one of T segments of the extremely high throughput EHT compressed beamforming/channel quality indication report, and T is an integer greater than or equal to 1. The MPDU delimiter field includes a third field, the third field indicates that a number of bytes of the MPDU is M, and M is an integer greater than 11454.

Optionally, the third frame may include an aggregated media access control protocol data unit of the EHT compressed beamforming/channel quality indication frame.

In a possible design manner, a number of bits of the third field may be 14.

Optionally, the third field may include an MPDU length field.

In a possible design manner, a number of bits of the third field may be greater than or equal to 15.

In a possible design manner, the number M of bytes of the MPDU may be greater than an index value L of the third field.

In a possible design manner, the third frame may further include a fourth field, the fourth field may be used to check the MPDU, and a number of bits of the fourth field is greater than 32.

Optionally, the fourth field may include a frame check sequence field.

In addition, for technical effects of the communication method in the second aspect, refer to the technical effects of the communication method in the first aspect. Details are not described herein again.

According to a third aspect, a communication method is provided. The communication method includes: A second device generates a third frame, and sends the third frame to a first device. The third frame includes a media access control protocol data unit MPDU and an MPDU delimiter field. The MPDU includes one of T segments of an extremely high throughput EHT compressed beamforming/channel quality indication report, and T is an integer greater than or equal to 1. The MPDU delimiter field includes a third field, the third field indicates that a number of bytes of the MPDU is M, and M is an integer greater than 11454.

Optionally, the third frame may include an aggregated media access control protocol data unit of an EHT compressed beamforming/channel quality indication frame.

In a possible design manner, a number of bits of the third field may be 14.

Optionally, the third field may include an MPDU length field. In this way, the MPDU length field is not changed, and a length of the MPDU is increased, to reduce a number of segments, so that a case in which the number of segments is greater than 8 or a case in which a size of the EHT compressed beamforming/channel quality indication report is greater than 91632 bytes can be supported.

In a possible design manner, a number of bits of the third field may be greater than or equal to 15. In this way, a maximum length of the MPDU is further doubled. In comparison with that in the conventional technology in which the MPDU length field indicates a maximum of 11454 bytes, a maximum number of segments may be reduced by a half, so that the case in which the size of the EHT compressed beamforming/channel quality indication report is greater than 91632 bytes can be supported.

In a possible design manner, the number M of bytes of the MPDU may be greater than an index value L of the third field. In this way, the length of the MPDU may be increased, to reduce a maximum number of required segments, so that the case in which the size of the EHT compressed beamforming/channel quality indication report is greater than 91632 bytes can be supported.

In a possible design manner, the third frame may further include a fourth field, the fourth field may be used to check the MPDU, and a number of bits of the fourth field is greater than 32. In this way, a check capability of a frame check sequence can be improved.

Optionally, the fourth field may include a frame check sequence field.

According to a fourth aspect, a communication method is provided. The communication method includes: A first device receives a third frame from a second device, and parses the third frame. The third frame includes a media access control protocol data unit MPDU and an MPDU delimiter field. The MPDU includes one of T segments of an extremely high throughput EHT compressed beamforming/channel quality indication report, and T is an integer greater than or equal to 1. The MPDU delimiter includes a third field, the third field indicates that a number of bytes of the MPDU is M, and M is an integer greater than 11454.

Optionally, the third frame may include an aggregated media access control protocol data unit of an EHT compressed beamforming/channel quality indication frame.

In a possible design manner, a number of bits of the third field may be 14.

Optionally, the third field may include an MPDU length field.

In a possible design manner, a number of bits of the third field may be greater than or equal to 15.

In a possible design manner, the number M of bytes of the MPDU may be greater than an index value L of the third field.

In a possible design manner, the third frame may further include a fourth field, the fourth field may be used to check the MPDU, and a number of bits of the fourth field is greater than 32.

Optionally, the fourth field may include a frame check sequence field.

In addition, for technical effects of the communication method in the fourth aspect, refer to the technical effects of the communication method in the third aspect. Details are not described herein again.

According to a fifth aspect, a communication apparatus is provided. The communication apparatus includes a sending module and a receiving module. The sending module is configured to send a first frame to a second device. The first frame is used to request one or more of N segments of an extremely high throughput EHT compressed beamforming/channel quality indication report, and N is an integer greater than 8.

The receiving module is configured to receive the EHT compressed beamforming/channel quality indication report from the second device.

Optionally, the first frame may include a beamforming report poll trigger frame.

In a possible design manner, any one of the N segments is carried in a second frame, the second frame may include a first field and any one of the N segments, and the first field may indicate a segment that is not fed back in the N segments.

Optionally, the second frame may be an EHT compressed beamforming/channel quality indication frame, the EHT compressed beamforming/channel quality indication frame may include an EHT multiple-input multiple-output control field, and the first field may be carried in the EHT multiple-input multiple-output control field.

For example, a number of bits of the first field may be greater than 3. The first field may include a remaining feedback segment-high field and a remaining feedback segment-low field.

In a possible design manner, that the first frame is used to request one or more of N segments of an extremely high throughput EHT compressed beamforming/channel quality indication report may include: The first frame may include a second field, and the second field may be used to request one or more of the N segments of the EHT compressed beamforming/channel quality indication report.

Optionally, the second field may include a feedback segment retransmission bitmap field of the beamforming report poll trigger frame.

In a possible design manner, a number of bits of the second field is W, at least one of the W bits may indicate to request at least two of the segments, and W is an integer greater than or equal to 1.

In a possible design manner, a number of bits of the second field is greater than or equal to N.

Optionally, the first frame may further include a trigger type field, and the trigger type field indicates that the number of bits of the second field in the first frame is greater than 8 or the first frame is an enhanced BFRP trigger frame.

In a possible design manner, that the first frame is used to request one or more of N segments of an extremely high throughput EHT compressed beamforming/channel quality indication report may include: The first frame may include a second field, and the second field may indicate to request a first segment in a segment that is incorrectly received and a segment that is not fed back in the N segments.

Optionally, the second field may indicate to request a number of segments that are not fed back in the N segments.

Optionally, the first frame may further include a plurality of user information fields, and the second field is carried in one or more of the plurality of user information fields.

Optionally, the first frame may further include a first indication field, and the first indication field may indicate the user information field including the second field.

In a possible design manner, that the first frame is used to request one or more of N segments of an extremely high throughput EHT compressed beamforming/channel quality indication report may include: The first frame may include a plurality of user information fields, association identifiers of at least two of the plurality of user information fields are the same, and the at least two user information fields are used to request the EHT compressed beamforming/channel quality indication report.

Optionally, in the at least two user information fields with the same association identifier, one user information field includes indication information required by a user, and a field other than an association identifier field in another user information field may indicate to request one or more segments.

Optionally, in the at least two user information fields with the same association identifier, each user information field includes a feedback segment retransmission bitmap field, and the feedback segment retransmission bitmap field is used to request one or more of the N segments of the EHT compressed beamforming/channel quality indication report.

In a possible design manner, the communication apparatus provided in the fifth aspect may further include a processing module. The receiving module is further configured to receive a third frame from the second device. The processing module is configured to parse the third frame. The third frame includes a media access control protocol data unit MPDU and an MPDU delimiter field. The MPDU includes one of T segments of the extremely high throughput EHT compressed beamforming/channel quality indication report, and T is an integer greater than or equal to 1. The MPDU delimiter includes a third field, the third field indicates that a number of bytes of the MPDU is M, and M is an integer greater than 11454.

Optionally, the third frame may include an aggregated media access control protocol data unit of the EHT compressed beamforming/channel quality indication frame.

In a possible design manner, a number of bits of the third field may be 14.

Optionally, the third field may include an MPDU length field.

In a possible design manner, a number of bits of the third field may be greater than or equal to 15.

In a possible design manner, the number M of bytes of the MPDU may be greater than an index value L of the third field.

In a possible design manner, the third frame may further include a fourth field, the fourth field may be used to check the MPDU, and a number of bits of the fourth field is greater than 32.

Optionally, the fourth field may include a frame check sequence field.

It should be noted that the receiving module and the sending module may be separately disposed, or may be integrated into one module, that is, a transceiver module. Specific implementations of the receiving module and the sending module are not specifically limited in this application.

Optionally, the communication apparatus in the fifth aspect may further include a storage module. The storage module stores a program or instructions. When the processing module executes the program or the instructions, the communication apparatus in the fifth aspect is enabled to perform the method in the first aspect.

It should be noted that the communication apparatus in the fifth aspect may be a first device, or may be a chip (system) or another part or component that can be disposed in the first device. This is not limited in this application.

In addition, for technical effects of the communication apparatus in the fifth aspect, refer to the technical effects of the communication method in any possible implementation of the first aspect. Details are not described herein again.

According to a sixth aspect, a communication apparatus is provided. The communication apparatus includes a sending module and a receiving module. The receiving module is configured to receive a first frame from a first device. The first frame is used to request one or more of N segments of an extremely high throughput EHT compressed beamforming/channel quality indication report, and N is an integer greater than 8.

The sending module is configured to send the EHT compressed beamforming/channel quality indication report to the first device.

Optionally, the first frame may include a beamforming report poll trigger frame.

In a possible design manner, any one of the N segments is carried in a second frame, the second frame may include a first field and any one of the N segments, and the first field may indicate a segment that is not fed back in the N segments.

Optionally, the second frame may be an EHT compressed beamforming/channel quality indication frame, the EHT compressed beamforming/channel quality indication frame may include an EHT multiple-input multiple-output control field, and the first field may be carried in the EHT multiple-input multiple-output control field.

For example, a number of bits of the first field may be greater than 3. The first field may include a remaining feedback segment-high field and a remaining feedback segment-low field.

In a possible design manner, that the first frame is used to request one or more of N segments of an extremely high throughput EHT compressed beamforming/channel quality indication report may include: The first frame may include a second field, and the second field may be used to request one or more of the N segments of the EHT compressed beamforming/channel quality indication report.

Optionally, the second field may include a feedback segment retransmission bitmap field of the beamforming report poll trigger frame.

In a possible design manner, a number of bits of the second field is W, at least one of the W bits may indicate to request at least two of the segments, and W is an integer greater than or equal to 1.

In a possible design manner, a number of bits of the second field is greater than or equal to N.

Optionally, the first frame may further include a trigger type field, and the trigger type field indicates that the number of bits of the second field in the first frame is greater than 8 or the first frame is an enhanced BFRP trigger frame.

In a possible design manner, that the first frame is used to request one or more of N segments of an extremely high throughput EHT compressed beamforming/channel quality indication report may include: The first frame may include a second field, and the second field may indicate to request a first segment in a segment that is incorrectly received and a segment that is not fed back in the N segments.

Optionally, the second field may indicate to request a number of segments that are not fed back in the N segments.

Optionally, the first frame may further include a plurality of user information fields, and the second field is carried in one or more of the plurality of user information fields.

Optionally, the first frame may further include a first indication field, and the first indication field may indicate the user information field including the second field.

In a possible design manner, that the first frame is used to request one or more of N segments of an extremely high throughput EHT compressed beamforming/channel quality indication report may include: The first frame may include a plurality of user information fields, association identifiers of at least two of the plurality of user information fields are the same, and the at least two user information fields are used to request the EHT compressed beamforming/channel quality indication report.

Optionally, in the at least two user information fields with the same association identifier, one user information field includes indication information required by a user, and a field other than an association identifier field in another user information field may indicate to request one or more segments.

Optionally, in the at least two user information fields with the same association identifier, each user information field includes a feedback segment retransmission bitmap field, and the feedback segment retransmission bitmap field is used to request one or more of the N segments of the EHT compressed beamforming/channel quality indication report.

In a possible design manner, the communication apparatus provided in the fifth aspect may further include a processing module. The processing module is configured to generate a third frame. The sending module is further configured to send the third frame to the first device. The third frame includes a media access control protocol data unit MPDU and an MPDU delimiter field. The MPDU includes one of T segments of the extremely high throughput EHT compressed beamforming/channel quality indication report, and T is an integer greater than or equal to 1. The MPDU delimiter field includes a third field, the third field indicates that a number of bytes of the MPDU is M, and M is an integer greater than 11454.

Optionally, the third frame may include an aggregated media access control protocol data unit of the EHT compressed beamforming/channel quality indication frame.

In a possible design manner, a number of bits of the third field may be 14.

Optionally, the third field may include an MPDU length field.

In a possible design manner, a number of bits of the third field may be greater than or equal to 15.

In a possible design manner, the number M of bytes of the MPDU may be greater than an index value L of the third field.

In a possible design manner, the third frame may further include a fourth field, the fourth field may be used to check the MPDU, and a number of bits of the fourth field is greater than 32.

Optionally, the fourth field may include a frame check sequence field.

It should be noted that the receiving module and the sending module may be separately disposed, or may be integrated into one module, that is, a transceiver module. Specific implementations of the receiving module and the sending module are not specifically limited in this application.

Optionally, the communication apparatus in the sixth aspect may further include a processing module and a storage module. The storage module stores a program or instructions. When the processing module executes the program or the instructions, the communication apparatus in the fifth aspect is enabled to perform the method in the second aspect.

It should be noted that the communication apparatus in the sixth aspect may be a second device, or may be a chip (system) or another part or component that can be disposed in the second device. This is not limited in this application.

In addition, for technical effects of the communication apparatus in the sixth aspect, refer to the technical effects of the communication method in any possible implementation of the second aspect. Details are not described herein again.

According to a seventh aspect, a communication apparatus is provided. The communication apparatus includes a processing module and a transceiver module.

The processing module is configured to generate a third frame. The third frame includes an MPDU and an MPDU delimiter field. The MPDU includes one of T segments of an EHT compressed beamforming/channel quality indication report, and T is an integer greater than or equal to 1. The MPDU delimiter field includes a third field, the third field indicates that a number of bytes of the MPDU is M, and M is an integer greater than 11454.

The transceiver module is configured to send the third frame to a first device.

Optionally, the third frame may include an aggregated media access control protocol data unit of an EHT compressed beamforming/channel quality indication frame.

In a possible design manner, a number of bits of the third field may be 14.

Optionally, the third field may include an MPDU length field.

In a possible design manner, a number of bits of the third field may be greater than or equal to 15.

In a possible design manner, the number M of bytes of the MPDU may be greater than an index value L of the third field.

In a possible design manner, the third frame may further include a fourth field, the fourth field may be used to check the MPDU, and a number of bits of the fourth field is greater than 32.

Optionally, the fourth field may include a frame check sequence field.

It should be noted that the transceiver module in the seventh aspect may include a receiving module and a sending module. The receiving module is configured to receive data and/or signaling from the first device. The sending module is configured to send data and/or signaling to the first device. A specific implementation of the transceiver module is not specifically limited in this application.

Optionally, the communication apparatus in the seventh aspect may further include a storage module. The storage module stores a program or instructions. When the processing module executes the program or the instructions, the communication apparatus in the seventh aspect is enabled to perform the method in the third aspect.

It should be noted that the communication apparatus in the seventh aspect may be a second device, or may be a chip (system) or another part or component that can be disposed in the second device. This is not limited in this application.

In addition, for technical effects of the communication apparatus in the seventh aspect, refer to the technical effects of the communication method in any possible implementation of the third aspect. Details are not described herein again.

According to an eighth aspect, a communication apparatus is provided. The communication apparatus includes a processing module and a transceiver module.

The transceiver module is configured to receive a third frame from a second device. The third frame includes a media access control protocol data unit MPDU and an MPDU delimiter field. The MPDU includes one of T segments of an extremely high throughput EHT compressed beamforming/channel quality indication report, and T is an integer greater than or equal to 1. The MPDU delimiter includes a third field, the third field indicates that a number of bytes of the MPDU is M, and M is an integer greater than 11454.

The processing module is configured to parse the third frame.

Optionally, the third frame may include an aggregated media access control protocol data unit of an EHT compressed beamforming/channel quality indication frame.

In a possible design manner, a number of bits of the third field may be 14.

Optionally, the third field may include an MPDU length field.

In a possible design manner, a number of bits of the third field may be greater than or equal to 15.

In a possible design manner, the number M of bytes of the MPDU may be greater than an index value L of the third field.

In a possible design manner, the third frame may further include a fourth field, the fourth field may be used to check the MPDU, and a number of bits of the fourth field is greater than 32.

Optionally, the fourth field may include a frame check sequence field.

It should be noted that the transceiver module in the eighth aspect may include a receiving module and a sending module. The receiving module is configured to receive data and/or signaling from the second device. The sending module is configured to send data and/or signaling to the second device. A specific implementation of the transceiver module is not specifically limited in this application.

Optionally, the communication apparatus in the eighth aspect may further include a storage module. The storage module stores a program or instructions. When the processing module executes the program or the instructions, the communication apparatus in the eighth aspect is enabled to perform the method in the fourth aspect.

It should be noted that the communication apparatus in the eighth aspect may be a first device, or may be a chip (system) or another part or component that can be disposed in the first device. This is not limited in this application.

In addition, for technical effects of the communication apparatus in the eighth aspect, refer to the technical effects of the communication method in any possible implementation of the fourth aspect. Details are not described herein again.

According to a ninth aspect, a communication apparatus is provided. The communication apparatus includes a processor. The processor is configured to implement the communication method in any possible implementation of the first aspect to the fourth aspect.

In a possible design, the communication apparatus in the ninth aspect may further include a memory. The processor may be coupled to the memory, the processor may be configured to execute a computer program stored in the memory, and the memory is configured to store the computer program.

In a possible design, the communication apparatus in the ninth aspect may further include a transceiver. The transceiver may be a transceiver circuit or an input/output port. The transceiver may be used by the communication apparatus to communicate with another device.

It should be noted that the input port may be configured to implement receiving functions in the first aspect to the fourth aspect, and the output port may be configured to implement sending functions in the first aspect to the fourth aspect.

In this application, the communication apparatus in the ninth aspect may be a first device, a second device, or a chip or a chip system disposed inside the first device or the second device.

In addition, for technical effects of the communication apparatus in the ninth aspect, refer to the technical effects of the communication method in any implementation of the first aspect to the fourth aspect. Details are not described herein again.

According to a tenth aspect, a communication apparatus is provided. The communication apparatus includes a processor. The processor is coupled to a memory, and the memory is configured to store a computer program.

The processor is configured to execute the computer program stored in the memory, so that the communication method in any possible implementation of the first aspect to the fourth aspect is performed.

In a possible design, the communication apparatus in the tenth aspect may further include a transceiver. The transceiver may be a transceiver circuit or an input/output port. The transceiver may be used by the communication apparatus to communicate with another device.

It should be noted that the input port may be configured to implement receiving functions in the first aspect to the fourth aspect, and the output port may be configured to implement sending functions in the first aspect to the fourth aspect.

In this application, the communication apparatus in the tenth aspect may be a first device, a second device, or a chip or a chip system disposed inside the first device or the second device.

In addition, for technical effects of the communication apparatus in the tenth aspect, refer to the technical effects of the communication method in any implementation of the first aspect to the fourth aspect. Details are not described herein again.

According to an eleventh aspect, a communication system is provided. The communication system includes the communication apparatus in the fifth aspect and the communication apparatus in the sixth aspect. Alternatively, the communication system includes the communication apparatus in the ninth aspect that is configured to implement the method in the first aspect and the communication apparatus in the ninth aspect that is configured to implement the method in the second aspect. Alternatively, the communication system includes the communication apparatus in the seventh aspect and the communication apparatus in the eighth aspect. Alternatively, the communication system includes the communication apparatus in the ninth aspect that is configured to implement the method in the third aspect and the communication apparatus in the ninth aspect that is configured to implement the method in the fourth aspect. For example, the communication system includes one or more first devices and one or more second devices.

According to a twelfth aspect, a chip system is provided. The chip system includes a logic circuit and an input/output port. The logic circuit is configured to implement processing functions in the first aspect to the fourth aspect, and the input/output port is configured to implement transceiver functions in the first aspect to the fourth aspect. Specifically, the input port may be configured to implement the receiving functions in the first aspect to the fourth aspect, and the output port may be configured to implement the sending functions in the first aspect to the fourth aspect.

In a possible design, the chip system further includes a memory. The memory is configured to store program instructions and data for implementing functions in the first aspect to the fourth aspect.

The chip system may include a chip, or may include a chip and another discrete device.

According to a thirteenth aspect, a computer-readable storage medium is provided. The computer-readable storage medium includes a computer program or instructions. When the computer program or the instructions is or are run on a computer, the communication method in any possible implementation of the first aspect to the fourth aspect is enabled to be performed.

According to a fourteenth aspect, a computer program product is provided. The computer program product includes a computer program or instructions. When the computer program or the instructions is or are run on a computer, the communication method in any possible implementation of the first aspect to the fourth aspect is enabled to be performed.

## BRIEF DESCRIPTION OF DRAWINGS

FIG. 1 is a schematic diagram of an architecture of a communication system according to an embodiment of this application;

FIG. 2 is a schematic flowchart of a communication method according to an embodiment of this application;

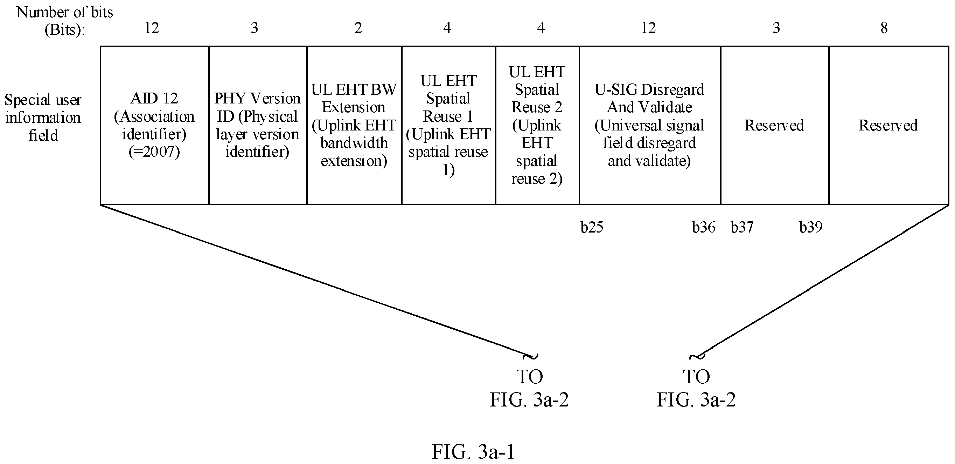

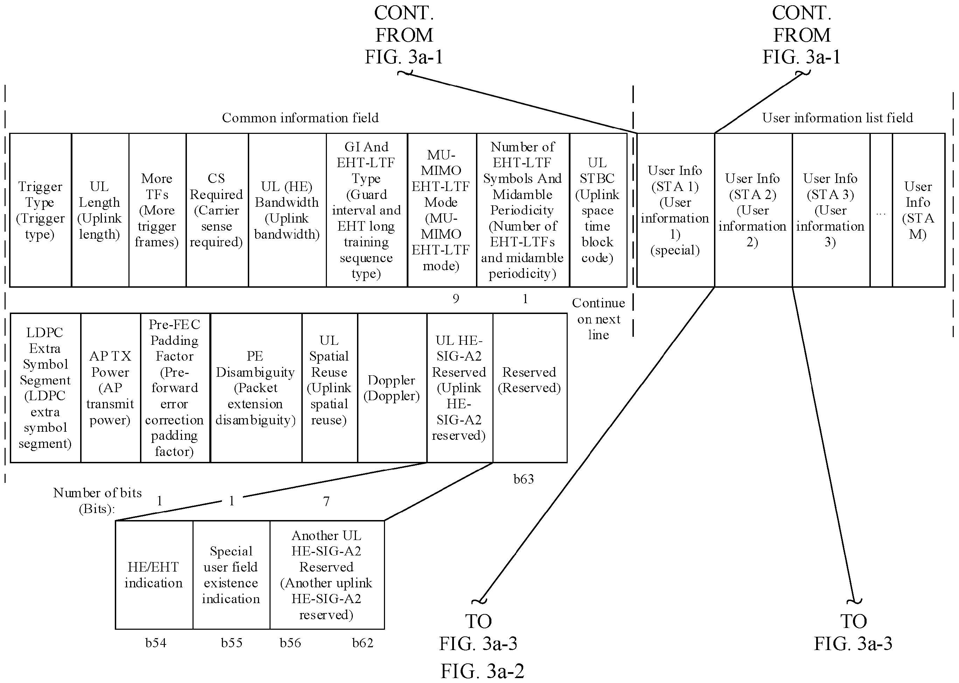

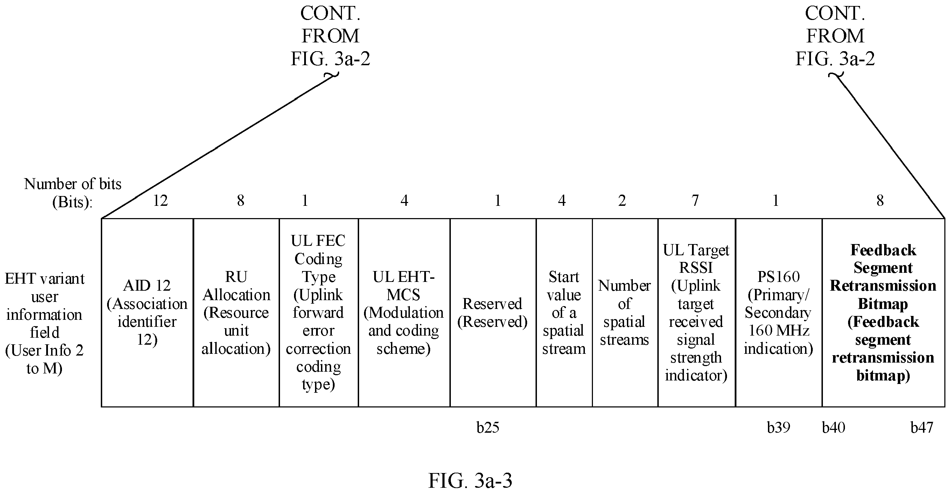

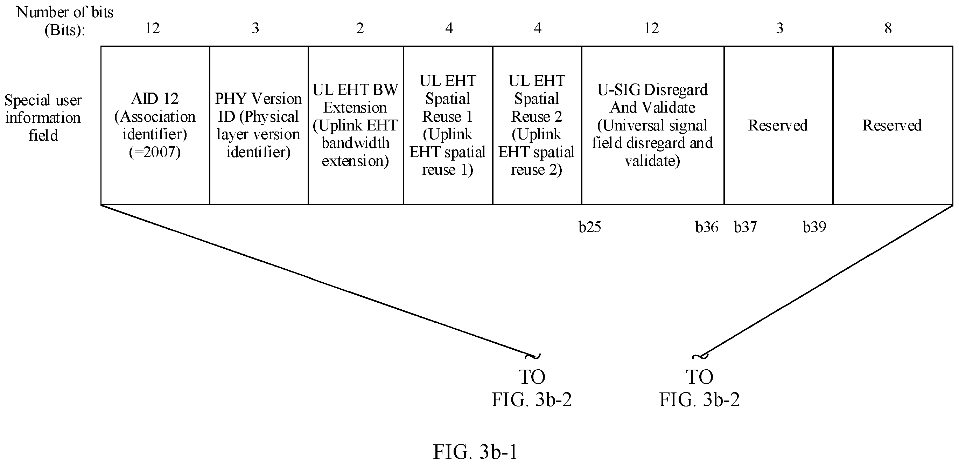

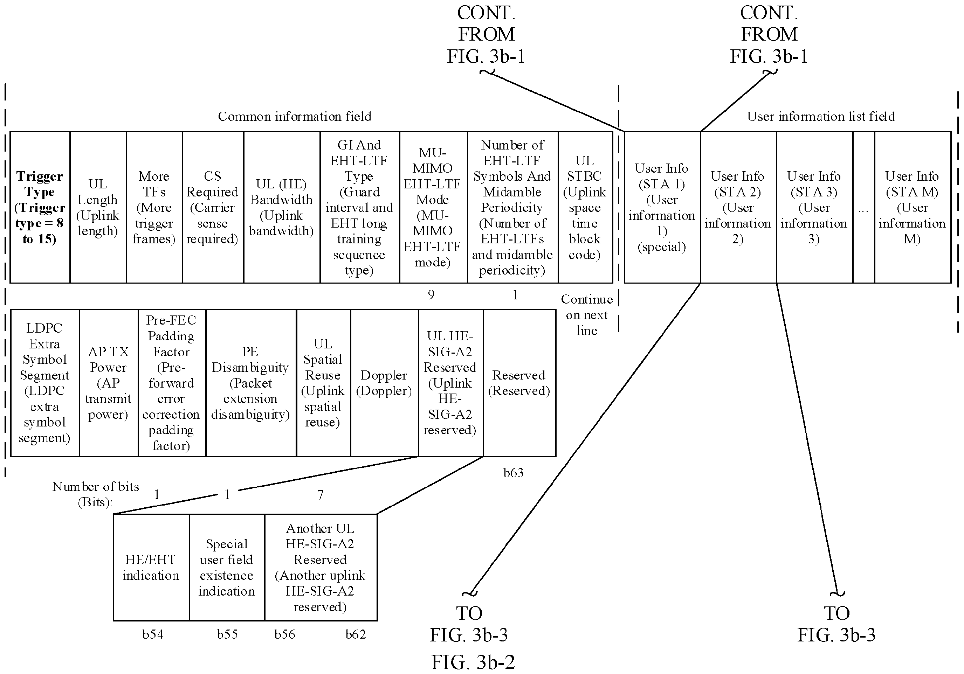

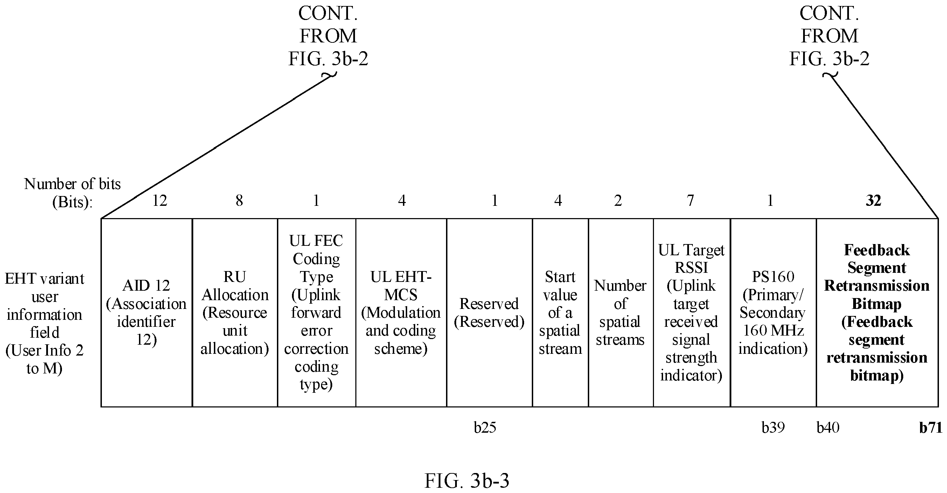

FIG. 3a-1, FIG. 3a-2, and FIG. 3a-3 are a schematic diagram of a frame structure of a first frame according to an embodiment of this application;

FIG. 3b-1, FIG. 3b-2, and FIG. 3b-3 are a schematic diagram of a frame structure of another first frame according to an embodiment of this application;

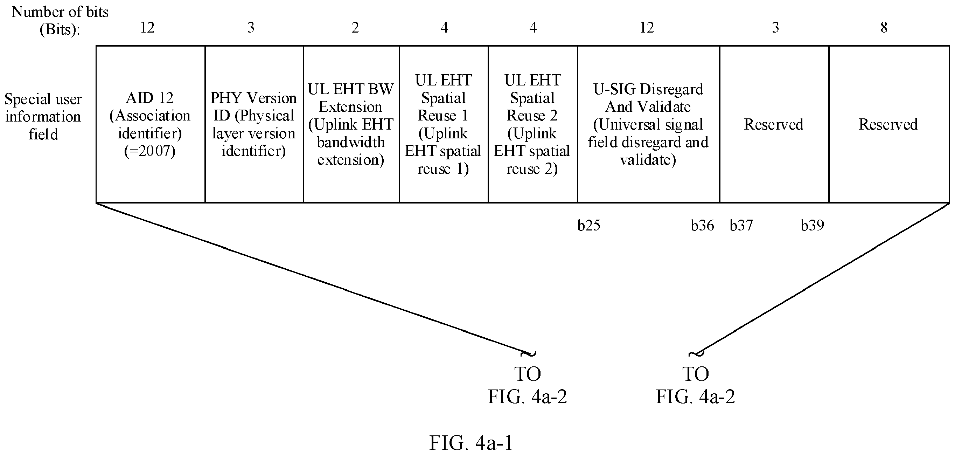

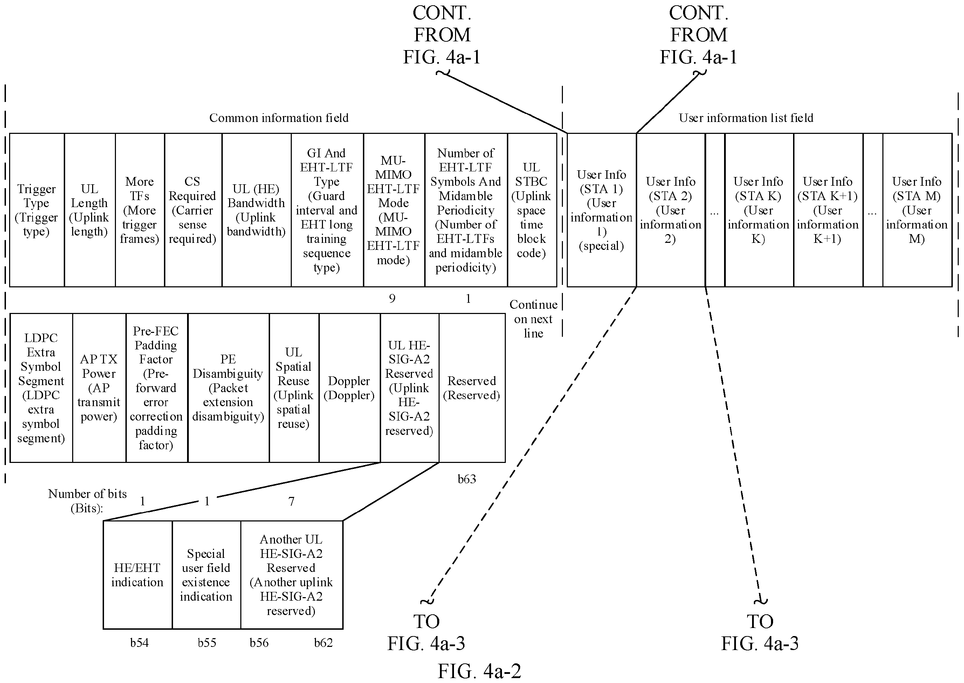

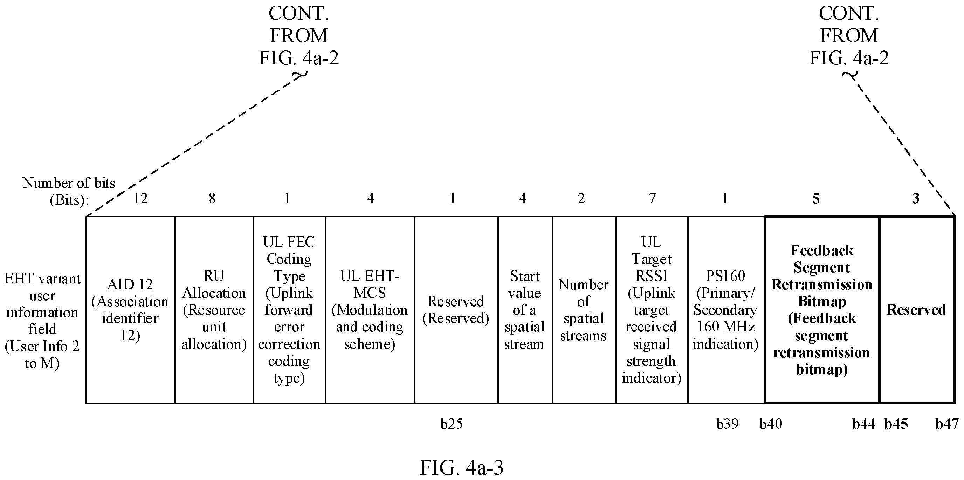

FIG. 4a-1, FIG. 4a-2, and FIG. 4a-3 are a schematic diagram of a frame structure of still another first frame according to an embodiment of this application;

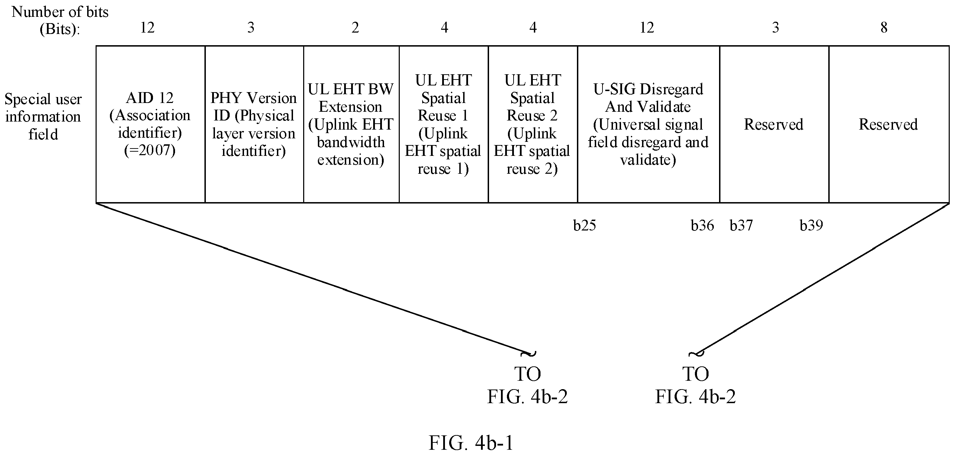

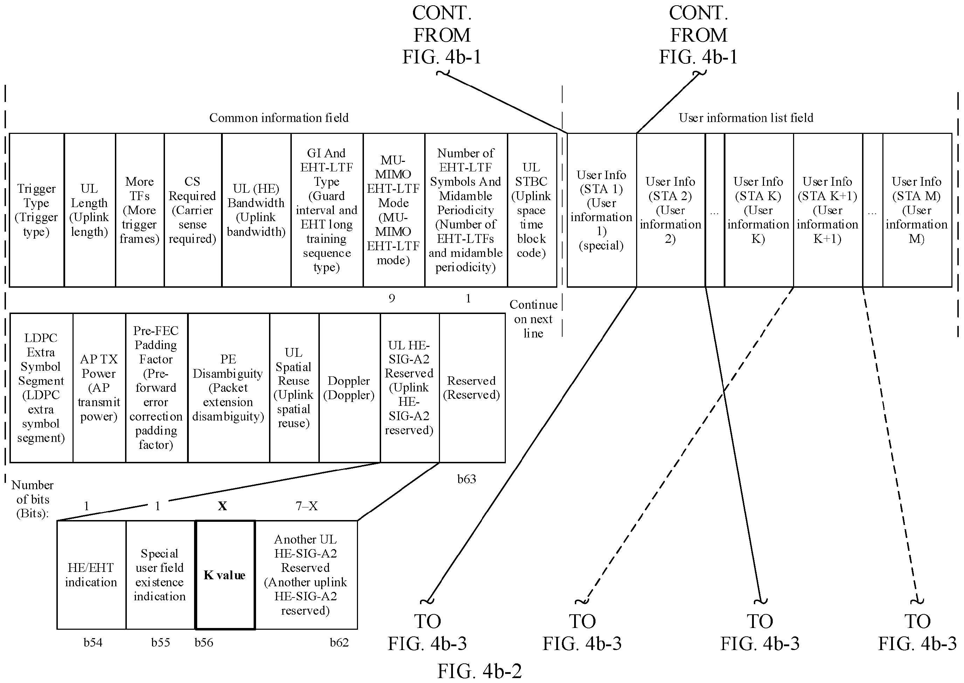

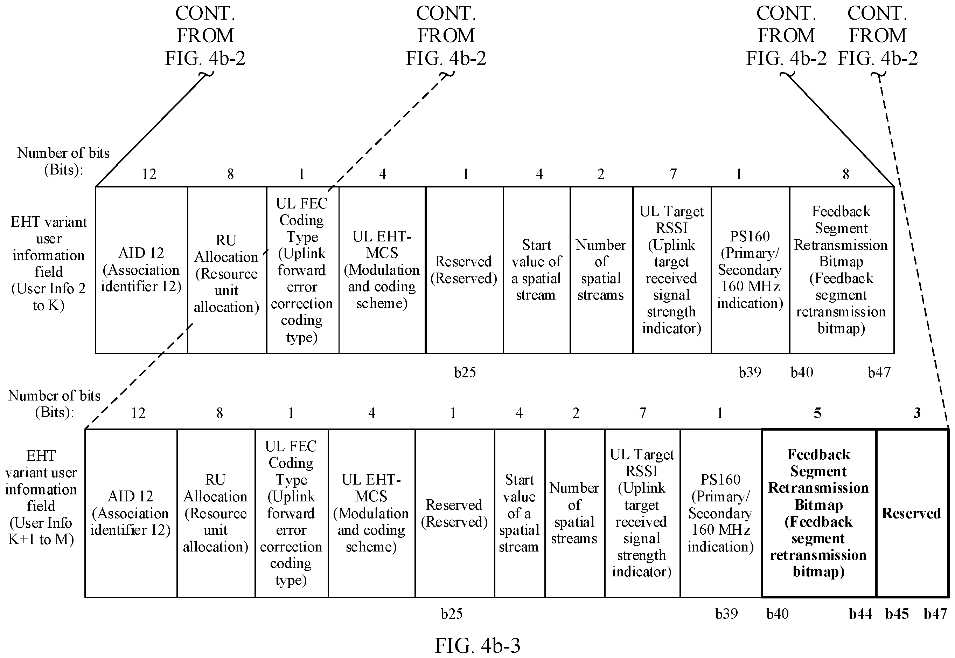

FIG. 4b-1, FIG. 4b-2, and FIG. 4b-3 are a schematic diagram of a frame structure of yet another first frame according to an embodiment of this application;

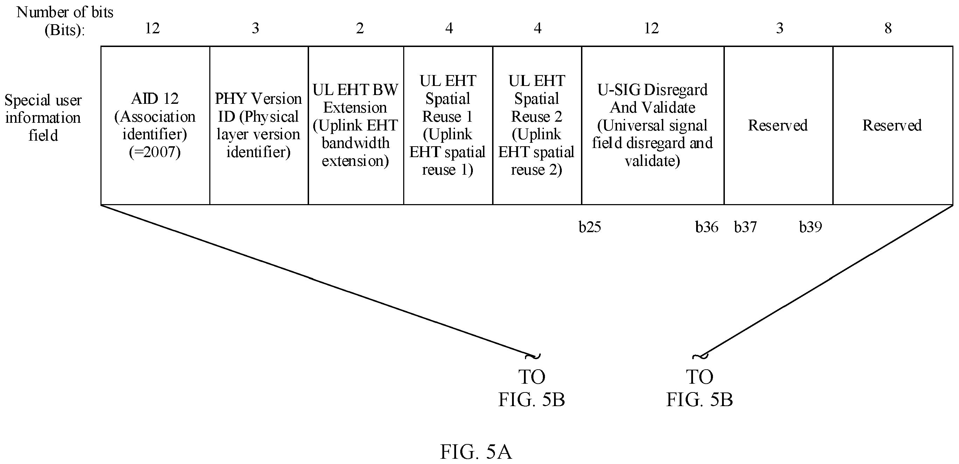

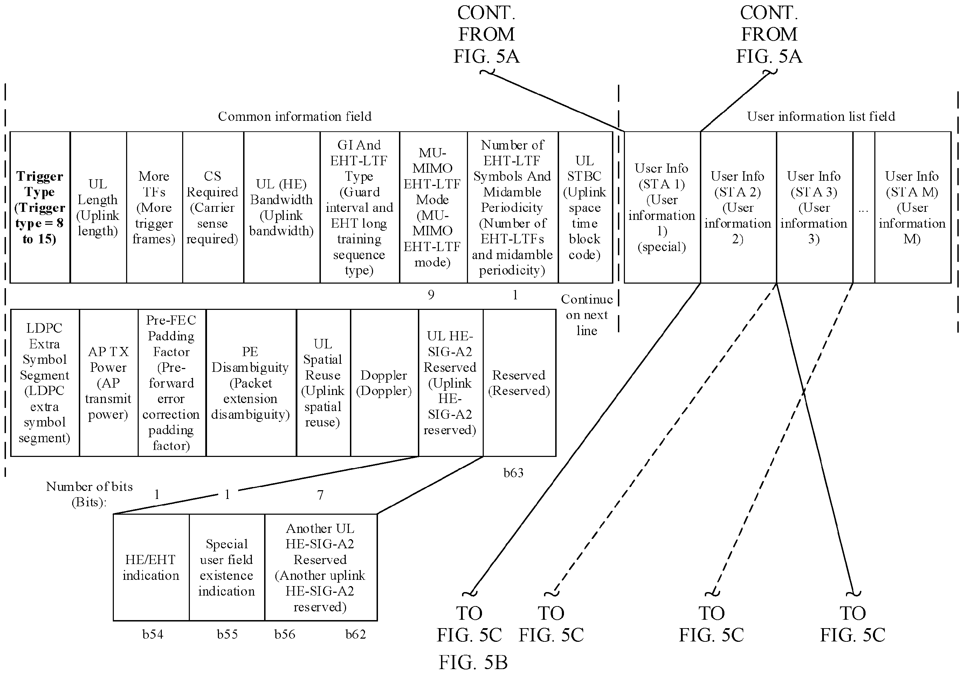

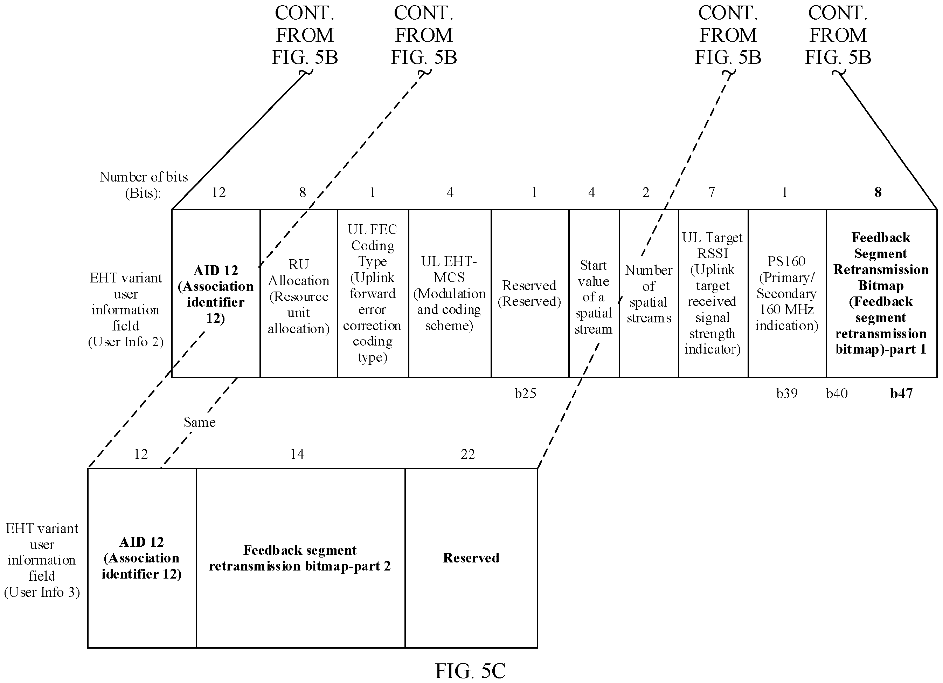

FIG. 5A, FIG. 5B, and FIG. 5C are a schematic diagram of a frame structure of still yet another first frame according to an embodiment of this application;

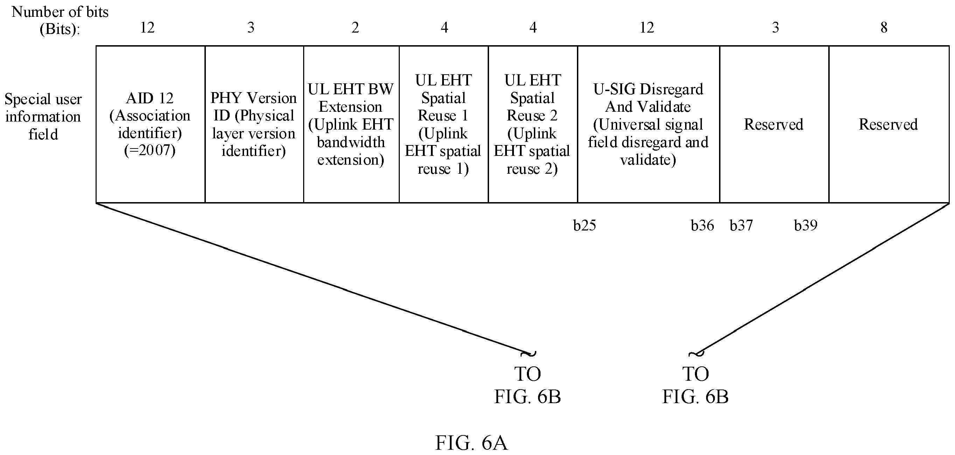

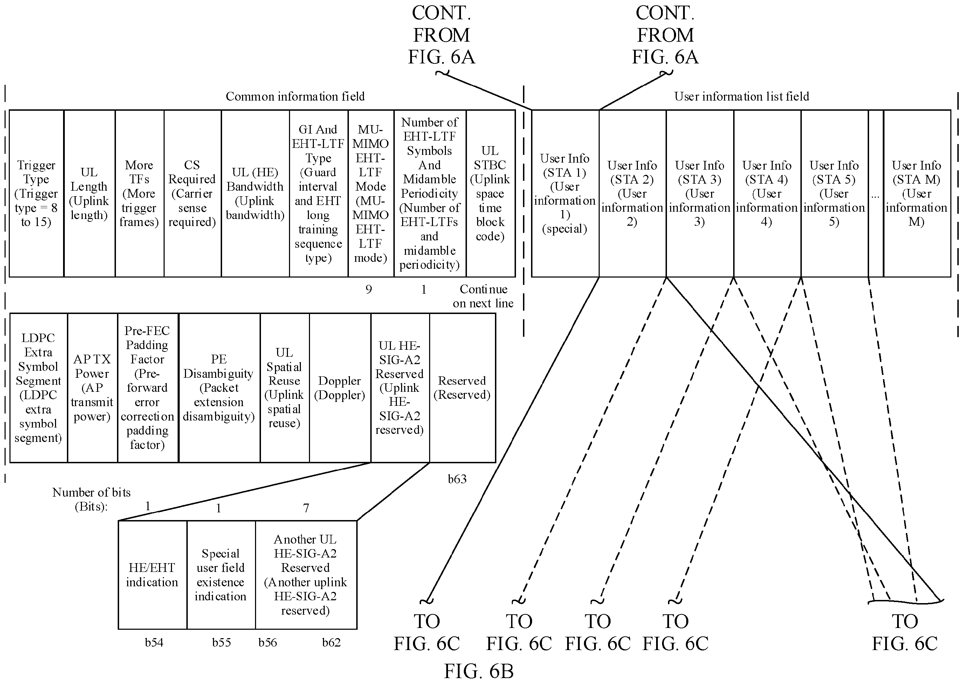

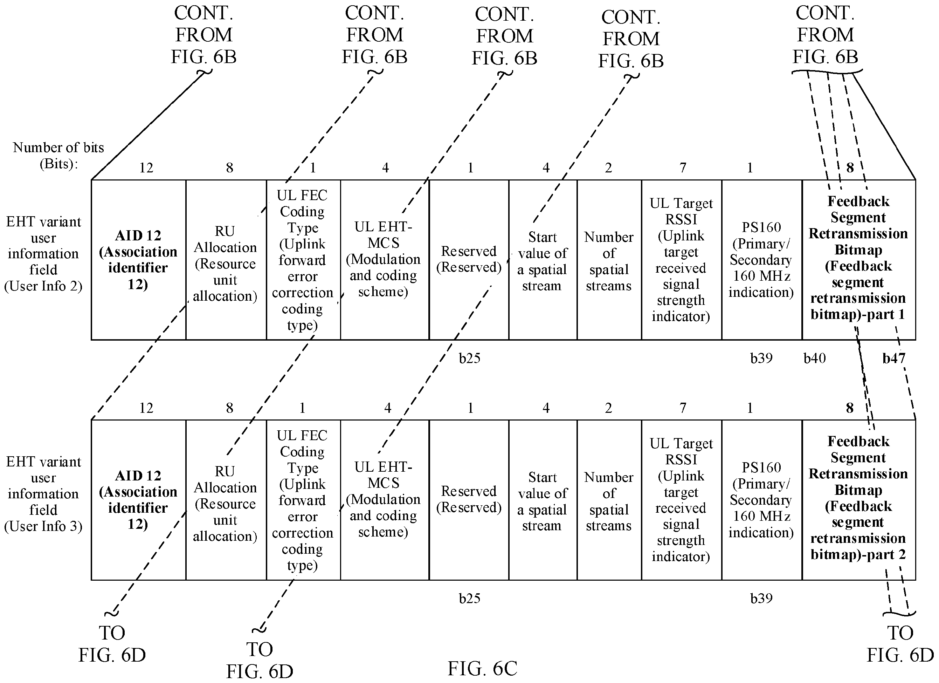

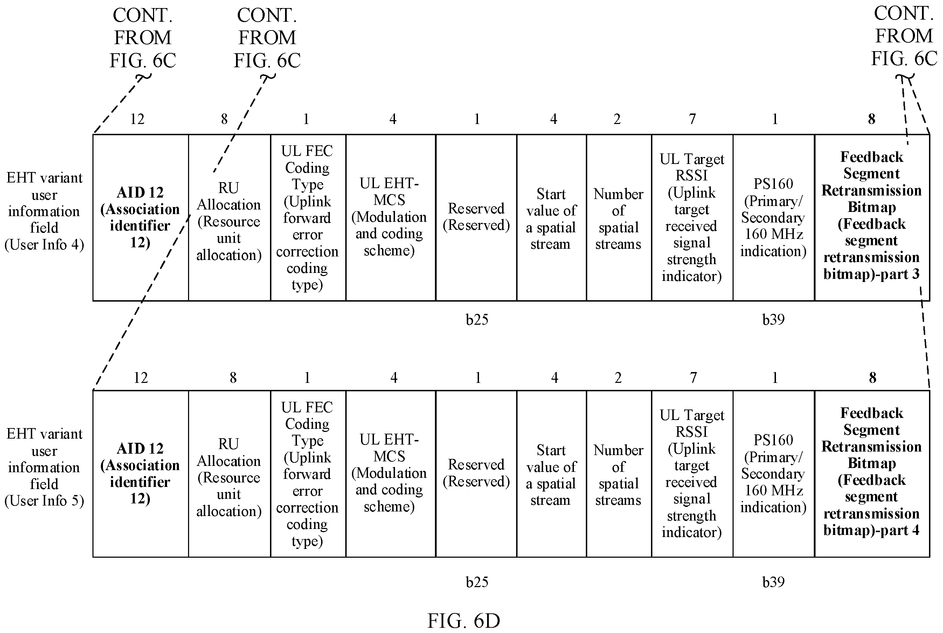

FIG. 6A, FIG. 6B, FIG. 6C, and FIG. 6D are a schematic diagram of a frame structure of a further first frame according to an embodiment of this application;

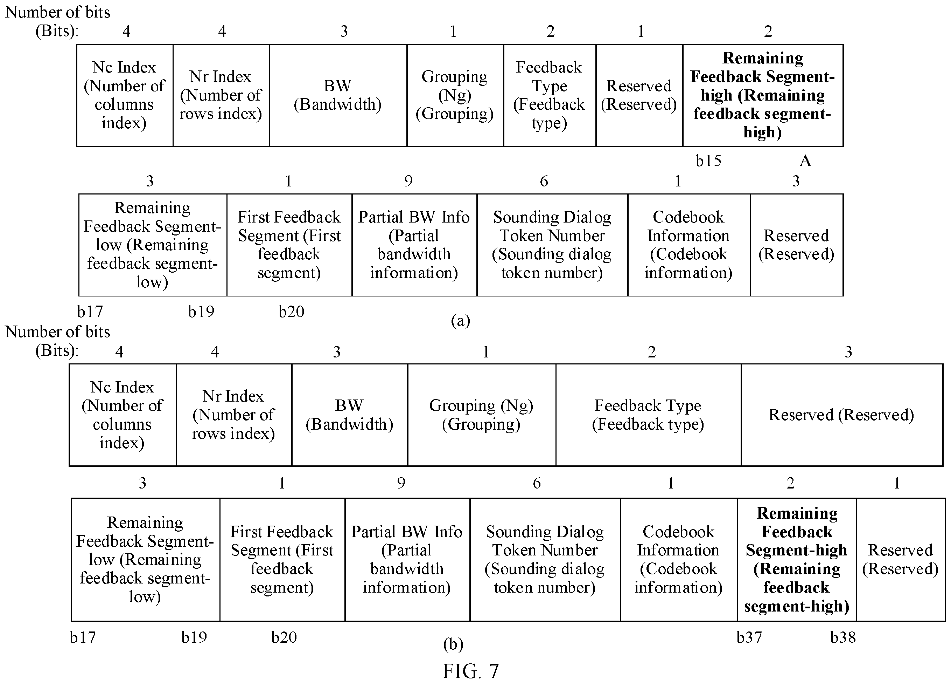

FIG. 7 is a schematic diagram of a frame structure of an EHT MIMO Control field according to an embodiment of this application;

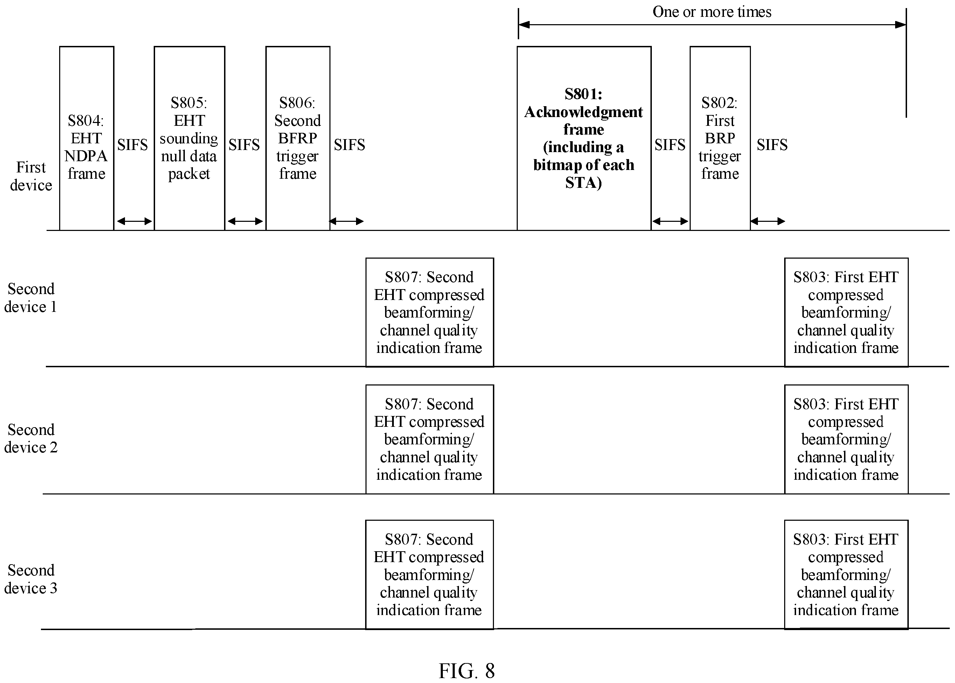

FIG. 8 is a schematic flowchart of another communication method according to an embodiment of this application;

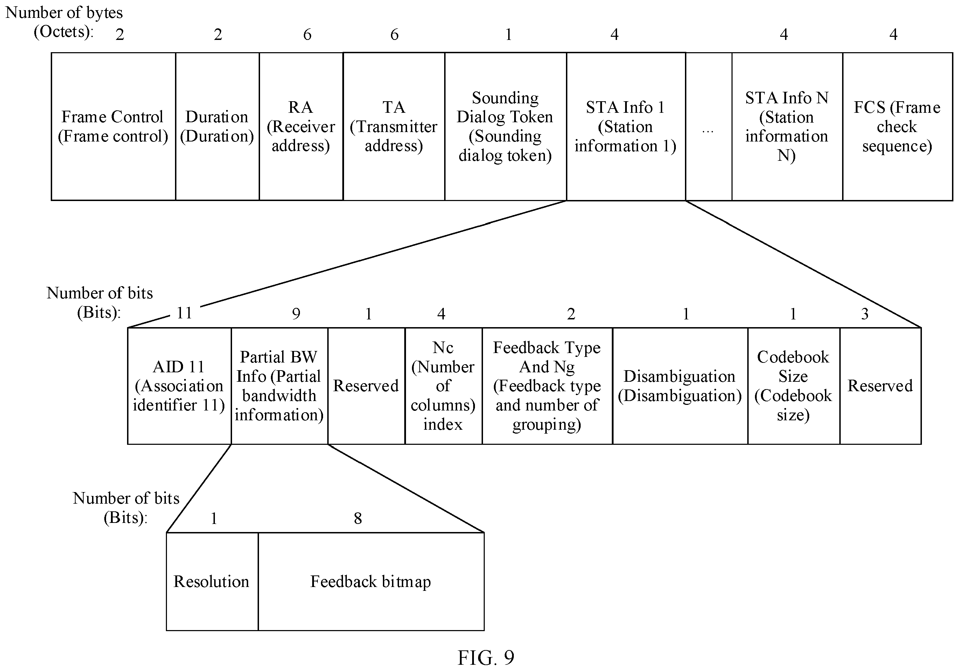

FIG. 9 is a schematic diagram of a frame structure of an EHT NDPA frame according to an embodiment of this application;

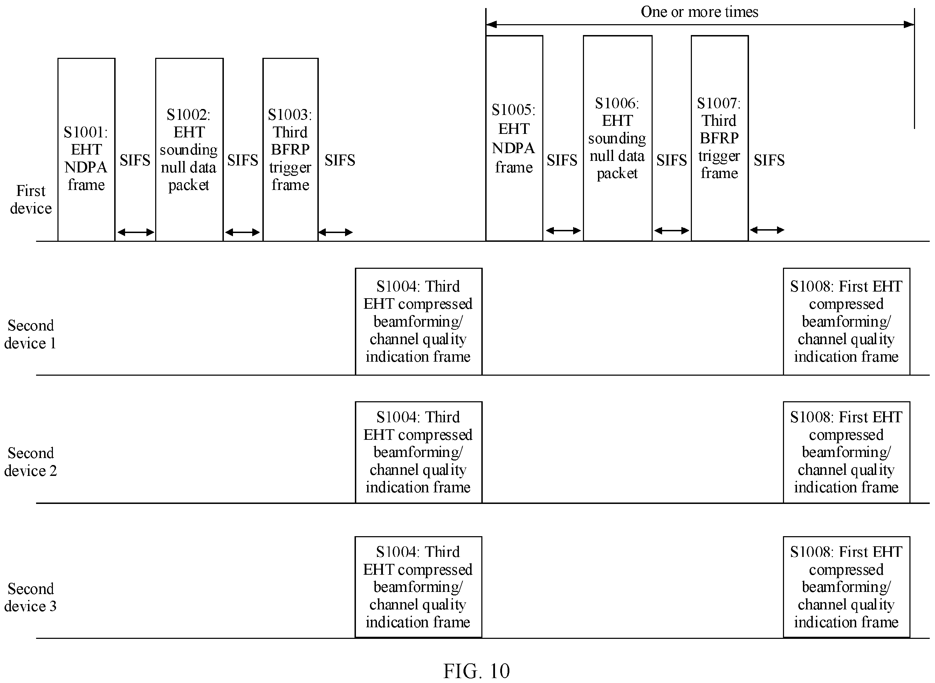

FIG. 10 is a schematic flowchart of still another communication method according to an embodiment of this application;

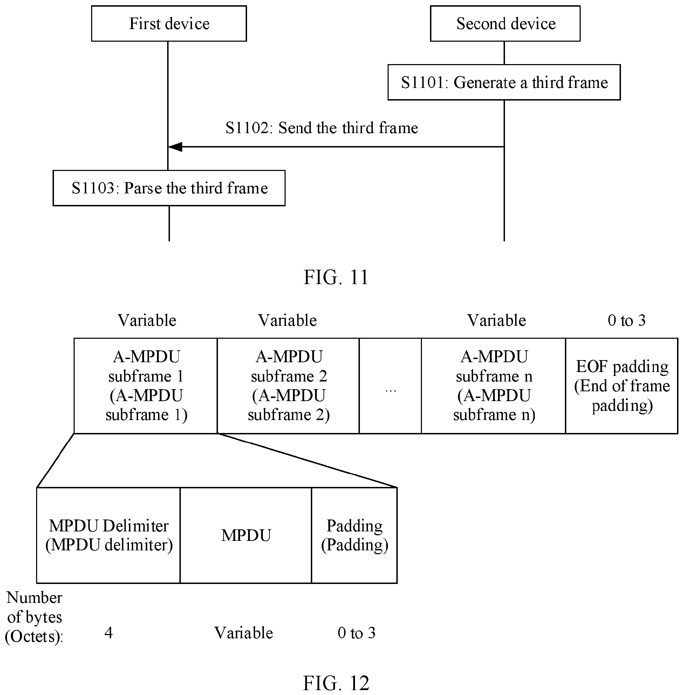

FIG. 11 is a schematic flowchart of yet another communication method according to an embodiment of this application;

FIG. 12 is a schematic diagram of a frame structure of an A-MPDU frame according to an embodiment of this application;

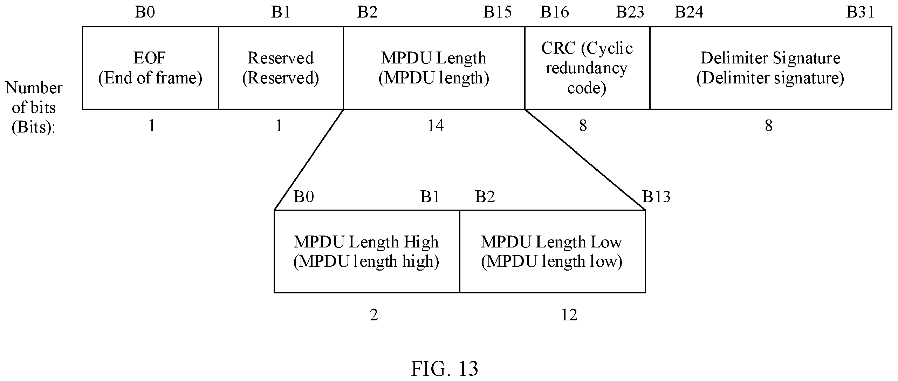

FIG. 13 is a schematic diagram of a frame structure of an MPDU delimiter field according to an embodiment of this application;

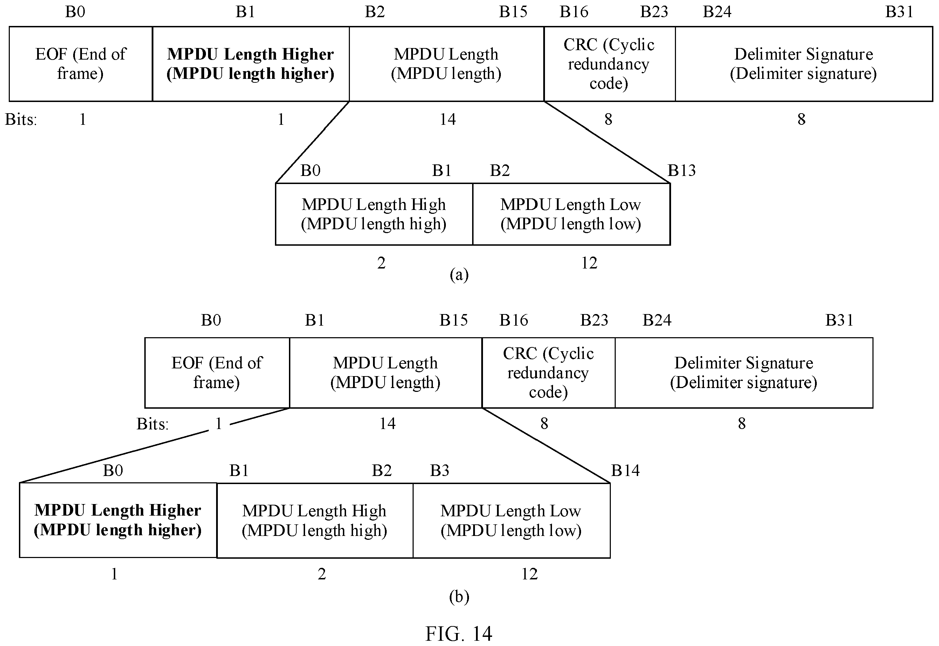

FIG. 14 is a schematic diagram of a frame structure of another MPDU delimiter field according to an embodiment of this application;

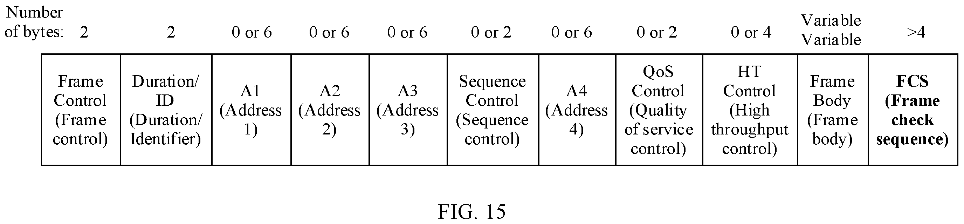

FIG. 15 is a schematic diagram of a frame structure of an MPDU according to an embodiment of this application;

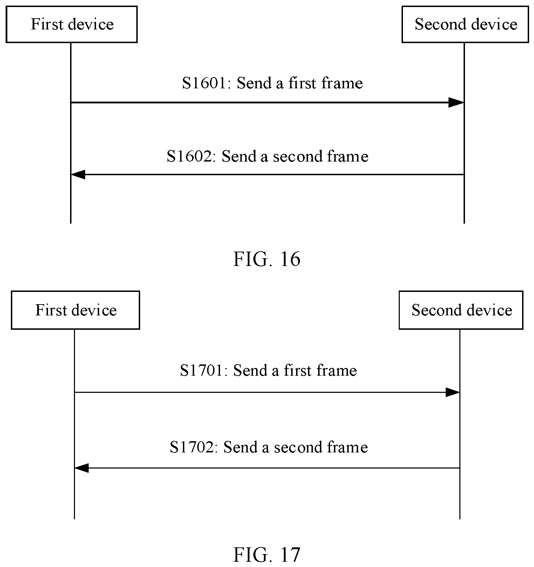

FIG. 16 is a schematic flowchart of still yet another communication method according to an embodiment of this application;

FIG. 17 is a schematic flowchart of a further communication method according to an embodiment of this application;

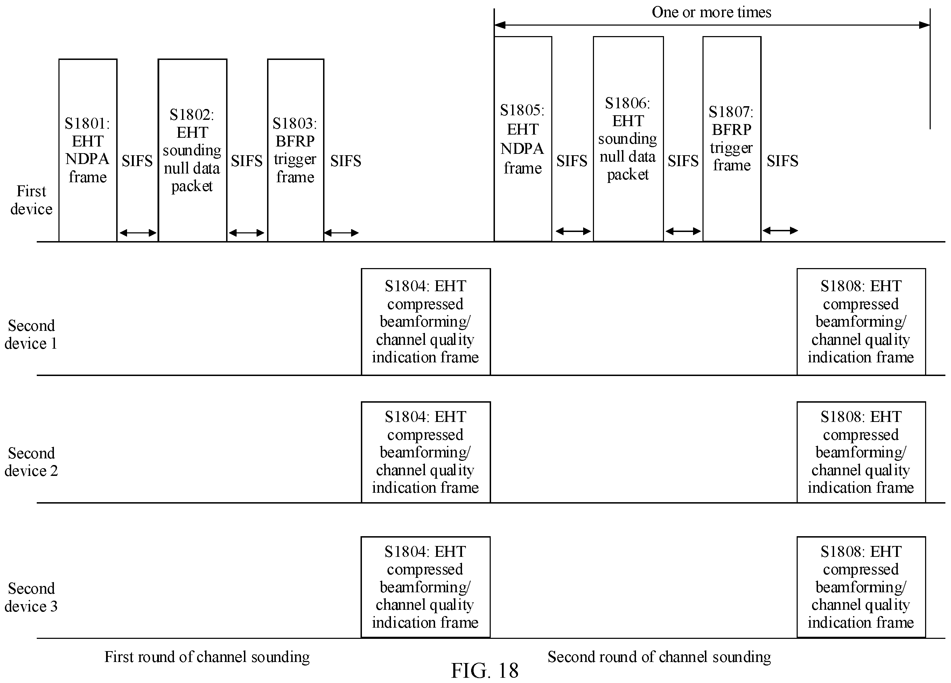

FIG. 18 is a schematic flowchart of a still further communication method according to an embodiment of this application;

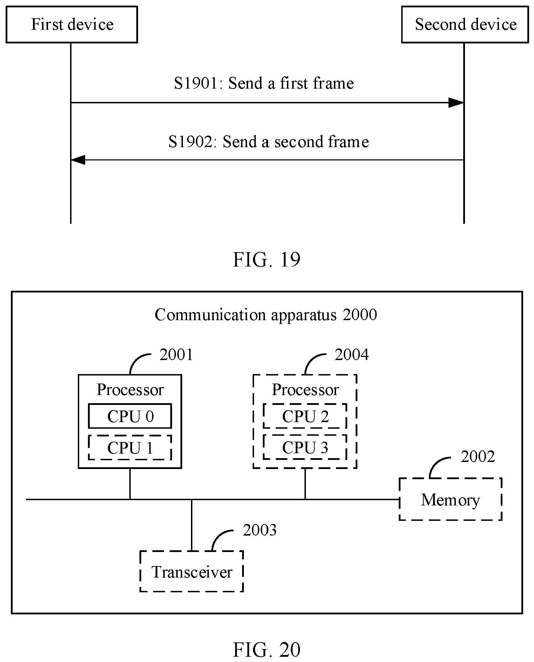

FIG. 19 is a schematic flowchart of a yet further communication method according to an embodiment of this application;

FIG. 20 is a schematic diagram of a structure of a communication apparatus according to an embodiment of this application;

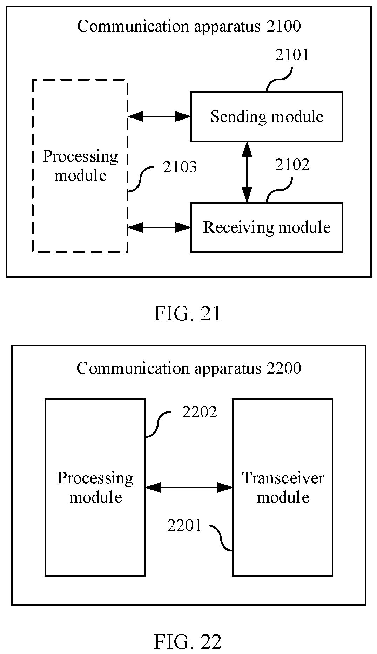

FIG. 21 is a schematic diagram of a structure of another communication apparatus according to an embodiment of this application; and

FIG. 22 is a schematic diagram of a structure of still another communication apparatus according to an embodiment of this application.

## DESCRIPTION OF EMBODIMENTS

The technical solutions in this application are described in the following with reference to the accompanying drawings.

The technical solutions in embodiments of this application may be applied to various communication systems, for example, a wireless local area network (wireless local area network, WLAN), a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system, a worldwide interoperability for microwave access (worldwide interoperability for microwave access, WiMAX) communication system, a 5th generation (5th generation, 5G) mobile communication system such as a new radio (new radio, NR) system, a future communication system such as a 6th generation (6th generation, 6G) mobile communication system, and the like.

In descriptions of this application, unless otherwise specified, "/" means "or". For example, A/B may indicate A or B. A term "and/or" in this specification describes only an association relationship between associated objects and indicates that three relationships may exist. For example, A and/or B may indicate the following three cases: Only A exists, both A and B exist, and only B exists. In addition, "at least one" means one or more, and "a plurality of" means two or more. The words such as "first", "second", and the like do not limit a number or an execution sequence, and the words such as "first", "second", and the like do not indicate a definite difference.

Various aspects, embodiments, or features are presented in this application by describing a system that may include a plurality of devices, components, modules, and the like. It should be appreciated and understood that, each system may include another device, component, module, and the like, and/or may not include all devices, components, modules, and the like described with reference to the accompanying drawings. In addition, a combination of these solutions may alternatively be used.

In addition, in embodiments of this application, words such as "example", "for example", and the like represent giving an example, an illustration, or a description. Any embodiment or design solution described as an "example" in this application should not be explained as being more preferred or having more advantages than another embodiment or design solution. Exactly, the word such as example is used for presenting a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that: With evolution of the network architecture and emergence of a new service scenario, the technical solutions provided in embodiments of this application are also applicable to similar technical problems.

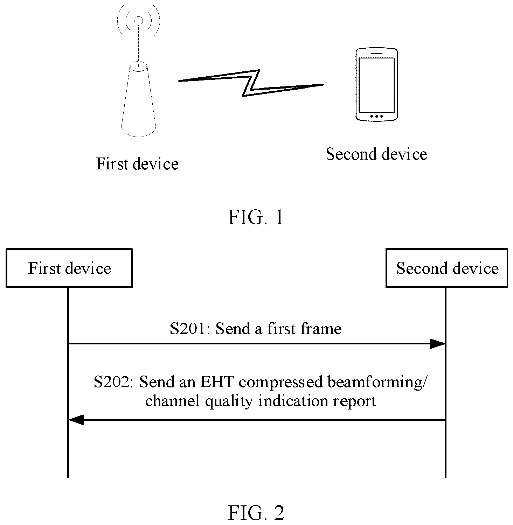

For ease of understanding embodiments of this application, a communication system shown in FIG. 1 is first used as an example to describe in detail a communication system to which embodiments of this application are applicable. For example, FIG. 1 is a schematic diagram of an architecture of a communication system to which a communication method according to an embodiment of this application is applicable.

As shown in FIG. 1, the communication system includes a first device and a second device. Optionally, there may be one or more first devices, and there may be one or more second devices.

The first device may be a device that is located on a network side of the communication system and has a wireless transceiver function, or a chip or a chip system that may be disposed in the device, and may provide a wireless communication function for the second device. The first device includes but is not limited to: an access point (access point, AP) in a wireless fidelity (wireless fidelity, Wi-Fi) system, such as a home gateway, a router, a server, a switch, a bridge, or the like, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission and reception point, TRP; or transmission point, TP), or the like. The first device may alternatively be a gNB or a transmission point (TRP or TP) in a 5G system such as a new radio (new radio, NR) system, or one antenna panel or a group of antenna panels (including a plurality of antenna panels) of a base station in a 5G system. The first device may alternatively be a network node that constitutes a gNB or a transmission point, such as a baseband unit (BBU), a distributed unit (distributed unit, DU), a road side unit (road side unit, RSU) having a base station function, or the like.

The second device is a device that accesses the communication system and has a wireless transceiver function, or a chip or a chip system that can be disposed in the terminal. The second device may also be referred to as a terminal device, user equipment (User Equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus. The second device may communicate with an access point (access point, AP) MLD, another STA MLD, or a single-link device. For example, the second device may be any communication device that can communicate with an access point (access point, AP) and then communicate with a WLAN.

For example, the second device in embodiments of this application may be a mobile phone (mobile phone), a wireless data card, a personal digital assistant (personal digital assistant, PDA) computer, a laptop computer (laptop computer), a tablet computer (Pad), an ultra-mobile personal computer (ultra-mobile personal computer, UMPC), a netbook, a computer having a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal (for example, a smart water meter, a smart electricity meter, a smart air detection node, or the like) in a smart city (smart city), a wireless terminal (for example, a game console, a projector, a smart camera, a smart television, a smart speaker, a smart refrigerator, fitness equipment, or the like) in a smart home (smart home), a vehicle-mounted terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) having a wireless communication function, a computing device, another processing device connected to a wireless modem, a wearable device, or the like.

For another example, the second device in embodiments of this application may be an express terminal (for example, a device that can monitor a vehicle location of goods, a device that can monitor a temperature and humidity of goods, or the like) in smart logistics, a wireless terminal (for example, a wearable device that can collect related data of poultry and livestock, or the like) in smart agriculture, a wireless terminal (for example, a smart elevator, a fire monitoring device, a smart electricity meter, or the like) in a smart building, a wireless terminal (for example, a wearable device that can monitor physiological statuses of people or animals, or the like) in smart healthcare, a wireless terminal (for example, a smart bus, a smart vehicle, a shared bicycle, a charging pile monitoring device, smart traffic lights, a smart monitoring device, a smart parking device, or the like) in smart transportation, a wireless terminal (for example, a vending machine, a self-service checkout machine, a self-service navigation console of an unmanned convenience store, a self-service dining machine, or a supermarket, or the like) in smart retail, or a wireless terminal (for example, a printer, a projector, or the like) in a smart office. For another example, the second device in this application may be an in-vehicle module, an in-vehicle module, an onboard component, an automotive chip, or an onboard unit that is built in a vehicle as one or more components or units. The vehicle may implement, by using the in-vehicle module, the in-vehicle module, the onboard component, the automotive chip, or the onboard unit that is built in the vehicle, a method provided in this application.

It should be noted that communication methods provided in embodiments of this application are applicable to the first device and the second device shown in FIG. 1. For specific implementation, refer to the following method embodiments. Details are not described herein.

It should be noted that, the solutions in embodiments of this application may also be used in another communication system, and a corresponding name may alternatively be replaced with a name of a corresponding function in the another communication system. In addition, a person of ordinary skill in the art may learn that, with evolution of the network architecture and emergence of a new service scenario, the technical solutions provided in embodiments of this application are also applicable to similar technical problems.

It should be understood that FIG. 1 is merely a simplified schematic diagram of an example for ease of understanding. The communication system may further include another device not drawn in FIG. 1.

To make embodiments of this application clearer, the following collectively describes some content and concepts related to embodiments of this application.

1. First device and second device

For example, the first device may be a single-link device, a multi-link device, or an affiliated station in the multi-link device. The second device may be a single-link device, a multi-link device, or an affiliated station in the multi-link device.

The multi-link device (multi-link device, MLD) may also be referred to as a multi-band device (multi-band device). For example, the multi-link device MLD may implement wireless communication according to the Institute of Electrical and Electronics Engineers (institute of electrical and electronics engineers, IEEE) 802.11 series standards. For example, the multi-link device MLD implements communication with another device according to an extremely high throughput (extremely high throughput, EHT) or according to a standard based on IEEE 802.11be or compatible with IEEE 802.11be. Certainly, the another device may be a multi-link device, or may not be a multi-link device, for example, may be a single-link device. The 802.11 series protocols may include but are not limited to: IEEE 802.11be, IEEE 802.11ax, IEEE 802.11a/b/g/n/ac, a next-generation standard of IEEE 802.11be, and standard evolution that may emerge in the future.

The multi-link device may include one or more affiliated stations. The affiliated station is a logical station, and "the multi-link device includes the affiliated station" is also briefly described as "the multi-link device includes the station" in embodiments of this application. The affiliated station may be an AP or a non-access point station (non-access point station, non-AP STA). A multi-link device whose affiliated station is an AP may be referred to as an AP MLD, a multi-link AP, a multi-link AP device, or an access point AP. A single-link device whose affiliated station is an AP may be referred to as an AP device, an access point, an AP, a single-link AP device, or an access point AP. A multi-link device whose affiliated station is a non-AP STA may be referred to as a non-AP MLD, a multi-link STA, a multi-link STA device, a STA MLD, or the like. A single-link device whose affiliated station is a non-AP STA may be referred to as a STA device, a station, a STA, a non-AP STA, or the like.

In embodiments of this application, the first device in the communication system shown in FIG. 1 may be a single-link device whose affiliated station is an AP or a non-AP STA, a multi-link device whose affiliated station is an AP or a non-AP STA, an affiliated station non-AP STA in a multi-link device, or an affiliated station non-AP STA in a multi-link device.

The second device in the communication system shown in FIG. 1 may be a single-link device whose affiliated station is an AP or a non-AP STA, a multi-link device whose affiliated station is an AP or a non-AP STA, an affiliated station non-AP STA in a multi-link device, or an affiliated station non-AP STA in a multi-link device.

2. Physical layer protocol data unit, media access control protocol data unit, and null data packet

The physical layer protocol data unit (physical layer convergence procedure protocol data unit, PPDU) is usually a physical layer data packet, or a packet (Packet).

The media access control protocol data unit (media protocol data unit, MPDU) is equivalent to a common media access control (medium access control, MAC) frame, and carried in a data field of the PPDU.

The null data packet (null data packet, NDP) is a special PPDU without a data field, does not carry a MAC frame, and is used for channel sounding (sounding).

A feedback segment retransmission bitmap field of an existing BFRP trigger frame can indicate only one or more of a maximum of eight segments of an EHT compressed beamforming/channel quality indication frame. The EHT compressed beamforming/channel quality indication frame considers only a case in which a number of segments is less than or equal to 8, but does not support a case in which a number of segments is greater than 8 or a case in which a size of an EHT compressed beamforming/channel quality indication report is greater than 91632 bytes.

A communication method provided in embodiments of this application can support a case in which a number of segments is greater than 8 or a case in which a size of an EHT compressed beamforming/channel quality indication report is greater than 91632 bytes.

The following describes a method for calculating a feedback amount of a current EHT compressed beamforming/channel quality indication frame according to this embodiment of this application.

An EHT compressed beamforming report field includes an average signal-to-noise ratio (signal to noise ratio, SNR) of each spatial stream (each spatial stream), and a compressed beamforming report matrix V The compressed beamforming report matrix V may be used to help a beamformer determine a precoding matrix Q. An EHT multiple-user dedicated beamforming report includes a signal-to-noise ratio delta.

Specifically, for a feedback amount of the EHT compressed beamforming report field, a feedback amount of the average signal-to-noise ratio is $8* N_c$. The feedback amount is measured in a unit of bit. The average signal-to-noise ratio of each spatial stream is carried by using 8 bits, and a spatial stream fed back by a beamformee is equal to $N_c$. In the compressed beamforming report matrix V, a feedback amount on each subcarrier for feedback is $N_a \times (b_\phi + b_\psi)/2$,

and a number of subcarriers for feedback is $N_s$. $N_a = f(N_r, N_c)$ represents an angle feedback amount, and is related to a number of rows $N_r$ and a number of columns $N_c$ of the compressed beamforming report matrix V, and there is a fixed mapping relationship, for example, $N_a = N_c \times (2N_r - N_c - 1)$. $N_s$ is related to a bandwidth of an NDP, partial bandwidth information, and $N_g$. $N_g$ subcarriers are grouped into one group, and every $N_g$ subcarriers have one subcarrier for feedback. $b_\phi$ and $b_\psi$ are related to codebook information, and $b_\phi$ and $b_\psi$ respectively represent numbers of quantized bits of two pieces of angle information.

Therefore, the feedback amount of the EHT compressed beamforming report field is

$$8 \times N_c + \frac{N_a \times (b_\phi + b_\psi)}{2} \times N_s$$

. The feedback amount is measured in a unit of bit.

For a feedback amount of an EHT multiple-user dedicated beamforming report field, on each spatial stream, a signal-to-noise ratio delta of each subcarrier for feedback is carried by using 4 bits. Therefore, the feedback amount of the EHT multiple-user dedicated beamforming report field is $4 \times N_c \times N_s$. A spatial stream fed back by a beamformee is equal to $N_c$, and a number of subcarriers for feedback is $N_s$. $N_s$ is related to a bandwidth of an NDP, partial bandwidth information, and $N_g$. $N_g$ subcarriers are grouped into one group. Therefore, a sum Y of the feedback amount of the EHT compressed beamforming report field and the feedback amount of the EHT multiple-user dedicated beamforming report field (briefly referred to as a sum of total feedback amounts below) may satisfy the following formula (1):

$$Y = 8 \times N_c + \frac{N_a \times (b_\phi + b_\psi)}{2} \times N_s + 4 \times N_c \times N_s \quad (1)$$

In the 802.11ax standard, when a maximum value of a bandwidth is 160 MHz, a maximum value of a number of antennas included in each of a beamformer and a beamformee is 8, 8 is correspondingly selected for $N_r$ and $N_c$, and $N_a$ is 56 according to the formula $N_a = N_c \times (2N_r - N_c - 1)$. A feedback type is MU, the codebook information is set to 1, and $b_\phi$ and $b_\psi$ respectively correspond to 9 and 7. In addition, the compressed beamforming report on all subcarriers on the entire 160 MHz when Ng = 4 need to be fed back. In this case, $N_s$ is equal to 500. Therefore, according to the foregoing formula (1), the sum of the total feedback amounts is

$$Y = 8 \times 8 + \frac{56 \times (9+7)}{2} \times 500 + 4 \times 8 \times 500 = 240064$$

, that is, 240064 bits or 30008 bytes.

On the basis of the 802.11ax standard, in the 802.11be standard, the following is further introduced: A maximum value of a bandwidth is 320 MHz, a maximum value of a number of antennas is 8, and a maximum value of $N_s$ is twice 500 corresponding to the 802.11ax standard, that is, 1000. Other parameters are the same as those in the 802.11ax standard, and a maximum value of a number of antennas included in each of a beamformer and a beamformee is still 8. Therefore, according to the foregoing formula (1), the sum of the total feedback amounts is

$$Y = 8 \times 8 + \frac{56 \times (9+7)}{2} \times 1000 + 4 \times 8 \times 1000 = 480064$$

, that is, 480064 bits or 60008 bytes. In other words, when parameters other than the bandwidth are the same, the sum of the total feedback amounts corresponding to the 802.11be standard is about twice the sum of the total feedback amounts corresponding to the 802.11ax standard (the average signal-to-noise ratio SNR is not doubled).

It is found through analysis that, if a size of each segment except a last segment is 11454 bytes, a maximum number of required segments in 802.11ax and a maximum number of required segments in the current 802.11be standard are respectively 3 (which is obtained through rounding up after 30008 is divided by 11454) and 6 (which is obtained through rounding up after 60008 is divided by 11454). The conventional technology in which a maximum of eight segments are supported can meet a requirement.

When a maximum value of a bandwidth is 320 MHz, and a maximum value of a number of antennas included in each of a beamformer and a beamformee is 16, 16 is correspondingly selected for $N_r$ and $N_c$, and $N_a$ is 240 according to the formula $N_a = N_c \times (2N_r - N_c - 1)$. A feedback type is MU, the codebook information is set to 1, and $b_\phi$ and $b_\psi$ respectively correspond to 9 and 7. In addition, all subcarriers on the entire 320 MHz when Ng = 4 need to be fed back. In this case, $N_s$ is equal to 1000. Therefore, according to the foregoing formula (1), the sum of the total feedback amounts

$$Y = 8 \times 16 + \frac{240 \times (9+7)}{2} \times 1000 + 4 \times 16 \times 1000 = 1984128$$

is , that is, 1984128 bits or 248016 bytes. If each segment except a last segment is 11454 bytes, a maximum number of required segments is 22 (which is obtained through rounding up after 248016 is divided by 11454). Therefore, the conventional technology in which a maximum of eight segments are supported cannot meet a requirement. Specifically, a BFRP trigger frame and an indication in an EHT MIMO Control field cannot meet a requirement of such a large feedback amount.

It should be noted that the method for calculating a maximum number of segments herein considers only a feedback report part (the EHT compressed beamforming report and the EHT multiple-user dedicated beamforming report). In addition, an MPDU frame header, a frame check sequence field, a category field, an EHT action field, and an EHT MIMO Control field also occupy some bytes of overheads. The bytes are also used as a part of the 11454 bytes, and are not described in detail.

In this case, when the maximum bandwidth is 320 MHz, and the maximum number of antennas is 16 (a corresponding maximum number of spatial streams is 16), the feedback amount is about doubled. Through calculation, the number of segments may reach up to 22 when each segment except the last segment is 11454 bytes. The conventional technology in which a maximum of eight segments are supported cannot meet a requirement. Communication methods provided in embodiments of this application provide solutions in which more than eight (for example, 22) segments are supported, or such a large feedback amount is supported by using eight segments.

The following describes in detail the communication methods provided in embodiments of this application with reference to FIG. 2 to FIG. 19.

For example, FIG. 2 is a schematic flowchart of a communication method according to an embodiment of this application. The communication method is applicable to communication between the first device and the second device shown in FIG. 1.

As shown in FIG. 2, the communication method includes the following steps.

S201: The first device sends a first frame to the second device. Correspondingly, the second device receives the first frame from the first device.

For example, the first frame is used to request one or more of N segments of an EHT compressed beamforming/channel quality indication report, and N is an integer greater than 8.

Optionally, the first frame may include a beamforming report poll trigger frame (beamforming report poll trigger frame, BFRP TF).

For example, the EHT compressed beamforming/channel quality indication report is divided into the N segments for transmission. For example, N may be equal to 9, 22, 32, or the like.

For example, when a maximum value of a bandwidth is 320 MHz, and a maximum value of a number of antennas included in each of a beamformer and a beamformee is 16, the EHT compressed beamforming/channel quality indication report may be divided into 22 segments. For details, refer to the description in the foregoing method for calculating a feedback amount of a current EHT compressed beamforming/channel quality indication frame. Details are not described herein again.

It should be noted that the communication method provided in this embodiment of this application is also applicable to a case in which the EHT compressed beamforming/channel quality indication report is divided into less than or equal to eight segments.

In a possible design manner, the first frame may include a second field. Optionally, the second field may be used to request one or more of the N segments of the EHT compressed beamforming/channel quality indication report.

For example, the second field may occupy one or more bits, for example, 5 bits, 8 bits, 22 bits, 32 bits, or the like. A number of bits occupied by the second field is an integer greater than or equal to 1, and is flexibly determined based on a meaning indicated by the second field and a range that can be indicated by the second field. This is not limited herein.

In some embodiments, the number of bits of the second field is W, at least one of the W bits indicates to request at least two of the segments, and W is an integer greater than or equal to 1.

For example, W is equal to 3, 8, 22, 32, or the like.

For example, when a bit is set to 1, it indicates to request a segment; or when a bit is set to 0, it indicates not to request a segment. Alternatively, when a bit is set to 0, it indicates to request a segment; or when a bit is set to 1, it indicates not to request a segment. This embodiment of this application is described by using an example in which when a bit is set to 1, it indicates to request a segment, or when a bit is set to 0, it indicates not to request a segment.

For example, W is equal to 8, and N is equal to 22.

For example, each of the first 5 bits corresponds to four segments, the sixth bit corresponds to two segments, and the seventh bit and the eighth bit are reserved. For example, when the second field is 11111100, it indicates to request 22 segments. The reserved bit may be set to 0 by default (this is used as an example above), or may be set to 1 by default. This is not limited in this application. In an example, W is 8, that is, the second field has 8 bits, including 2 reserved bits. Alternatively, it may be considered as that the second field has 6 bits (the reserved bits are not calculated). In this application, existence of the reserved bits does not constitute a limitation on a number of bits of the field.

For another example, each of the first 7 bits corresponds to three segments, and the last 1 bit corresponds to the 22<sup>nd</sup> segment. For example, when the second field is 11111111, it indicates to request 22 segments.

For another example, each of the first 5 bits corresponds to two segments, and each of the sixth bit to the eighth bit corresponds to four segments. For example, when the second field is 11111111, it indicates to request 22 segments.

It should be noted that the foregoing is merely an example provided in this application, and a number of segments that corresponds to each bit is not limited in this embodiment of this application.

FIG. 3a-1, FIG. 3a-2, and FIG. 3a-3 are a schematic diagram of a frame structure of a first frame according to an embodiment of this application.

As shown in FIG. 3a-1, FIG. 3a-2, and FIG. 3a-3, the first frame provided in this embodiment of this application is a BFRP trigger frame, and includes a common information field and a user information list field.

The common information field includes one or more of the following fields: trigger type (Trigger Type), uplink length (UL Length), more trigger frames (More TF), carrier sense required (CS Required), uplink bandwidth (UL (HE) Bandwidth), guard interval and EHT long training sequence type (GI And EHT-LTF Type), MU-MIMO EHT-LTF mode (MU-MIMO EHT-LTF Mode), number of EHT-LTFs and midamble periodicity (Number of EHT-LTF Symbols And Midamble Periodicity), uplink space time block code (UL STBC), LDPC extra symbol segment (LDPC Extra Symbol Segment), transmit power (AP TX Power AP), pre-forward error correction padding factor (Pre-FEC Padding Factor), packet extension disambiguity (PE Disambiguity), uplink spatial reuse (UL Spatial Reuse), Doppler (Doppler), uplink HE-SIG-A2 reserved (UL HE-SIG-A2 Reserved), and reserved.

The user information list field includes one or more user information fields. The user information field may include a special user information field (when an association identifier 12 (AID 12) is 2007) and an EHT variant user information field. For example, the EHT variant user information field includes one or more of the following fields: association identifier 12 (AID 12), resource unit allocation (RU Allocation), uplink forward error correction coding type (UL FEC Coding Type), modulation and coding scheme (UL EHT-MCS), reserved, start value of a spatial stream, number of spatial streams, uplink target received signal strength indicator (UL Target RSSI), primary/secondary 160 MHz indication (PS160), and feedback segment retransmission bitmap (Feedback Segment Retransmission Bitmap).

For example, the association identifier 12 (AID 12) may identify a target second device. For example, the association identifier 12 is an address or an identifier of the target second device.

It should be noted that a frame format of the first frame is not limited to that shown in FIG. 3a-1, FIG. 3a-2, and FIG. 3a-3. A specific format of the first frame is not limited in this application.

For example, the second field may include the feedback segment retransmission bitmap field in the user information list field.

For example, the second field may be the feedback segment retransmission bitmap field shown in FIG. 3a-1, FIG. 3a-2, and FIG. 3a-3. In this way, a frame structure of the BFRP trigger frame does not need to be changed.

According to the communication method provided in this embodiment of this application, at least one of the W bits indicates to request at least two of the segments, so that a case in which a number of segments is greater than 8 or a case in which a size of the EHT compressed beamforming/channel quality indication report is greater than 91632 bytes can be supported.

In some other embodiments, the number of bits of the second field is greater than or equal to N.

For example, the number of bits of the second field is an integer greater than or equal to 9. For example, the number of bits of the second field is 9, 22, 32, or the like.

For example, N is equal to 22. For example, the number of bits of the second field is 22, the second field includes a bitmap, each bit corresponds to one segment, and the 22 bits respectively correspond to 22 segments.

For example, N is equal to 22. For example, the number of bits of the second field is 32, the second field includes a bitmap, each bit corresponds to one segment, and the 32 bits may respectively correspond to 32 segments. When N is equal to 22, 10 bits may be reserved. In an example, the number of bits of the second field is 32, that is, the second field has 32 bits, including 10 reserved bits. Alternatively, it may be considered as that the second field has 22 bits (the reserved bits are not calculated). In this application, existence of the reserved bits does not constitute a limitation on a number of bits of the field.

For example, the second field may include the feedback segment retransmission bitmap field in the user information list field.

FIG. 3b-1, FIG. 3b-2, and FIG. 3b-3 are a schematic diagram of a frame structure of another first frame according to an embodiment of this application. For example, the first frame is a BFRP trigger frame.

As shown in FIG. 3b-1, FIG. 3b-2, and FIG. 3b-3, the first frame may include a common information field and a user information list field. The common information field may include one or more fields shown in FIG. 3b-1, FIG. 3b-2, and FIG. 3b-3. The user information list field includes one or more user information fields. It should be noted that a frame format of the first frame is not limited to that shown in FIG. 3b-1, FIG. 3b-2, and FIG. 3b-3. A specific format of the first frame is not limited in this application.

As shown in FIG. 3b-1, FIG. 3b-2, and FIG. 3b-3, the second field may be a feedback segment retransmission bitmap field shown in FIG. 3b-1, FIG. 3b-2, and FIG. 3b-3, and may occupy 32 bits. In this way, 1 bit may represent one segment at a fine granularity.

Optionally, the first frame may further include a trigger type field, and the trigger type field indicates that the number of bits of the second field in the first frame is greater than 8 or the first frame is an enhanced BFRP trigger frame.

For example, as shown in FIG. 3b-1, FIG. 3b-2, and FIG. 3b-3, the trigger type field may be set to any value in 8 to 15 (8 to 15). For example, when the trigger type field is set to 8, it indicates that the first frame is an enhanced BFRP trigger frame.

In the conventional technology, when the trigger type field is set to any one of 0 to 7, another meaning is indicated. For example, when the trigger type field is set to 0, it indicates a basic variation; or when the trigger type field is set to 1, it indicates a BFRP trigger frame. Details are not described one by one. When the trigger type field is set to any one of 0 to 7 and is not used, the trigger type field may be set to any value in 0 to 7, to indicate that the number of bits of the second field in the first frame is greater than 8 or the first frame is an enhanced BFRP trigger frame.

In other words, the trigger type field may be used to indicate a variant type of the current first frame, and any one of reserved values 8 to 15 may indicate the enhanced BFRP trigger frame, to identify the first frame provided in this embodiment of this application.

In another possible design manner, the first frame may include a second field. Optionally, the second field may indicate an index R of a first segment in consecutive (N-R) segments that need to be requested, and R is an integer greater than or equal to 0 and less than or equal to N-1.

As shown in Table 1, when the second field indicates an index 0, it indicates to request (solicit) the first segment to an $N^{th}$ segment; or when the second field indicates an index 1, it indicates to request a second segment to the $N^{th}$ segment. For details, refer to Table 1. Details are not described one by one.

**Table 1**

| Value indicated by the second field | Meaning |
|---|---|
| 0 | Request (solicit) the first segment to the $N^{th}$ segment. |
| 1 | Request the second segment to the $N^{th}$ segment. |
| ... | ... |
| R | Request an $(R+1)^{th}$ segment to the $N^{th}$ segment. |
| ... | ... |
| N-1 | Request to solicit the $N^{th}$ segment. |

FIG. 4a-1, FIG. 4a-2, and FIG. 4a-3 are a schematic diagram of a frame structure of still another first frame according to an embodiment of this application.

As shown in FIG. 4a-1, FIG. 4a-2, and FIG. 4a-3, the second field may include a feedback segment retransmission bitmap field in a user information list field. The number of bits of the second field may be 8. 5 bits may indicate the index R of the first segment in the consecutive (N-R) segments that need to be requested, and the other 3 bits are reserved. This is not limited in this embodiment of this application. In this way, a frame structure of the BFRP trigger frame does not need to be changed. Therefore, more than eight segments can be solicited without a need of changing a length of the user information list field of the BFRP trigger frame. In an example, the number of bits of the second field is 8, that is, the second field has 8 bits, including 3 reserved bits. Alternatively, it may be considered as that the second field has 5 bits (the reserved bits are not calculated). In this application, existence of the reserved bits does not constitute a limitation on a number of bits of the field.

In an implementation, the second field may indicate a first segment in a segment that is incorrectly received and a segment that is not fed back in the N segments.

For example, it is assumed that a number of segments is 32, the first device correctly receives a segment 1 to a segment 10, incorrectly receives a segment 11, and correctly receives a segment 12 to a segment 16, and the second device does not feed back a segment 17 to a segment 32. In this case, the second field may indicate an index value of the segment 11. Alternatively, the second field may indicate a number 22, to indicate to request the last 22 segments of the 32 segments. Alternatively, the second field may indicate a number 10, to indicate that 10 segments have been correctly received.

In this way, missed reception of a segment that is incorrectly received and a segment that is not fed back can be avoided.

Optionally, because the segment 11 is incorrectly received, in a possible implementation, even if the segment 12 to the segment 16 are correctly received, the segment 12 to the segment 16 are processed in a manner in which the segment 12 to the segment 16 are incorrectly received, and the second device performs feedback again. Alternatively, in another possible implementation, the segment 11 that is incorrectly received is no longer requested, but the segment 17 to the segment 32 are directly requested.

For example, the second field may indicate to request a number of segments that are not fed back in the N segments.

For example, it is assumed that a number of segments is 22, the first device correctly receives a segment 1 to a segment 10, and the second device does not feed back a segment 11 to a segment 22. In this case, the second field may indicate the segment 11. Alternatively, the second field may indicate a number 11, to indicate to request the number 11 of segments that are not fed back. The second device may select, for feedback, a segment that is not fed back. For example, the second device feeds back 11 segments counted from back to front in the 22 segments, that is, the segment 11 to the segment 22.

As shown in FIG. 4a-1, FIG. 4a-2, and FIG. 4a-3, the second field may be a feedback segment retransmission bitmap field in a user information list field. The number of bits of the second field may be 8. 5 bits may indicate the first segment in the segment that is incorrectly received and the segment that is not fed back in the N segments, and the other 3 bits are reserved. This is not limited in this embodiment of this application. In this way, a frame structure of the BFRP trigger frame does not need to be changed. In this application, existence of the reserved bits does not constitute a limitation on a number of bits of the field.

Optionally, the first frame may further include a plurality of user information fields, and the user information field includes the second field.

As shown in FIG. 4a-1, FIG. 4a-2, and FIG. 4a-3, the second field provided in this embodiment of this application may be carried in a user information 2 field to a user information M field, and M may be an integer greater than or equal to 2.

Optionally, in the first frame, for different second devices, meanings of the second field may be different.

FIG. 4b-1, FIG. 4b-2, and FIG. 4b-3 are a schematic diagram of a frame structure of yet another first frame according to an embodiment of this application.

As shown in FIG. 4b-1, FIG. 4b-2, and FIG. 4b-3, a second field (a feedback segment retransmission bitmap field indicating to request one or more of a maximum of eight segments of an EHT compressed beamforming/channel quality indication frame) having an indication meaning in the conventional technology is carried in a user information 2 field to a user information K field, and the second field provided in this embodiment of this application is carried in a user information K + 1 field to a user information M field. Alternatively, the second field provided in this embodiment of this application is carried in a user information 2 field to a user information K field, and a second field having an indication meaning in the conventional technology is carried in a user information K + 1 field to a user information M field.

Optionally, K is an integer greater than or equal to 0, and M is an integer greater than or equal to K + 1.

Optionally, the second field is carried in the feedback segment retransmission bitmap field.

In this way, when a total feedback amount of a second device is greater than eight segments, a user information field including the second field provided in this embodiment of this application is used for the second device or for all second devices.

Optionally, a user information field including the second field having an indication meaning in the conventional technology may be referred to as a first-type user information field, and the user information field including the second field provided in this embodiment of this application may be referred to as a second-type user information field. Two types of user information fields may be sorted. For example, the first-type user information field is placed before the second-type user information field (as shown in FIG. 4b-1, FIG. 4b-2, and FIG. 4b-3), or the second-type user information field is placed before the first-type user information field.

It should be noted that the first frame may include the second-type user information field but does not include the first-type user information field, may include the first-type user information field but does not include the second-type user information field, or may include the second-type user information field and the first-type user information field. This is not limited herein.

In this way, for a second device that implements a basic feature (a maximum value of a supported bandwidth is 160 MHz or 320 MHz, and a maximum value of a number of included antennas is 8), the second field may indicate one or more of the maximum of eight segments of the EHT compressed beamforming/channel quality indication frame. For a second device that implements an evolution feature (a maximum value of a supported bandwidth is 320 MHz, and a maximum value of a number of included antennas is 16), the second field may indicate the first segment in the segment that is incorrectly received and the segment that is not fed back in the N segments.

Optionally, the first frame may further include a first indication field, and the first indication field may indicate an indication meaning of the second field.

With reference to FIG. 4b-1, FIG. 4b-2, and FIG. 4b-3, the first indication field may indicate that the second field carried in the user information K + 1 field to the user information M field indicates the first segment in the segment that is incorrectly received and the segment that is not fed back in the N segments, or indicates the index R of the first segment in the consecutive (N-R) segments that need to be requested. It should be noted that the first indication field may be used in combination with any second field provided in embodiments of this application. In FIG. 4b-1, FIG. 4b-2, and FIG. 4b-3, an example in which the first indication field is used in combination with the second field shown in FIG. 4a-1, FIG. 4a-2, and FIG. 4a-3 is used. The first indication field is optional, and may not indicate the user information field including the second field.

In this way, the first indication field may indicate a specific user information field carrying the second field that indicates the first segment in the segment that is incorrectly received and the segment that is not fed back in the N segments, or indicates the index R of the first segment in the consecutive (N-R) segments that need to be requested.

For example, the first indication field may be carried in a user information field or a common information field.

As shown in FIG. 4b-1, FIG. 4b-2, and FIG. 4b-3, the first indication field may be a K value field in the common information field, and may occupy X bits, where X is greater than or equal to 1.

Optionally, the first indication field may be carried in the user information field, and indicates whether a second field carried in the user information field is the second field having an indication meaning in the conventional technology or the second field having a meaning provided in this embodiment of this application. For example, the first indication field may include 1 bit. When the bit is set to 0, it indicates that the second field carried in the user information field is the second field having an indication meaning in the conventional technology; or when the bit is set to 1, it indicates that the second field carried in the information field is the second field having a meaning provided in this embodiment of this application. Alternatively, when the bit is set to 1, it indicates that the second field carried in the information field is the second field having an indication meaning in the conventional technology; or when the bit is set to 0, it indicates that the second field carried in the information field is the second field having a meaning provided in this embodiment of this application.

In still another possible design manner, the first frame may include a plurality of user information fields, association identifiers of at least two of the plurality of user information fields are the same, and the at least two user information fields are used to request the EHT compressed beamforming/channel quality indication report.

FIG. 5A, FIG. 5B, and FIG. 5C are a schematic diagram of a frame structure of still yet another first frame according to an embodiment of this application.

Optionally, in the at least two user information fields with the same association identifier, one user information field includes indication information (for example, information indicated by a field included in a user information 2 field in FIG. 5A, FIG. 5B, and FIG. 5C) required by a user, and fields other than an association identifier field in another user information field each may indicate to request one or more segments, for example, a user information 3 field in FIG. 5A, FIG. 5B, and FIG. 5C.

For example, there are two user information fields with a same association identifier. As shown in FIG. 5A, FIG. 5B, and FIG. 5C, an association identifier of the user information 2 field is the same as an association identifier of the user information 3 field. The user information 2 field includes one or more of the following fields: association identifier 12, resource unit allocation, uplink forward error correction coding type, modulation and coding scheme, reserved, start value of a spatial stream, number of spatial streams, uplink target received signal strength indicator, primary/secondary 160 MHz indication (PS160), and feedback segment retransmission bitmap-part 1. The user information 3 field includes one or more of the following fields: association identifier 12, feedback segment retransmission bitmap-part 2, and reserved.

In a possible implementation, the feedback segment retransmission bitmap-part 1 field may indicate to request eight of the N segments of the EHT compressed beamforming/channel quality indication report, and the feedback segment retransmission bitmap-part 2 field may indicate to request N-8 of the N segments of the extremely high throughput EHT compressed beamforming/channel quality indication report. In this way, the N segments can be requested in total by using the feedback segment retransmission bitmap-part 1 field and the feedback segment retransmission bitmap-part 2 field.

For example, a number of bits of the feedback segment retransmission bitmap-part 2 field may be 1 or greater than 1, for example, 14. The number of bits occupied by the feedback segment retransmission bitmap-part 2 field is an integer greater than or equal to 1, and is flexibly determined based on a meaning indicated by the feedback segment retransmission bitmap-part 2 field and a range that can be indicated by the feedback segment retransmission bitmap-part 2 field. This is not limited herein.

In another possible implementation, the feedback segment retransmission bitmap-part 1 field is a reserved field or is used for another purpose, and the feedback segment retransmission bitmap-part 2 field may indicate to request one or more of the N segments of the extremely high throughput EHT compressed beamforming/channel quality indication report. In this case, a number of bits of the feedback segment retransmission bitmap-part 2 field may be N, for example, 22 or the like.

Optionally, existence of repetition of the association identifier may be considered as a flag read by the second device, to identify existence of an extra bitmap (for example, N is greater than 8).

With reference to FIG. 5A, FIG. 5B, and FIG. 5C, for example, an EHT compressed beamforming/channel quality indication report of a second device 1 includes 22 segments, and an EHT compressed beamforming/channel quality indication report of a second device 2 includes six segments. In this case, user information fields corresponding to the second device 1 may be a user information 2 field and a user information 3 field, and a user information field corresponding to the second device may be a user information 4 field (which is not shown in FIG. 5A, FIG. 5B, and FIG. 5C, and is the same as the user information 2 field).

According to the communication method provided in this embodiment of this application, the at least two user information fields with the same association identifier are used to request the N segments of the EHT compressed beamforming/channel quality indication report, and a part of user information fields are redefined. In this way, the frame structure of the BFRP trigger frame may not be changed, so that feedback segment retransmission bitmap fields of a part or all of users are extended without a change in a length of the user information field and effect on reception of another user.

FIG. 6A, FIG. 6B, FIG. 6C, and FIG. 6D are a schematic diagram of a frame structure of a further first frame according to an embodiment of this application.

Alternatively, optionally, in the at least two user information fields with the same association identifier, only a feedback segment retransmission bitmap field is used to request a segment, and other fields remain unchanged. As shown in FIG. 6A, FIG. 6B, FIG. 6C, and FIG. 6D, an example in which a number of segments is 32 is used. Association identifiers of a user information 2 field to a user information 5 field are the same, and a feedback segment retransmission bitmap field of each user information field may be used to correspondingly request a maximum of 32 segments in a sequence (or according to a specific rule).

For example, a number of segments is 22. Association identifiers of three user information fields may be the same, and three feedback segment retransmission bitmap fields may be used to request a maximum of 24 segments, so that a requirement of requesting 22 segments is met.

In this way, the frame structure of the BFRP trigger frame may not be changed, so that feedback segment retransmission bitmap fields of a part or all of users are extended without a change in a length of the user information field and effect on reception of another user. In addition, interpretation of other fields is not affected.

S202: The second device sends the EHT compressed beamforming/channel quality indication report to the first device. Correspondingly, the first device receives the EHT compressed beamforming/channel quality indication report from the second device.

In some embodiments, S202 may include: The second device sends a second frame to the first device. Correspondingly, the first device receives the second frame from the second device.

Optionally, any one of the N segments is carried in the second frame, the second frame may include a first field and any one of the N segments, and the first field may indicate a segment that is not fed back in the N segments.

For example, the second frame may be an EHT compressed beamforming/channel quality indication frame.

As shown in Table 2, the EHT compressed beamforming/channel quality indication frame may include one or more of the following fields: category, EHT action, EHT multiple-input multiple-output control (EHT multiple-input multiple-output control, EHT MIMO Control), EHT compressed beamforming report (EHT compressed beamforming report), EHT multiple-user exclusive beamforming report (EHT MU exclusive beamforming report), and EHT channel quality status report (EHT CQI report).

**Table 2**

| Sequence | Field name | Meaning |
|---|---|---|
| 1 | Category | The category indicates that the frame is an EHT action frame. |
| 2 | EHT action | The EHT action indicates that the EHT action frame is EHT compressed beamforming/channel quality. |
| 3 | EHT multiple-input multiple-output control | EHT multiple-input multiple-output control indicates control information of the EHT compressed beamforming/channel quality report. |
| 4 | EHT compressed beamforming report | The EHT compressed beamforming report exists when a feedback type is single-user (Single-user, SU) feedback or multiple-user (Multiple-user, MU) feedback. |
| 5 | EHT multiple-user exclusive beamforming report | The EHT multiple-user exclusive beamforming report exists when a feedback type is MU feedback. |

(continued)

| Sequence | Field name | Meaning |
|---|---|---|
| 6 | EHT channel quality status report | The EHT channel quality status report exists when a feedback type is CQI feedback. |

For example, the first field may include the EHT MIMO Control field.

Optionally, the first field may indicate N segments that are not fed back.

FIG. 7 is a schematic diagram of a frame structure of an EHT MIMO Control field according to an embodiment of this application.

As shown in (a) in FIG. 7 or (b) in FIG. 7, the EHT MIMO Control field may include one or more of the following fields (or referred to as subfields): number of columns index (Nc Index), number of rows index (number of rows index, Nr Index), bandwidth (bandwidth, BW), grouping (Grouping), feedback type (Feedback Type), reserved, remaining feedback segment-high (Remaining Feedback Segment-high), remaining feedback segment-low (Remaining Feedback Segment-low), first feedback segment (First Feedback Segment), partial bandwidth information (Partial BW Info), sounding dialog token number (Sounding Dialog Token Number), codebook information (Codebook Information), and reserved.

With reference to (a) in FIG. 7 or (b) in FIG. 7, the first field may include remaining feedback segment-high field and remaining feedback segment-low field. It is assumed that quantities that may be indicated by remaining feedback segment-high and remaining feedback segment-low are respectively $N_{high}$ and $N_{low}$. In this case, a number $N_{rseg}$ of remaining feedback segments is $N_{rseg} = N_{low} + N_{high} \times 8$.

For example, the remaining feedback segment-high field may be set, for example, at a location shown in (a) in FIG. 7 or (b) in FIG. 7, in a reserved bit or field in the EHT MIMO Control field. This is not limited in this embodiment of this application.

Optionally, a number of bits of the first field may be greater than 3, for example, 5 or the like. For example, a number of bits of the remaining feedback segment-high field is 2, may indicating 0 to 3; and a number of bits of the remaining feedback segment-low field is 3, and the remaining feedback segment-low field may indicate 0 to 7. In this case, the number $N_{rseg}$ of remaining feedback segments is 7 + 3 × 8 = 31. In this way, the first field may indicate a maximum of 31 segments that are not fed back, so that more than eight segments can be supported.

For example, for the first field and a first feedback segment field, refer to Table 3.

It should be noted that the number of bits of the remaining feedback segment-high field is not limited in this embodiment of this application; and the number of bits of the remaining feedback segment-high field is not limited to 2, may be an integer less than or greater than 2, and may be correspondingly adapted based on a supported maximum number of segments.

**Table 3**

| Field name | Meaning |
|---|---|
| First field | The first field may indicate a segment that is not fed back in a related EHT compressed beamforming/channel quality frame.<br>When the first field is set to 0, it indicates that the segment is a last segment of a segmented report or the segment is a unique segment of an unsegmented report.<br>For a non-last segment, the first field is set to 1 to N (1 to N). Optionally, a value greater than N is reserved. |
| First feedback segment | When the first feedback segment is set to 1, it indicates that the segment is a first segment of a segmented report or the segment is a unique segment of an unsegmented report.<br>If the segment is not the first segment, or if the frame includes neither the EHT compressed beamforming report nor the EHT multiple-user exclusive beamforming report, the first feedback segment field is set to 0.<br>If a feedback type is CQI, the first feedback segment field is set to 0 because CQI feedback is always less than 11454 bytes. |

In this way, the remaining feedback segment field is extended by using reserved bits, and is extended from 3 bits to more than 3 bits, for example, 5 bits. Generally, a field is from a least significant bit to a most significant bit. In order not to affect an original indication of the remaining feedback segment field and interpretation that is made by the beamformer on the EHT MIMO Control field, a two-part indication method (remaining feedback segment-high and remaining feedback segment-low) is used. In this way, more than eight segments can be supported.

According to the communication method shown in FIG. 2, the first device sends the first frame to the second device, where the first frame is used to request one or more of the N segments of the EHT compressed beamforming/channel quality indication report, and N is an integer greater than 8; and the second device receives the first frame, and feeds back the EHT compressed beamforming/channel quality indication report. In this way, the case in which the number of segments is greater than 8 or the case in which the size of the EHT compressed beamforming/channel quality indication report is greater than 91632 bytes can be supported. Therefore, a channel sounding process in which a bandwidth is 320 MHz and a number of transceiver antennas (or spatial streams) are 16 can be implemented, so that data transmission of the 16 spatial streams on the 320 MHz bandwidth is supported, and a system throughput can be increased.

It should be noted that, in the example provided in this embodiment of this application, one beamformer, for example, one AP, is used as an example during segment calculation. In a multi-AP coordination scenario, a beamformee, for example, a STA, needs to simultaneously feed back compressed beamforming/channel quality indication reports of a plurality of APs. In this case, a feedback amount and a maximum number of segments may be further increased. The communication method provided in this embodiment of this application is also applicable.

For example, FIG. 8 is a schematic flowchart of another communication method according to an embodiment of this application. The communication method is applicable to communication between the first device and the second device shown in FIG. 1.

As shown in FIG. 8, the communication method includes the following steps.

S801: The first device sends an acknowledgment frame to the second device. Correspondingly, the second device receives the acknowledgment frame from the first device.

Optionally, the acknowledgment frame may indicate a segment that is correctly received or a segment that is incorrectly received in N segments. N is an integer greater than or equal to 8.

In other words, the acknowledgment frame indicates a reception status of a segment, for example, a specific segment that is correctly received or a specific segment that is incorrectly received.

Optionally, the acknowledgment frame may include a bitmap. For example, the acknowledgment frame may be a block acknowledgment frame, or may use a new MAC frame type.

S802: The first device sends a first BFRP trigger frame to the second device. Correspondingly, the second device receives the first BFRP trigger frame from the first device.

For example, the first BFRP trigger frame may not include a feedback segment retransmission bitmap field, or may include a feedback segment retransmission bitmap field but does not use the feedback segment retransmission bitmap field.

In this way, the second device retransmits, based on the acknowledgment frame instead of the BFRP trigger frame, the segment that is incorrectly received.

Optionally, after S802, the communication method provided in this embodiment of this application may further include: S803. The second device sends a first EHT compressed beamforming/channel quality indication frame to the first device. Correspondingly, the first device receives the first EHT compressed beamforming/channel quality indication frame from the second device.

For example, the first EHT compressed beamforming/channel quality indication frame includes a segment that is incorrectly received.

Optionally, before S801, the communication method provided in this embodiment of this application may further include S804 to S807.

S804: The first device sends an EHT null data packet announcement (null data packet announcement, NDPA) frame (frame) to the second device. Correspondingly, the second device receives the EHT NDPA frame from the first device.

For example, the EHT NDPA frame may be used to notify a beamformee (for example, a STA) that needs to perform channel sounding, and send a parameter that is related to channel sounding.

In some embodiments, the EHT NDPA frame includes one or more station information fields, and the one or more station information fields indicate related indication information required for each station to perform channel sounding.

FIG. 9 is a schematic diagram of a frame structure of an EHT NDPA frame according to an embodiment of this application. It should be noted that a frame format of the EHT NDPA frame is not limited to that shown in FIG. 9. A specific format of the EHT NDPA frame is not limited in this application.

As shown in FIG. 9, the EHT NDPA frame includes one or more of the following fields: frame control (Frame Control), duration (Duration), receiver address (receiver address, RA), transmitter address (terminal address, TA), sounding dialog token (Sounding Dialog Token), one or more pieces of station information (STA Info), and frame check sequence (frame check sequence, FCS).

For example, the station information field includes one or more of the following fields: association identifier 11 (association identifier 11, AID 11), partial bandwidth information (Partial BW Info), reserved (Reserved), number of columns (number of columns, Nc) index, feedback type and number of grouping (Feedback Type And (Number of Grouping, Ng)), disambiguation (Disambiguation), codebook size (Codebook Size), and reserved (Reserved).

The association identifier 11 field indicates 11 least significant bits of a station association identifier, and identifies a target station. The partial bandwidth information field is a bitmap including 9 bits, and may indicate a STA to feed back channel state information of a partial bandwidth, where a first bit indicates a bitmap including the following 8 bits, and each bit represents a sub-bandwidth granularity of 20 MHz or 40 MHz. For example, when the bandwidth is 320 MHz, and a granularity indication is 1, it indicates that the granularity is 40 MHz, and each of the following 8 bits indicates eight 40 MHz subbands in the entire 320 MHz.

The number of columns index field may indicate a number of columns of channel state information (for example, a compressed beamforming report matrix V) that needs to be fed back by a station. The feedback type and number of grouping field may indicate a feedback type and indicate that $N_g$ subcarriers are grouped into one group. The feedback type may include single-user (single-user, SU) feedback, multiple-user (multiple user, MU) feedback, and channel quality indication (channel quality indication, CQI) feedback. Values of $N_g$ may include 4 and 16. A larger value of $N_g$ indicates a larger compression amount. The codebook size (Codebook Size) field may indicate quantization accuracy. Different accuracy corresponds to different overheads. In addition, the information field further includes two reserved fields, respectively including 1 reserved bit and 3 reserved bits, for subsequent extension.

Optionally, in a channel sounding process (S804 to S807), all segments may be requested by default.

S805: The first device sends an EHT sounding null data packet to the second device. Correspondingly, the second device receives the EHT sounding null data packet from the first device.

Optionally, the EHT sounding null data packet may be sent after a short inter-frame space (short inter-frame space, SIFS).

S806: The first device sends a second BFRP trigger frame to the second device. Correspondingly, the second device receives the second BFRP trigger frame from the first device.

Optionally, the second BFRP trigger frame may not include a feedback segment retransmission bitmap field (reserved), or may include a feedback segment retransmission bitmap field but does not use the feedback segment retransmission bitmap field.

In some embodiments, the second BFRP trigger frame may trigger a plurality of second devices (a second device 1, a second device 2, and a second device 3) to simultaneously perform uplink multiple-user transmission. This further improves channel sounding efficiency.

It should be noted that, in FIG. 8, a trigger-based (trigger-based) channel sounding procedure is used as an example for description. S806 may be optional. If there is only one second device, a non-trigger-based (non-trigger-based, Non-TB) channel sounding procedure may be used. After the first device performs S805, the first device does not perform S806, and the second device directly performs S807. After the first device performs S801, the first device does not perform S802, and the second device directly performs 803.

It should be noted that, in addition to the communication method shown in FIG. 8, the communication method provided in embodiments of this application (for example, the communication method shown in FIG. 2) is also applicable to a trigger-based channel sounding procedure and a non-trigger-based channel sounding procedure. The communication method shown in FIG. 2 may further include steps (for example, S804 and S805) that are not described in the communication method shown in FIG. 2 and that are in the trigger-based channel sounding procedure and the non-trigger-based channel sounding procedure. Details are not described herein.

S807: The second device sends a second EHT compressed beamforming/channel quality indication frame to the first device. Correspondingly, the first device receives the second EHT compressed beamforming/channel quality indication frame from the second device.

According to the communication method shown in FIG. 8, the acknowledgment frame may indicate the segment that is correctly received or the segment that is incorrectly received in the N segments, and N is an integer greater than or equal to 8. The second device retransmits, based on the acknowledgment frame instead of the BFRP trigger frame, the segment that is incorrectly received. In this way, a case in which a number of segments is greater than 8 or a case in which a size of an EHT compressed beamforming/channel quality indication report is greater than 91632 bytes can be supported.

For example, FIG. 10 is a schematic flowchart of still another communication method according to an embodiment of this application. The communication method is applicable to communication between the first device and the second device shown in FIG. 1.

As shown in FIG. 10, the communication method includes the following steps: S1001 to S1008.

S1001: The first device sends an EHT NDPA frame to the second device. Correspondingly, the second device receives the EHT NDPA frame from the first device.

For a specific implementation of the EHT NDPA frame, refer to S804. Details are not described herein again.

Optionally, in a channel sounding process (S1001 to S1004), all segments may be requested by default.

S1002 is completely the same as S805. Details are not described herein again.

S1003: The first device sends a third BFRP trigger frame to the second device. Correspondingly, the second device receives the third BFRP trigger frame from the first device.

Optionally, the third BFRP trigger frame may be used to request all segments. The third BFRP trigger frame may not include a feedback segment retransmission bitmap field (reserved), or may include a feedback segment retransmission bitmap field, but each bit is set to 1.

It should be noted that, in FIG. 10, a trigger-based channel sounding procedure is used as an example for description. S1003 may be optional. If there is only one second device, a non-trigger-based channel sounding procedure may be used. After the first device performs S1002, the first device does not perform S1003, and the second device directly performs S1004. After the first device performs S1006, the first device does not perform S1007, and the second device directly performs S1008.

S1004: The second device sends a third EHT compressed beamforming/channel quality indication frame to the first device. Correspondingly, the first device receives the third EHT compressed beamforming/channel quality indication frame from the second device.

Optionally, the third EHT compressed beamforming/channel quality indication frame includes one segment.

If there is a segment that is incorrectly received (a number of segments that are incorrectly received is greater than or equal to 1), steps S1005 to S1008 are performed. The first device re-sends the EHT NDPA frame, the EHT NDP, and the third BFRP trigger frame, and the second device re-feeds back all segments.

In this way, in a first channel sounding process, all feedback is solicited from the second device. When incorrect reception occurs, the first device re-sends the EHT NDPA frame, the EHT NDP, and the third BFRP trigger frame (optional), to request retransmission of all segments. A number of segments may be greater than 8, and the BFRP trigger frame is not used to perform partial retransmission. In this way, a case in which the number of segments is greater than 8 or a case in which a size of an EHT compressed beamforming/channel quality indication report is greater than 91632 bytes can be supported.

For example, FIG. 11 is a schematic flowchart of a yet another communication method according to an embodiment of this application. The communication method is applicable to communication between the first device and the second device shown in FIG. 1.

It should be noted that the communication method shown in FIG. 11 may be used in combination with at least one of the communication methods shown in FIG. 2, FIG. 8, or FIG. 10, or may be independently used.

As shown in FIG. 11, the communication method includes the following steps.

S1101: The second device generates a third frame.

For example, the third frame includes an MPDU and an MPDU delimiter field. The MPDU includes one of T segments of an EHT compressed beamforming/channel quality indication report, and T is an integer greater than or equal to 1. The MPDU delimiter field includes a third field, the third field indicates that a number of bytes of the MPDU is M, and M is an integer greater than 11454.

In this way, a length of the MPDU may be increased, to reduce a number of segments, so that a case in which the number of segments is greater than 8 or a case in which a size of the EHT compressed beamforming/channel quality indication report is greater than 91632 bytes can be supported.

Optionally, the third frame may include an aggregated media access control protocol data unit of an EHT compressed beamforming/channel quality indication frame.

A plurality of MPDUs are aggregated into an A-MPDU, and are uniformly transmitted through a physical layer preamble. This effectively reduces overheads caused by channel contention and the physical layer preamble.

FIG. 12 is a schematic diagram of a frame structure of an A-MPDU frame according to an embodiment of this application.

As shown in FIG. 12, the A-MPDU frame includes one or more of the following fields: one or more A-MPDU subframes (A-MPDU subframes), and end of frame padding (end of frame padding, EOF padding). The A-MPDU subframes are separated and connected together by using a delimiter (Delimiter). An MPDU delimiter (MPDU Delimiter) occupies four bytes.

In some embodiments, a number of bits of the third field may be 14.

In this way, the third field can indicate that a maximum value of the number of bytes of the MPDU is $2^{14} - 1 = 16383$ .

FIG. 13 is a schematic diagram of a frame structure of an MPDU delimiter field according to an embodiment of this application. As shown in FIG. 13, an MPDU delimiter includes one or more of the following fields: end of frame EOF, reserved, MPDU length, cyclic redundancy code (cyclic redundancy check, CRC), delimiter signature (Delimiter Signature), MPDU length high (MPDU Length High), and MPDU length low (MPDU Length Low).

The end of frame field indicates whether the MPDU is a last MPDU. The MPDU length field indicates a number of bytes of an MPDU following the MPDU delimiter shown in FIG. 12. The delimiter signature field is a sequence having a specific characteristic, and may be used to help a receive end search for a delimiter. Even if the receive end incorrectly decodes a delimiter or an MPDU, the receive end can still find a next MDPU by searching for a next delimiter signature. This avoids error spread. A cyclic redundancy code is similar to an FCS, and may be used to check whether an error occurs in the delimiter. Optionally, a sliding window may be made based on a length (for example, 4 bytes) of the delimiter, and a next delimiter is searched for by checking whether the CRC succeeds.

Optionally, with reference to FIG. 13, the third field may include an MPDU length field. In this way, when the MPDU length field is not changed, current interpretation on an MPDU length is not affected, and a maximum length of the MPDU is increased by about 50%. In comparison with that in the conventional technology in which the MPDU length field indicates a maximum of 11454 bytes, a maximum number of segments may be reduced by about one third, so that the case in which the size of the EHT compressed beamforming/channel quality indication report is greater than 91632 bytes can be supported.

In some other embodiments, a number of bits of the third field may be greater than or equal to 15.

For example, the maximum length of the MPDU may be extended by using one remaining reserved bit in the MPDU delimiter field.

FIG. 14 is a schematic diagram of a frame structure of another MPDU delimiter field according to an embodiment of this application.

As shown in (a) in FIG. 14 and (b) in FIG. 14, the third field may include MPDU length higher, MPDU length high, and MPDU length low. The frame structure of the MPDU delimiter field may be shown in (a) in FIG. 14. The third field may include an MPDU length higher field and an MPDU length field. The MPDU length field includes MPDU length high and MPDU length low. Alternatively, the frame structure of the MPDU delimiter field may be shown in (b) in FIG. 14. An MPDU length field includes MPDU length higher, MPDU length high, and MPDU length low. The third field may be the MPDU length field.

For example, an MPDU length may satisfy the following formula (3):

$$ \mathrm{L}_{MPDU} = \begin{cases} L_{low} + L_{high} \times 4096 & \text{VHT PPDU or HE PPDU} \\ L_{low} & \text{HT PPDU} \\ L_{low} + L_{high} \times 4096 + L_{higher} \times 2^{14} & \text{EHT PPDU} \end{cases} \tag{3} $$

For another example, the MPDU length may satisfy the following formula (4):

$$ \mathrm{L}_{MPDU} = L_{low} + L_{high} \times 4096 + L_{higher} \times 2^{14} \quad \text{HT PPDU or VHT PPDU or HE PPDU or EHT PPDU} \tag{4} $$

VHT represents very high throughput (Very High Throughput), and is a standard name of 802.11ac; HE represents high efficiency (High Efficiency), and is a standard name of 802.11ax; and HT represents high throughput (High Throughput), and is a standard name of 802.11n. The standard name is followed by a PPDU to indicate a PPDU designed in the standard.

It should be noted that an HT PPDU, a VHT PPDU, an HE PPDU, and an EHT PPDU each may be calculated by using the foregoing formula (4). For the HT PPDU, both $L_{high}$ and $L_{higher}$ are 0. For the VHT PPDU, the HE PPDU, and the HT PPDU, $L_{higher}$ is 0.

In this way, a maximum length of the MPDU is further doubled. In comparison with that in the conventional technology in which the MPDU length field indicates a maximum of 11454 bytes, a maximum number of segments may be reduced by a half, so that the case in which the size of the EHT compressed beamforming/channel quality indication report is greater than 91632 bytes can be supported.

In still some other embodiments, the number M of bytes of the MPDU may be greater than an index value L of the third field.

For example, the index value L of the third field may be set to 11454, and the number M of bytes of the MPDU may be greater than 11454.

It should be noted that a value of the index value L and a corresponding meaning are merely examples provided in this embodiment of this application, and other similar implementations are not described one by one in detail in this application.

Optionally, the number M of bytes of the MPDU is K times the index value L of the third field, and K is an integer greater than 1.

For example, K may be 2, 4, or the like.

For example, the index value L is set to 11454, and the number M of bytes of the MPDU may be twice or four times 11454. In this way, the maximum length of the MPDU is extended by two or four times. In comparison with that in the conventional technology in which the MPDU length field indicates a maximum of 11454 bytes, a maximum number of segments is reduced by a half or one fourth.

In this way, when the maximum number of segments is reduced to one fourth of 22, the maximum number of segments is less than or equal to 8, and neither a BFRP trigger frame nor an EHT MIMO control field may be changed.

Optionally, the third field may include a first granularity field and an MPDU length indication field. The first granularity field indicates a granularity of an index value L of the MPDU length indication field.

For example, a number of bits of the first granularity field may be 1. For example, when the number of bits of the first granularity field is 0, the granularity of the index value of the MPDU length indication field is 1; or when the number of bits of the first granularity field is 1, the granularity of the index value of the MPDU length indication field is 2 (this is used as an example for description in the following). Alternatively, when the number of bits of the first granularity field is 1, the granularity of the index value of the MPDU length indication field is 1; or when the number of bits of the first granularity field is 0, the granularity of the index value of the MPDU length indication field is 2.

It is assumed that the number of bits of the first granularity field is 1 and the index value L of the MPDU length indication field is 11454. In this case, the number M of bytes of the MPDU is twice the index value 11454 of the MPDU length indication field.

For example, with reference to (a) in FIG. 14 or (b) in FIG. 14, the first granularity field may be the MPDU length higher field, and the MPDU length indication field may include MPDU length high and MPDU length low.

In this embodiment of this application, the number of bits of the first granularity field is not limited, a specific bit occupied by the first granularity field is not limited, and a value of a granularity indicated by the first granularity field is not limited. The granularity may be greater than or equal to 1, for example, 2, 4, or the like.

It should be noted that, if the maximum number of segments still exceeds 8 after the maximum length of the MPDU is increased, for example, the maximum number of segments is reduced to a half of 22, the communication method shown in FIG. 11 may be used in combination with the communication method shown in FIG. 2, FIG. 8, or FIG. 10, so that indication overheads of the communication method shown in FIG. 2, FIG. 8, or FIG. 10 can be reduced. For example, in the communication method shown in FIG. 2, four user information fields included in the first frame shown in FIG. 6A, FIG. 6B, FIG. 6C, and FIG. 6D may change to two user information fields.

In a possible design manner, the third frame may further include a fourth field.

Optionally, the fourth field may be used to check the MPDU, and a number of bits of the fourth field may be greater than 32.

For example, the number of bits of the fourth field may be 48 or 64.

FIG. 15 is a schematic diagram of a frame structure of an MPDU according to an embodiment of this application.

With reference to FIG. 15, an EHT compressed beamforming/channel quality indication frame may be carried in each field shown in FIG. 15, a fourth field may include a frame check sequence field, and a number of bits of the fourth field may be an integer greater than 32.

For example, when a number of bytes is greater than 11454, a Hamming distance of the frame check sequence changes from 3 to 2. In this way, a length of the frame check sequence is increased, and is extended from 32 bits to more than 32 bits, so that a check capability of the frame check sequence can be improved.

S1102: The second device sends the third frame to the first device. Correspondingly, the first device receives the third frame from the second device.

For a specific implementation of the third frame, refer to S1101. Details are not described herein again.

S1103: The first device parses the third frame.

For a specific implementation of the third frame, refer to S1101. Details are not described herein again.

Optionally, the communication method shown in FIG. 11 may further include the following step 1 to step 3. Step 1: The second device receives an EHT NDPA, an EHT NDP, and a BFRP trigger frame (optionally, the BFRP trigger frame exists when sounding is triggered), and calculates an EHT compressed beamforming/channel quality indication report.

For example, the EHT compressed beamforming/channel quality indication frame report is divided into T segments, and is transmitted by using an A-MPDU structure. A third field exists in an MPDU delimiter of an EHT compressed beamforming/channel quality indication frame other than a last EHT compressed beamforming/channel quality indication frame, and the third field indicates that a length of a corresponding MPDU is greater than 11454 bytes.

Step 2: The second device sends the EHT compressed beamforming/channel quality indication report to the first device.

Optionally, the EHT compressed beamforming/channel quality indication frame includes an EHT MIMO Control field, and the EHT MIMO Control field indicates a number of segments that are not fed back in N segments and whether a segment is a first segment.

Step 3: The first device receives the EHT compressed beamforming/channel quality indication report from the second device.

Optionally, the first device identifies, by using EHT MIMO Control, an EHT compressed beamforming/channel quality indication frame that is not fed back, and requests, by using the BFRP trigger frame, an EHT compressed beamforming/channel quality indication frame that is not successfully received and/or that is not fed back by the second device.

According to the communication method shown in FIG. 11, the second device sends the third frame to the first device. The third frame includes the MPDU and the MPDU delimiter field. The MPDU includes one of the T segments of the EHT compressed beamforming/channel quality indication report, and T is an integer greater than or equal to 1. The MPDU delimiter field includes the third field, the third field indicates that the number of bytes of the MPDU is M, and M is an integer greater than 11454. A maximum length that is of the MPDU and that is allowed in the conventional technology is 11454 bytes. In this embodiment of this application, the maximum length of the MPDU is extended, to reduce a maximum number of required segments, so that the case in which the size of the EHT compressed beamforming/channel quality indication report is greater than 91632 bytes can be supported.

A communication method provided in an embodiment of this application may include: compressing an EHT compressed beamforming/channel quality indication report, to reduce a maximum feedback amount. For details, refer to the following communication methods shown in FIG. 16 to FIG. 19.

For example, FIG. 16 is a schematic flowchart of still yet another communication method according to an embodiment of this application. The communication method is applicable to communication between the first device and the second device shown in FIG. 1.

It should be noted that the communication method shown in FIG. 16 may be used in combination with at least one of the communication methods shown in FIG. 2, FIG. 8, FIG. 10, and FIG. 11, or may be independently used.

As shown in FIG. 16, the communication method includes the following steps.

S1601: The first device sends a first frame to the second device. Correspondingly, the second device receives the first frame from the first device.

For example, the first frame includes a first number field. The first number field indicates that a number of subcarriers in a subcarrier group is L, and L is an integer greater than or equal to 8.

For example, the first frame may be an EHT NDPA frame.

Optionally, the first number field may be carried in a station information field.

Optionally, the first number field may include a feedback type and grouping field.

In some embodiments, the first frame may further include a first-type field, and the first-type field may indicate that a feedback type is multiple-user feedback, single-user feedback, or CQI.

When the feedback type is MU, and codebook information is 1, $b_\phi$ and $b_\psi$ are respectively 9 and 7. When the feedback type is SU, and codebook information is 1, $b_\phi$ and $b_\psi$ are respectively 7 and 5. (9 + 7)/(7 + 5) = 1.3 times. In addition, MU feedback further includes a dedicated signal-to-noise ratio delta. Therefore, in a same case, a feedback amount of the MU type is greater than that of the SU type.

Optionally, the first-type field may be carried in a station information field.

Optionally, the first-type field may include a feedback type and grouping field.

Optionally, the first number field and the first-type field may be a same field.

In some embodiments, the first frame may further include a first reserved field, and the first reserved field may indicate a subcarrier group to which any subcarrier belongs.

Optionally, the first reserved field may be carried in a station information field.

S1602: The second device sends a second frame to the first device. Correspondingly, the first device receives the second frame from the second device.

For example, the second frame includes a segment in an EHT compressed beamforming/channel quality indication report.

According to the communication method shown in FIG. 16, the first number field indicates that a number of subcarriers in a subcarrier group is L, and L is an integer greater than or equal to 8. In this case, the EHT compressed beamforming/channel quality indication report is compressed, so that a feedback amount can be compressed to a half. In this way, a case in which a size of the EHT compressed beamforming/channel quality indication report is greater than 91632 bytes can be supported.

For example, FIG. 17 is a schematic flowchart of a further communication method according to an embodiment of this application. The communication method is applicable to communication between the first device and the second device shown in FIG. 1.

It should be noted that the communication method shown in FIG. 17 may be used in combination with at least one of the communication methods shown in FIG. 2, FIG. 8, FIG. 10, FIG. 11, and FIG. 16, or may be independently used.

S1701: The first device sends a first frame to the second device. Correspondingly, the second device receives the first frame from the first device.

For example, the first frame includes a second number field.

Optionally, the second number field indicates that a number of columns of an EHT compressed beamforming/channel quality indication report matrix is R. R is an integer less than or equal to 8, or R is an integer less than or equal to 4.

Alternatively, optionally, the second number field indicates that a number of spatial streams is $N_c$. $N_c$ is an integer less than or equal to 8, or $N_c$ is an integer less than or equal to 4.

Optionally, the second number field may be carried in a station information field, and the second number field may include a number of columns index field.

In some embodiments, the first frame may further include a first-type field, and the first-type field may indicate that a feedback type is multiple-user feedback. For details, refer to S1601. Details are not described herein again.

In some embodiments, the first frame may further include a first reserved field, and the first reserved field may indicate a subcarrier group to which any subcarrier belongs. For details, refer to S1601. Details are not described herein again.

For example, the reserved field indicates a group of antennas to which all antennas belong.

Optionally, the first device may initiate a plurality of rounds of channel sounding, and solicit a part of antennas in a number of antennas at a receive end each time of channel sounding.

With reference to FIG. 18, it is assumed that the number of antennas is 16. In a first round of channel sounding (S1801 to S1804), the first device requests feedback amounts of eight antennas, and the second device feeds back the feedback amounts of the eight antennas. In a second round of channel sounding (S1805 to S1808), the first device requests feedback amounts of the other eight antennas, and the second device feeds back the feedback amounts of the other eight antennas.

It should be noted that, in FIG. 18, a trigger-based channel sounding procedure is used as an example for description. S1803 and S1808 may be optional. If there is only one second device, a non-trigger-based channel sounding procedure may be used. After the first device performs S1802, the first device does not perform S1803, and the second device directly performs S1804. After the first device performs S1806, the first device does not perform S1807, and the second device directly performs S1808.

S1702: The second device sends a second frame to the first device. Correspondingly, the first device receives the second frame from the second device.

For example, the second frame includes a segment in an EHT compressed beamforming/channel quality indication report.

According to the communication method shown in FIG. 17, the second number field indicates that the number of columns of the EHT compressed beamforming/channel quality indication report matrix is R. R is an integer less than or equal to 8, or R is an integer less than or equal to 4. In this case, the EHT compressed beamforming/channel quality indication report is compressed, so that a feedback amount can be compressed to a half or one fourth. In this way, a case in which a size of the EHT compressed beamforming/channel quality indication report is greater than 91632 bytes can be supported.

For example, FIG. 19 is a schematic flowchart of a still further communication method according to an embodiment of this application. The communication method is applicable to communication between the first device and the second device shown in FIG. 1.

It should be noted that the communication method shown in FIG. 19 may be used in combination with at least one of the communication methods shown in FIG. 2, FIG. 8, FIG. 10, FIG. 11, FIG. 16, and FIG. 17, or may be independently used.

S1901: The first device sends a first frame to the second device. Correspondingly, the second device receives the first frame from the first device.

For example, the first frame includes a partial bandwidth information field. The partial bandwidth information field indicates to feed back an extremely high throughput EHT compressed beamforming/channel quality indication report of a first 160 MHz bandwidth or a second 160 MHz bandwidth.

In some embodiments, the first frame may further include a first-type field, and the first-type field may indicate that a feedback type is multiple-user feedback. For details, refer to S1601. Details are not described herein again.

Optionally, the first device may initiate a plurality of rounds of channel sounding, and request, by using partial bandwidth information, a part of bandwidth in a number of antennas of the second device each time of channel sounding.

With reference to FIG. 18, it is assumed that a bandwidth is 320 MHz. In a first round of channel sounding (S1801 to S1804), the first device requests the first 160 MHz bandwidth, and the second device feeds back the first 160 MHz bandwidth. In a second round of channel sounding (S1805 to S1808), the first device requests the second 160 MHz bandwidth, and the second device feeds back the second 160 MHz bandwidth.

It should be noted that, in FIG. 18, a trigger-based channel sounding procedure is used as an example for description. S1803 and S1808 may be optional. If there is only one second device, a non-trigger-based channel sounding procedure may be used. After the first device performs S1802, the first device does not perform S1803, and the second device directly performs S1804. After the first device performs S1806, the first device does not perform S1807, and the second device directly performs S1808.

S1902: The second device sends a second frame to the first device. Correspondingly, the first device receives the second frame from the second device.

For example, the second frame includes a segment in the EHT compressed beamforming/channel quality indication report.

According to the communication method shown in FIG. 19, the partial bandwidth information field indicates to feed back the extremely high throughput EHT compressed beamforming/channel quality indication report of the first 160 MHz bandwidth or the second 160 MHz bandwidth. In this case, only an extremely high throughput EHT compressed beamforming/channel quality indication report of no more than 160 MHz (when the bandwidth is 320 MHz, the partial bandwidth information indicates that a half of the entire bandwidth is fed back) is fed back each time, so that a feedback amount is compressed to a half. In this way, a case in which a size of the EHT compressed beamforming/channel quality indication report is greater than 91632 bytes can be supported.

In this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

The foregoing describes, with reference to FIG. 2 to FIG. 19, in detail the communication methods provided in embodiments of this application. The following describes, with reference to FIG. 20 to FIG. 22, in detail communication apparatuses provided in embodiments of this application.

FIG. 20 is a schematic diagram of a structure of a communication apparatus that may be configured to perform a communication method according to an embodiment of this application. A communication apparatus 2000 may be a first device or a second device, or may be a chip or another component having a corresponding function, where the chip or the another component is used in the first device or the second device. As shown in FIG. 20, the communication apparatus 2000 may include a processor 2001. Optionally, the communication apparatus 2000 may further include one or more of a memory 2002 and a transceiver 2003. The processor 2001 may be coupled to one or more of the memory 2002 and the transceiver 2003, for example, may be connected to one or more of the memory 2002 and the transceiver 2003 through a communication bus. Alternatively, the processor 2001 may be independently used.

The following specifically describes each component of the communication apparatus 2000 with reference to FIG. 20.

The processor 2001 is a control center of the communication apparatus 2000, and may be one processor, or may be a collective term of a plurality of processing engines. For example, the processor 2001 is one or more central processing units (central processing units, CPUs), or may be an application-specific integrated circuit (application-specific integrated circuit, ASIC), or may be one or more integrated circuits configured to implement embodiments of this application, for example, one or more microprocessors (digital signal processors, DSPs) or one or more field programmable gate arrays (field programmable gate arrays, FPGAs).

The processor 2001 may perform various functions of the communication apparatus 2000 by running or executing a software program stored in the memory 2002 and invoking data stored in the memory 2002.

During specific implementation, in an embodiment, the processor 2001 may include one or more CPUs, for example, a CPU 0 and a CPU 1 shown in FIG. 20.

During specific implementation, in an embodiment, the communication apparatus 2000 may alternatively include a plurality of processors, for example, the processor 2001 and a processor 2004 shown in FIG. 20. Each of these processors may be a single-core processor (single-CPU), or may be a multi-core processor (multi-CPU). The processor herein may be one or more communication devices, circuits, and/or processing cores configured to process data (for example, computer program instructions).

Optionally, the memory 2002 may be a read-only memory (read-only memory, ROM) or another type of static storage communication device that can store static information and instructions, or a random access memory (random access memory, RAM) or another type of dynamic storage communication device that can store information and instructions. Alternatively, the memory 2002 may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage communication device, or any other medium that can be used to carry or store expected program code in a form of an instruction or data structure and that can be accessed by a computer. However, this is not limited thereto. The memory 2002 may be integrated with the processor 2001, or may exist independently, and is coupled to the processor 2001 through an input/output port (which is not shown in FIG. 20) of the communication apparatus 2000. This is not specifically limited in this embodiment of this application.

For example, the input port may be configured to implement receiving functions performed by the first device or the second device in any one of the foregoing method embodiments, and the output port may be configured to implement sending functions performed by the first device or the second device in any one of the foregoing method embodiments.

The memory 2002 may be configured to store a software program for executing the solutions of this application, and the processor 2001 controls the execution. For the foregoing specific implementation, refer to the foregoing method embodiments. Details are not described herein again.

Optionally, the transceiver 2003 is configured to communicate with another communication apparatus. For example, when the communication apparatus 2000 is the first device, the transceiver 2003 may be configured to communicate with the second device. For another example, when the communication apparatus 2000 is the second device, the transceiver 2003 may be configured to communicate with the first device. In addition, the transceiver 2003 may include a receiver and a transmitter (which are not separately shown in FIG. 20). The receiver is configured to implement a receiving function, and the transmitter is configured to implement a sending function. The transceiver 2003 may be integrated with the processor 2001, or may exist independently, and is coupled to the processor 2001 through the input/output port (which is not shown in FIG. 20) of the communication apparatus 2000. This is not specifically limited in this embodiment of this application.

It should be noted that the structure of the communication apparatus 2000 shown in FIG. 20 does not constitute a limitation on the communication apparatus. An actual communication apparatus may include more or fewer components than those shown in the figure, or combine some components, or use a different component arrangement.

The actions of the first device in FIG. 2 to FIG. 19 may be performed by the processor 2001 in the communication apparatus 2000 shown in FIG. 20 by invoking application program code stored in the memory 2002, to instruct the first device to perform the actions.

The actions of the second device in FIG. 2 to FIG. 19 may be performed by the processor 2001 in the communication apparatus 2000 shown in FIG. 20 by invoking application program code stored in the memory 2002, to instruct the second device to perform the actions. This is not limited in this embodiment.

When the communication apparatus is the first device, the communication apparatus 2000 may perform any one or more possible design manners related to the first device in the foregoing method embodiments. When the communication apparatus is the second device, the communication apparatus 2000 may perform any one or more possible design manners related to the second device in the foregoing method embodiments.

It should be noted that all related content of the steps in the foregoing method embodiments may be cited in function descriptions of corresponding functional modules. Details are not described herein again.

FIG. 21 is a schematic diagram of a structure of another communication apparatus according to an embodiment of this application. For ease of description, FIG. 21 shows only main components of the communication apparatus.

A communication apparatus 2100 includes a sending module 2101 and a receiving module 2102. The communication apparatus 2100 may be the first device or the second device in the foregoing method embodiments. The sending module 2101 may also be referred to as a sending unit, and is configured to implement sending functions performed by the first device or the second device in any one of the foregoing method embodiments.

It should be noted that the receiving module 2102 and the sending module 2101 may be separately disposed, or may be integrated into one module, that is, a transceiver module. Specific implementations of the receiving module 2102 and the sending module 2101 are not specifically limited in this application. The transceiver module may include a transceiver circuit, a transceiver machine, a transceiver, or a communication interface.

Optionally, the communication apparatus 2100 may further include a processing module 2103. The processing module 2103 may be configured to implement processing functions performed by the first device or the second device in any one of the foregoing method embodiments. The processing module 2103 may be a processor. In this embodiment, the communication apparatus 2100 is presented in a form in which functional modules are obtained through division in an integrated manner. The "module" herein may be a specific ASIC, a circuit, a processor and a memory that execute one or more software or firmware programs, an integrated logic circuit, and/or another component capable of providing the foregoing functions. In a simple embodiment, a person skilled in the art may figure out that the communication apparatus 2100 may be in a form of the communication apparatus 2000 shown in FIG. 20.

For example, the processor 2001 in the communication apparatus 2000 shown in FIG. 20 may invoke computer-executable instructions stored in the memory 2002, so that the communication method in the foregoing method embodiment is performed.

Specifically, functions/implementation processes of the receiving module 2102, the sending module 2101, and the processing module 2103 in FIG. 21 may be implemented by the processor 2001 in the communication apparatus 2000 shown in FIG. 20 by invoking the computer-executable instructions stored in the memory 2002. Alternatively, a function/an implementation process of the processing module 2103 in FIG. 21 may be implemented by the processor 2001 in the communication apparatus 2000 shown in FIG. 20 by invoking the computer-executable instructions stored in the memory 2002, and functions/implementation processes of the receiving module 2102 and the sending module 2101 in FIG. 21 may be implemented by the transceiver 2003 in the communication apparatus 2000 shown in FIG. 20. The communication apparatus 2100 provided in this embodiment may perform the foregoing communication method. Therefore, for technical effects that can be achieved by the communication apparatus 2100, refer to the foregoing method embodiments. Details are not described herein again.

In a possible design solution, the communication apparatus 2100 shown in FIG. 21 is applicable to the communication system shown in FIG. 1, and performs functions of the first device in the communication methods shown in FIG. 2 to FIG. 15.

The sending module 2101 is configured to send a first frame to the second device. The first frame is used to request one or more of N segments of an extremely high throughput EHT compressed beamforming/channel quality indication report, and N is an integer greater than 8.

The receiving module 2102 is configured to receive the EHT compressed beamforming/channel quality indication report from the second device.

Optionally, the communication apparatus 2100 may further include the processing module 2103. The receiving module 2102 is further configured to receive a third frame from the second device. The processing module 2103 is configured to parse the third frame.

Optionally, the third frame may include a media access control protocol data unit MPDU and an MPDU delimiter field. The MPDU includes one of T segments of the extremely high throughput EHT compressed beamforming/channel quality indication report, and T is an integer greater than or equal to 1. The MPDU delimiter includes a third field, the third field indicates that a number of bytes of the MPDU is M, and M is an integer greater than 11454.

It should be noted that all related content of the steps in the foregoing method embodiments may be cited in function descriptions of corresponding functional modules. Details are not described herein again.

Optionally, the communication apparatus 2100 may further include a storage module (which is not shown in FIG. 21), and the storage module stores a program or instructions. When the processing module 2103 executes the program or the instructions, the communication apparatus 2100 is enabled to perform the functions of the first device in the communication methods shown in FIG. 2 to FIG. 15.

It should be noted that the communication apparatus 2100 may be the first device, or may be a chip (system) or another part or component that can be disposed in the first device. This is not limited in this application.

In addition, for technical effects of the communication apparatus 2100, refer to the technical effects of the communication methods shown in FIG. 2 to FIG. 15. Details are not described herein again.

In another possible design solution, the communication apparatus 2100 shown in FIG. 21 is applicable to the communication system shown in FIG. 1, and performs the functions of the second device in the communication methods shown in FIG. 2 to FIG. 15.

The receiving module 2102 is configured to receive a first frame from the first device. The first frame is used to request one or more of N segments of an extremely high throughput EHT compressed beamforming/channel quality indication report, and N is an integer greater than 8.

The sending module 2101 is configured to send the EHT compressed beamforming/channel quality indication report to the first device.

Optionally, the communication apparatus 2100 may further include the processing module 2103. The processing module 2103 is configured to generate a third frame. The third frame includes a media access control protocol data unit MPDU and an MPDU delimiter field. The MPDU includes one of T segments of the extremely high throughput EHT compressed beamforming/channel quality indication report, and T is an integer greater than or equal to 1. The MPDU delimiter field includes a third field, the third field indicates that a number of bytes of the MPDU is M, and M is an integer greater than 11454.

The sending module 2101 is further configured to send the third frame to the first device.

It should be noted that all related content of the steps in the foregoing method embodiments may be cited in function descriptions of corresponding functional modules. Details are not described herein again.

Optionally, the communication apparatus 2100 may further include a storage module (which is not shown in FIG. 21), and the storage module stores a program or instructions. When the processing module 2103 executes the program or the instructions, the communication apparatus 2100 is enabled to perform the functions of the second device in the communication methods shown in FIG. 2 to FIG. 15.

It should be noted that the communication apparatus 2100 may be the second device, or may be a chip (system) or another part or component that can be disposed in the second device. This is not limited in this application.

In addition, for technical effects of the communication apparatus 2100, refer to the technical effects of the communication methods shown in FIG. 2 to FIG. 15. Details are not described herein again.

In still another possible design solution, the communication apparatus 2100 shown in FIG. 21 is applicable to the communication system shown in FIG. 1, and performs the functions of the first device in any one or more communication methods shown in FIG. 16 to FIG. 19, or performs the functions of the second device in any one or more communication methods shown in FIG. 16 to FIG. 19.

It should be noted that all related content of the steps in the foregoing method embodiments may be cited in function descriptions of corresponding functional modules. Details are not described herein again.

Optionally, the communication apparatus 2100 may further include a storage module (which is not shown in FIG. 21), and the storage module stores a program or instructions. When the processing module 2102 executes the program or the instructions, the communication apparatus 2100 is enabled to perform the functions of the first device or the second device in the communication methods shown in FIG. 16 to FIG. 19.

It should be noted that the communication apparatus 2100 may be the first device or the second device, or may be a chip (system) or another part or component that can be disposed in the first device or the second device. This is not limited in this application.

In addition, for technical effects of the communication apparatus 2100, refer to the technical effects of the communication methods shown in FIG. 16 to FIG. 19. Details are not described herein again.

FIG. 22 is a schematic diagram of a structure of still another communication apparatus according to an embodiment of this application. For ease of description, FIG. 22 shows only main components of the communication apparatus.

The communication apparatus 2200 includes a transceiver module 2201 and a processing module 2202. The communication apparatus 2200 may be the first device or the second device in the foregoing method embodiments. The transceiver module 2201 may also be referred to as a transceiver unit, and is configured to implement transceiver functions performed by the first device or the second device in any one of the foregoing method embodiments.

It should be noted that the transceiver module 2201 may include a receiving module and a sending module (which are not shown in FIG. 22). The receiving module is configured to receive data and/or signaling from another device. The sending module is configured to send data and/or signaling to another device. A specific implementation of the transceiver module is not specifically limited in this application. The transceiver module may include a transceiver circuit, a transceiver machine, a transceiver, or a communication interface.

The processing module 2202 may be configured to implement processing functions performed by the first device or the second device in any one of the foregoing method embodiments. The processing module 2202 may be a processor.

In this embodiment, the communication apparatus 2200 is presented in a form in which functional modules are obtained through division in an integrated manner. The "module" herein may be a specific ASIC, a circuit, a processor and a memory that execute one or more software or firmware programs, an integrated logic circuit, and/or another component capable of providing the foregoing functions. In a simple embodiment, a person skilled in the art may figure out that the communication apparatus 2200 may be in a form of the communication apparatus 2000 shown in FIG. 20.

For example, the processor 2001 in the communication apparatus 2000 shown in FIG. 20 may invoke computer-executable instructions stored in the memory 2002, so that the communication method in the foregoing method embodiment is performed.

Specifically, functions/implementation processes of the transceiver module 2201 and the processing module 2202 in FIG. 22 may be implemented by the processor 2001 in the communication apparatus 2000 shown in FIG. 20 by invoking the computer-executable instructions stored in the memory 2002. Alternatively, a function/an implementation process of the processing module 2202 in FIG. 22 may be implemented by the processor 2001 in the communication apparatus 2000 shown in FIG. 20 by invoking the computer-executable instructions stored in the memory 2002, and a function/an implementation process of the transceiver module 2201 in FIG. 22 may be implemented by the transceiver 2003 in the communication apparatus 2000 shown in FIG. 20.

The communication apparatus 2200 provided in this embodiment may perform the foregoing communication method. Therefore, for technical effects that can be achieved by the communication apparatus 2200, refer to the foregoing method embodiments. Details are not described herein again.

In a possible design solution, the communication apparatus 2200 shown in FIG. 22 is applicable to the communication system shown in FIG. 1, and performs functions of the second device in the communication methods shown in FIG. 16 to FIG. 19.

The processing module 2202 is configured to generate a third frame. The third frame includes an MPDU and an MPDU delimiter field. The MPDU includes one of T segments of an EHT compressed beamforming/channel quality indication report, and T is an integer greater than or equal to 1. The MPDU delimiter field includes a third field, the third field indicates that a number of bytes of the MPDU is M, and M is an integer greater than 11454.

The transceiver module 2201 is configured to send the third frame to the first device.

It should be noted that all related content of the steps in the foregoing method embodiments may be cited in function descriptions of corresponding functional modules. Details are not described herein again.

Optionally, the communication apparatus 2200 may further include a storage module (which is not shown in FIG. 22), and the storage module stores a program or instructions. When the processing module 2202 executes the program or the instructions, the communication apparatus 2200 is enabled to perform the functions of the second device in the communication methods shown in FIG. 16 to FIG. 19.

It should be noted that the communication apparatus 2200 may be the second device, or may be a chip (system) or another part or component that can be disposed in the second device. This is not limited in this application.

In addition, for technical effects of the communication apparatus 2200, refer to the technical effects of the communication methods shown in FIG. 16 to FIG. 19. Details are not described herein again.

In another possible design solution, the communication apparatus 2200 shown in FIG. 22 is applicable to the communication system shown in FIG. 1, and performs functions of the first device in the communication methods shown in FIG. 16 to FIG. 19.

The transceiver module 2201 is configured to receive a third frame from the second device. The third frame includes a media access control protocol data unit MPDU and an MPDU delimiter field. The MPDU includes one of T segments of an extremely high throughput EHT compressed beamforming/channel quality indication report, and T is an integer greater than or equal to 1. The MPDU delimiter includes a third field, the third field indicates that a number of bytes of the MPDU is M, and M is an integer greater than 11454.

The processing module 2202 is configured to parse the third frame.

It should be noted that all related content of the steps in the foregoing method embodiments may be cited in function descriptions of corresponding functional modules. Details are not described herein again. Optionally, the communication apparatus 2200 may further include a storage module (which is not shown in FIG. 22), and the storage module stores a program or instructions. When the processing module 2202 executes the program or the instructions, the communication apparatus 2200 is enabled to perform the functions of the first device in the communication methods shown in FIG. 16 to FIG. 19.

It should be noted that the communication apparatus 2200 may be the first device, or may be a chip (system) or another part or component that can be disposed in the first device. This is not limited in this application.

In addition, for technical effects of the communication apparatus 2200, refer to the technical effects of the communication methods shown in FIG. 16 to FIG. 19. Details are not described herein again.

An embodiment of this application provides a communication system. The communication system includes a first device and a second device. The first device is configured to perform actions of the first device in the foregoing method embodiments. For a specific performing method and process, refer to the foregoing method embodiments. Details are not described herein again.

The second device is configured to perform actions of the second device in the foregoing method embodiments. For a specific performing method and process, refer to the foregoing method embodiments. Details are not described herein again.

An embodiment of this application provides a chip system. The chip system includes a logic circuit and an input/output port. The logic circuit may be configured to implement processing functions in the communication methods provided in embodiments of this application, and the input/output port may be configured to implement transceiver functions in the communication methods provided in embodiments of this application.

For example, the input port may be configured to implement receiving functions in the communication methods provided in embodiments of this application, and the output port may be configured to implement sending functions in the communication methods provided in embodiments of this application.

For example, the processor in the communication apparatus 2000 may be configured to perform, for example, but not limited to, baseband-related processing, and the transceiver in the communication apparatus 2000 may be configured to perform, for example, but not limited to, radio frequency receiving and sending. The foregoing components may be separately disposed on chips that are independent of each other, or at least a part or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more components may be integrated on a same chip. For example, the digital baseband processor and a plurality of application processors (for example, but not limited to, a graphics processing unit, a multimedia processor, and the like) may be integrated on a same chip. The chip may be referred to as a system on chip (system on chip). Whether the components are separately disposed on different chips or integrated and disposed on one or more chips usually depends on a specific requirement of a product design. Specific implementation forms of the foregoing components are not limited in this embodiment of the present invention.

In a possible design, the chip system further includes a memory. The memory is configured to store program instructions and data for implementing functions in the communication methods provided in embodiments of this application.

The chip system may include a chip, or may include a chip and another discrete device.

An embodiment of this application provides a computer-readable storage medium. The computer-readable storage medium includes a computer program or instructions. When the computer program or the instructions is or are run on a computer, the communication method provided in embodiments of this application is performed.

An embodiment of this application provides a computer program product. The computer program product includes a computer program or instructions. When the computer program or the instructions is or are run on a computer, the communication method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by software, hardware (for example, a circuit), firmware, or any combination thereof. When software is used to implement the foregoing embodiments, all or a part of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists. A and B may be singular or plural. In addition, the character "/" in this specification usually indicates an "or" relationship between the associated objects, or may indicate an "and/or" relationship. For details, refer to a context for understanding.

In this application, "at least one" means one or more, and "a plurality of means two or more. At least one of the following items (pieces) or a similar expression thereof refers to any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, an optical disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   sending, by a first device, a first frame to a second device, wherein the first frame is used to request one or more of N segments of an extremely high throughput EHT compressed beamforming/channel quality indication report, and N is an integer greater than 8; and
   receiving the EHT compressed beamforming/channel quality indication report from the second device.

2. A communication method, comprising:

   receiving, by a second device, a first frame from a first device, wherein the first frame is used to request one or more of N segments of an extremely high throughput EHT compressed beamforming/channel quality indication report, and N is an integer greater than 8; and
   sending the EHT compressed beamforming/channel quality indication report to the first device.

3. The communication method according to claim 1 or 2, wherein any one of the N segments is carried in a second frame, the second frame comprises a first field and any one of the N segments, and the first field indicates a segment that is not fed back in the N segments.

4. The communication method according to any one of claims 1 to 3, wherein that the first frame is used to request one or more of N segments of an extremely high throughput EHT compressed beamforming/channel quality indication report comprises:
   the first frame comprises a second field, and the second field is used to request one or more of the N segments of the EHT compressed beamforming/channel quality indication report.

5. The communication method according to claim 4, wherein a number of bits of the second field is W, at least one of the W bits indicates to request at least two of the segments, and W is an integer greater than or equal to 1.

6. The communication method according to claim 4, wherein a number of bits of the second field is greater than or equal to N.

7. The communication method according to any one of claims 1 to 3, wherein that the first frame is used to request one or more of N segments of an extremely high throughput EHT compressed beamforming/channel quality indication report comprises:
the first frame comprises a second field, the second field indicates an index R of a first segment in consecutive (N-R) segments that need to be requested, and R is an integer greater than or equal to 0 and less than or equal to N-1.

8. The communication method according to claim 1, wherein that the first frame is used to request one or more of N segments of an extremely high throughput EHT compressed beamforming/channel quality indication report comprises:
the first frame comprises a plurality of user information fields, association identifiers of at least two of the plurality of user information fields are the same, and the at least two user information fields are used to request the EHT compressed beamforming/channel quality indication report.

9. A communication apparatus, wherein the apparatus comprises a sending module and a receiving module, wherein

the sending module is configured to send a first frame to a second device, wherein the first frame is used to request one or more of N segments of an extremely high throughput EHT compressed beamforming/channel quality indication report, and N is an integer greater than 8; and
the receiving module is configured to receive the EHT compressed beamforming/channel quality indication report from the second device.

10. A communication apparatus, wherein the apparatus comprises a sending module and a receiving module, wherein

the receiving module is configured to receive a first frame from a first device, wherein the first frame is used to request one or more of N segments of an extremely high throughput EHT compressed beamforming/channel quality indication report, and N is an integer greater than 8; and
the sending module is configured to send the EHT compressed beamforming/channel quality indication report to the first device.

11. The communication apparatus according to claim 9 or 10, wherein any one of the N segments is carried in a second frame, the second frame comprises a first field and any one of the N segments, and the first field indicates a segment that is not fed back in the N segments.

12. The communication apparatus according to any one of claims 9 to 11, wherein that the first frame is used to request one or more of N segments of an extremely high throughput EHT compressed beamforming/channel quality indication report comprises:
the first frame comprises a second field, and the second field is used to request one or more of the N segments of the EHT compressed beamforming/channel quality indication report.

13. The communication apparatus according to claim 12, wherein a number of bits of the second field is W, at least one of the W bits indicates to request at least two of the segments, and W is an integer greater than or equal to 1.

14. The communication apparatus according to claim 12, wherein a number of bits of the second field is greater than or equal to N.

15. The communication apparatus according to any one of claims 9 to 11, wherein that the first frame is used to request one or more of N segments of an extremely high throughput EHT compressed beamforming/channel quality indication report comprises:
the first frame comprises a second field, the second field indicates an index R of a first segment in consecutive (N-R) segments that need to be requested, and R is an integer greater than or equal to 0 and less than or equal to N-1.

16. The communication apparatus according to claim 9, wherein that the first frame is used to request one or more of N segments of an extremely high throughput EHT compressed beamforming/channel quality indication report comprises:
the first frame comprises a plurality of user information fields, association identifiers of at least two of the plurality of user information fields are the same, and the at least two user information fields are used to request the EHT compressed beamforming/channel quality indication report.

17. A communication apparatus, wherein the communication apparatus comprises a processor, and the processor is configured to implement the communication method according to any one of claims 1 to 8.

18. A communication apparatus, wherein the communication apparatus comprises a processor, and the processor is coupled to a memory;

the memory is configured to store a computer program; and
the processor is configured to execute the computer program stored in the memory, so that the communication method according to any one of claims 1 to 8 is performed.

19. A computer-readable storage medium, wherein the computer-readable storage medium comprises a computer program or instructions, and when the computer program or the instructions is or are run on a computer, the communication method according to any one of claims 1 to 8 is performed.

20. A computer program product, wherein the computer program product comprises a computer program or instructions, and when the computer program or the instructions is or are run on a computer, the communication method according to any one of claims 1 to 8 is performed.

First device

Second device

FIG. 1

First device

Second device

S201: Send a first frame

S202: Send an EHT compressed beamforming/
channel quality indication report

FIG. 2

Number of bits
(Bits):

| 12 | 3 | 2 | 4 | 4 | 12 | 3 | 8 |
|---|---|---|---|---|---|---|---|

Special user information field

| AID 12 (Association identifier) (=2007) | PHY Version ID (Physical layer version identifier) | UL EHT BW Extension (Uplink EHT bandwidth extension) | UL EHT Spatial Reuse 1 (Uplink EHT spatial reuse 1) | UL EHT Spatial Reuse 2 (Uplink EHT spatial reuse 2) | U-SIG Disregard And Validate (Universal signal field disregard and validate) | Reserved | Reserved |
|---|---|---|---|---|---|---|---|

b25          b36  b37        b39

TO
FIG. 3a-2

TO
FIG. 3a-2

FIG. 3a-1

CONT.
FROM
FIG. 3a-1

CONT.
FROM
FIG. 3a-1

Common information field

User information list field

| Trigger Type (Trigger type) | UL Length (Uplink length) | More TFs (More trigger frames) | CS Required (Carrier sense required) | UL (HE) Bandwidth (Uplink bandwidth) | GI And EHT-LTF Type (Guard interval and EHT long training sequence type) | MU-MIMO EHT-LTF Mode (MU-MIMO EHT-LTF mode) | Number of EHT-LTF Symbols And Midamble Periodicity (Number of EHT-LTFs and midamble periodicity) | UL STBC (Uplink space time block code) |
|---|---|---|---|---|---|---|---|---|
| | | | | | | | 9 | 1 |

| User Info (STA 1) (User information 1) (special) | User Info (STA 2) (User information 2) | User Info (STA 3) (User information 3) | ... | User Info (STA M) |
|---|---|---|---|---|

Continue on next line

| LDPC Extra Symbol Segment (LDPC extra symbol segment) | AP TX Power (AP transmit power) | Pre-FEC Padding Factor (Pre-forward error correction padding factor) | PE Disambiguity (Packet extension disambiguity) | UL Spatial Reuse (Uplink spatial reuse) | Doppler (Doppler) | UL HE-SIG-A2 Reserved (Uplink HE-SIG-A2 reserved) | Reserved (Reserved) |
|---|---|---|---|---|---|---|---|
| | | | | | | | b63 |

Number of bits (Bits):

| | 1 | 1 | 7 |
|---|---|---|---|
| | HE/EHT indication | Special user field existence indication | Another UL HE-SIG-A2 Reserved (Another uplink HE-SIG-A2 reserved) |
| | b54 | b55 | b56            b62 |

FIG. 3a-2

EP 4 355 020 A1

41

CONT.
FROM
FIG. 3a-2

CONT.
FROM
FIG. 3a-2

Number of bits
(Bits):

| | 12 | 8 | 1 | 4 | 1 | 4 | 2 | 7 | 1 | 8 |
|---|---|---|---|---|---|---|---|---|---|---|
| EHT variant user information field (User Info 2 to M) | AID 12 (Association identifier 12) | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/ Secondary 160 MHz indication) | **Feedback Segment Retransmission Bitmap (Feedback segment retransmission bitmap)** |

b25                                    b39   b40        b47

FIG. 3a-3

EP 4 355 020 A1

Number of bits
(Bits):

| | 12 | 3 | 2 | 4 | 4 | 12 | 3 | 8 |
|---|---|---|---|---|---|---|---|---|
| Special user information field | AID 12 (Association identifier) (=2007) | PHY Version ID (Physical layer version identifier) | UL EHT BW Extension (Uplink EHT bandwidth extension) | UL EHT Spatial Reuse 1 (Uplink EHT spatial reuse 1) | UL EHT Spatial Reuse 2 (Uplink EHT spatial reuse 2) | U-SIG Disregard And Validate (Universal signal field disregard and validate) | Reserved | Reserved |

b25                     b36   b37        b39

TO                              TO
FIG. 3b-2                    FIG. 3b-2

FIG. 3b-1

Common information field

| Trigger Type (Trigger type = 8 to 15) | UL Length (Uplink length) | More TFs (More trigger frames) | CS Required (Carrier sense required) | UL (HE) Bandwidth (Uplink bandwidth) | GI And EHT-LTF Type (Guard interval and EHT long training sequence type) | MU-MIMO EHT-LTF Mode (MU-MIMO EHT-LTF mode) | Number of EHT-LTF Symbols And Midamble Periodicity (Number of EHT-LTFs and midamble periodicity) | UL STBC (Uplink space time block code) |
|---|---|---|---|---|---|---|---|---|
| | | | | | | | 9 | 1 |

User information list field

| User Info (STA 1) (User information 1) (special) | User Info (STA 2) (User information 2) | User Info (STA 3) (User information 3) | ... | User Info (STA M) (User information M) |
|---|---|---|---|---|

Continue on next line

| LDPC Extra Symbol Segment (LDPC extra symbol segment) | AP TX Power (AP transmit power) | Pre-FEC Padding Factor (Pre-forward error correction padding factor) | PE Disambiguity (Packet extension disambiguity) | UL Spatial Reuse (Uplink spatial reuse) | Doppler (Doppler) | UL HE-SIG-A2 Reserved (Uplink HE-SIG-A2 reserved) | Reserved (Reserved) |
|---|---|---|---|---|---|---|---|
| | | | | | | | b63 |

Number of bits (Bits):

| | 1 | 1 | 7 | |
|---|---|---|---|---|
| HE/EHT indication | Special user field existence indication | Another UL HE-SIG-A2 Reserved (Another uplink HE-SIG-A2 reserved) | | |
| b54 | b55 | b56 | b62 | |

EP 4 355 020 A1

CONT.
FROM
FIG. 3b-2

CONT.
FROM
FIG. 3b-2

Number of bits
(Bits):

| | 12 | 8 | 1 | 4 | 1 | 4 | 2 | 7 | 1 | **32** |
|---|---|---|---|---|---|---|---|---|---|---|
| EHT variant user information field (User Info 2 to M) | AID 12 (Association identifier 12) | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/ Secondary 160 MHz indication) | **Feedback Segment Retransmission Bitmap (Feedback segment retransmission bitmap)** |

b25                                              b39   b40          **b71**

FIG. 3b-3

EP 4 355 020 A1

Number of bits
(Bits):

| 12 | 3 | 2 | 4 | 4 | 12 | 3 | 8 |
|---|---|---|---|---|---|---|---|

Special user
information
field

| AID 12 (Association identifier) (=2007) | PHY Version ID (Physical layer version identifier) | UL EHT BW Extension (Uplink EHT bandwidth extension) | UL EHT Spatial Reuse 1 (Uplink EHT spatial reuse 1) | UL EHT Spatial Reuse 2 (Uplink EHT spatial reuse 2) | U-SIG Disregard And Validate (Universal signal field disregard and validate) | Reserved | Reserved |
|---|---|---|---|---|---|---|---|

b25          b36  b37          b39

TO
FIG. 4a-2

TO
FIG. 4a-2

FIG. 4a-1

EP 4 355 020 A1

CONT.
FROM
FIG. 4a-1

CONT.
FROM
FIG. 4a-1

Common information field

| Trigger Type (Trigger type) | UL Length (Uplink length) | More TFs (More trigger frames) | CS Required (Carrier sense required) | UL (HE) Bandwidth (Uplink bandwidth) | GI And EHT-LTF Type (Guard interval and EHT long training sequence type) | MU-MIMO EHT-LTF Mode (MU-MIMO EHT-LTF mode) | Number of EHT-LTF Symbols And Midamble Periodicity (Number of EHT-LTFs and midamble periodicity) | UL STBC (Uplink space time block code) |
|---|---|---|---|---|---|---|---|---|

User information list field

| User Info (STA 1) (User information 1) (special) | User Info (STA 2) (User information 2) | ... | User Info (STA K) (User information K) | User Info (STA K+1) (User information K+1) | ... | User Info (STA M) (User information M) |
|---|---|---|---|---|---|---|

9  1

Continue on next line

| LDPC Extra Symbol Segment (LDPC extra symbol segment) | AP TX Power (AP transmit power) | Pre-FEC Padding Factor (Pre-forward error correction padding factor) | PE Disambiguity (Packet extension disambiguity) | UL Spatial Reuse (Uplink spatial reuse) | Doppler (Doppler) | UL HE-SIG-A2 Reserved (Uplink HE-SIG-A2 reserved) | Reserved (Reserved) |
|---|---|---|---|---|---|---|---|

b63

Number of bits (Bits):  1  1  7

| HE/EHT indication | Special user field existence indication | Another UL HE-SIG-A2 Reserved (Another uplink HE-SIG-A2 reserved) |
|---|---|---|
| b54 | b55 | b56  b62 |

TO
FIG. 4a-3

TO
FIG. 4a-3

FIG. 4a-2

EP 4 355 020 A1

CONT.
FROM
FIG. 4a-2

CONT.
FROM
FIG. 4a-2

| | AID 12 (Association identifier 12) | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/ Secondary 160 MHz indication) | Feedback Segment Retransmission Bitmap (Feedback segment retransmission bitmap) | Reserved |
|---|---|---|---|---|---|---|---|---|---|---|---|
| Number of bits (Bits): | 12 | 8 | 1 | 4 | 1 | 4 | 2 | 7 | 1 | 5 | 3 |

EHT variant user information field (User Info 2 to M)

b25                              b39   b40                        b44  b45        b47

FIG. 4a-3

Number of bits
(Bits):

| 12 | 3 | 2 | 4 | 4 | 12 | 3 | 8 |
|---|---|---|---|---|---|---|---|

Special user
information
field

| AID 12 (Association identifier) (=2007) | PHY Version ID (Physical layer version identifier) | UL EHT BW Extension (Uplink EHT bandwidth extension) | UL EHT Spatial Reuse 1 (Uplink EHT spatial reuse 1) | UL EHT Spatial Reuse 2 (Uplink EHT spatial reuse 2) | U-SIG Disregard And Validate (Universal signal field disregard and validate) | Reserved | Reserved |
|---|---|---|---|---|---|---|---|

b25           b36  b37        b39

TO
FIG. 4b-2

TO
FIG. 4b-2

FIG. 4b-1

EP 4 355 020 A1

CONT. FROM FIG. 4b-1

CONT. FROM FIG. 4b-1

User information list field

| User Info (STA 1) (User information 1) (special) | User Info (STA 2) (User information 2) | ... | User Info (STA K) (User information K) | User Info (STA K+1) (User information K+1) | ... | User Info (STA M) (User information M) |

TO FIG. 4b-3

TO FIG. 4b-3

TO FIG. 4b-3

TO FIG. 4b-3

FIG. 4b-2

Common information field

| Trigger Type (Trigger type) | UL Length (Uplink length) | More TFs (More trigger frames) | CS Required (Carrier sense required) | UL (HE) Bandwidth (Uplink bandwidth) | GI And EHT-LTF Type (Guard interval and EHT long training sequence type) | MU-MIMO EHT-LTF Mode (MU-MIMO EHT-LTF mode) | Number of EHT-LTF Symbols And Midamble Periodicity (Number of EHT-LTFs and midamble periodicity) | UL STBC (Uplink space time block code) |

Continue on next line

| LDPC Extra Symbol Segment (LDPC extra symbol segment) | AP TX Power (AP transmit power) | Pre-FEC Padding Factor (Pre-forward error correction padding factor) | PE Disambiguity (Packet extension disambiguity) | UL Spatial Reuse (Uplink spatial reuse) | Doppler (Doppler) | UL HE-SIG-A2 Reserved (Uplink HE-SIG-A2 reserved) | Reserved (Reserved) |

Number of bits (Bits): 9 1

| HE/EHT indication | Special user field existence indication | K value | Another UL HE-SIG-A2 Reserved (Another uplink HE-SIG-A2 reserved) |
| b54 | b55 | b56 | b62 | b63 |
| 1 | 1 | X | 7−X | |

Number of bits (Bits):

| | 12 | 8 | 1 | 4 | 1 | 4 | 2 | 7 | 1 | 8 |
|---|---|---|---|---|---|---|---|---|---|---|
| EHT variant user information field (User Info 2 to K) | AID 12 (Association identifier 12) | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/ Secondary 160 MHz indication) | Feedback Segment Retransmission Bitmap (Feedback segment retransmission bitmap) |

b25                                                                 b39   b40          b47

Number of bits (Bits):

| | 12 | 8 | 1 | 4 | 1 | 4 | 2 | 7 | 1 | 5 | 3 |
|---|---|---|---|---|---|---|---|---|---|---|---|
| EHT variant user information field (User Info K+1 to M) | AID 12 (Association identifier 12) | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/ Secondary 160 MHz indication) | **Feedback Segment Retransmission Bitmap (Feedback segment retransmission bitmap)** | **Reserved** |

b25                                                                 b39   b40          b44  b45  b47

FIG. 4b-3

EP 4 355 020 A1

Number of bits
(Bits):

| 12 | 3 | 2 | 4 | 4 | 12 | 3 | 8 |
|---|---|---|---|---|---|---|---|

Special user information field

| AID 12 (Association identifier) (=2007) | PHY Version ID (Physical layer version identifier) | UL EHT BW Extension (Uplink EHT bandwidth extension) | UL EHT Spatial Reuse 1 (Uplink EHT spatial reuse 1) | UL EHT Spatial Reuse 2 (Uplink EHT spatial reuse 2) | U-SIG Disregard And Validate (Universal signal field disregard and validate) | Reserved | Reserved |
|---|---|---|---|---|---|---|---|

b25          b36   b37     b39

TO
FIG. 5B

TO
FIG. 5B

FIG. 5A

EP 4 355 020 A1

Common information field

User information list field

| Trigger Type (Trigger type = 8 to 15) | UL Length (Uplink length) | More TFs (More trigger frames) | CS Required (Carrier sense required) | UL (HE) Bandwidth (Uplink bandwidth) | GI And EHT-LTF Type (Guard interval and EHT long training sequence type) | MU-MIMO EHT-LTF Mode (MU-MIMO EHT-LTF mode) | Number of EHT-LTF Symbols And Midamble Periodicity (Number of EHT-LTFs and midamble periodicity) | UL STBC (Uplink space time block code) |
|---|---|---|---|---|---|---|---|---|
| | | | | | | | 9 | 1 |

Continue on next line

| User Info (STA 1) (User information 1) (special) | User Info (STA 2) (User information 2) | User Info (STA 3) (User information 3) | ... | User Info (STA M) (User information M) |
|---|---|---|---|---|

| LDPC Extra Symbol Segment (LDPC extra symbol segment) | AP TX Power (AP transmit power) | Pre-FEC Padding Factor (Pre-forward error correction padding factor) | PE Disambiguity (Packet extension disambiguity) | UL Spatial Reuse (Uplink spatial reuse) | Doppler (Doppler) | UL HE-SIG-A2 Reserved (Uplink HE-SIG-A2 reserved) | Reserved (Reserved) |
|---|---|---|---|---|---|---|---|

b63

Number of bits (Bits):   1     1     7

| HE/EHT indication | Special user field existence indication | Another UL HE-SIG-A2 Reserved (Another uplink HE-SIG-A2 reserved) |
|---|---|---|
| b54 | b55 | b56        b62 |

FIG. 5B

EP 4 355 020 A1

CONT. FROM FIG. 5B    CONT. FROM FIG. 5B    CONT. FROM FIG. 5B    CONT. FROM FIG. 5B

Number of bits (Bits):

| | 12 | 8 | 1 | 4 | 1 | 4 | 2 | 7 | 1 | **8** |
|---|---|---|---|---|---|---|---|---|---|---|
| EHT variant user information field (User Info 2) | **AID 12 (Association identifier 12)** | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/Secondary 160 MHz indication) | **Feedback Segment Retransmission Bitmap (Feedback segment retransmission bitmap)-part 1** |

b25    b39    b40    **b47**

Same

| | 12 | 14 | 22 |
|---|---|---|---|
| EHT variant user information field (User Info 3) | **AID 12 (Association identifier 12)** | **Feedback segment retransmission bitmap-part 2** | **Reserved** |

FIG. 5C

EP 4 355 020 A1

Number of bits
(Bits):

| | 12 | 3 | 2 | 4 | 4 | 12 | 3 | 8 |
|---|---|---|---|---|---|---|---|---|
| Special user information field | AID 12 (Association identifier) (=2007) | PHY Version ID (Physical layer version identifier) | UL EHT BW Extension (Uplink EHT bandwidth extension) | UL EHT Spatial Reuse 1 (Uplink EHT spatial reuse 1) | UL EHT Spatial Reuse 2 (Uplink EHT spatial reuse 2) | U-SIG Disregard And Validate (Universal signal field disregard and validate) | Reserved | Reserved |

b25　　　　　　b36　b37　　b39

TO
FIG. 6B

TO
FIG. 6B

FIG. 6A

Common information field

| Trigger Type (Trigger type = 8 to 15) | UL Length (Uplink length) | More TFs (More trigger frames) | CS Required (Carrier sense required) | UL (HE) Bandwidth (Uplink bandwidth) | GI And EHT-LTF Type (Guard interval and EHT long training sequence type) | MU-MIMO EHT-LTF Mode (MU-MIMO EHT-LTF mode) | Number of EHT-LTF Symbols And Midamble Periodicity (Number of EHT-LTFs and midamble periodicity) | UL STBC (Uplink space time block code) |
|---|---|---|---|---|---|---|---|---|

9   1   Continue on next line

| LDPC Extra Symbol Segment (LDPC extra symbol segment) | AP TX Power (AP transmit power) | Pre-FEC Padding Factor (Pre-forward error correction padding factor) | PE Disambiguity (Packet extension disambiguity) | UL Spatial Reuse (Uplink spatial reuse) | Doppler (Doppler) | UL HE-SIG-A2 Reserved (Uplink HE-SIG-A2 reserved) | Reserved (Reserved) |
|---|---|---|---|---|---|---|---|

b63

Number of bits (Bits):   1   1   7

| HE/EHT indication | Special user field existence indication | Another UL HE-SIG-A2 Reserved (Another uplink HE-SIG-A2 reserved) |
|---|---|---|

b54   b55   b56   b62

User information list field

| User Info (STA 1) (User information 1) (special) | User Info (STA 2) (User information 2) | User Info (STA 3) (User information 3) | User Info (STA 4) (User information 4) | User Info (STA 5) (User information 5) | ... | User Info (STA M) (User information M) |
|---|---|---|---|---|---|---|

FIG. 6B

EP 4 355 020 A1

| | CONT. FROM FIG. 6B | CONT. FROM FIG. 6B | CONT. FROM FIG. 6B | CONT. FROM FIG. 6B | CONT. FROM FIG. 6B |

Number of bits (Bits):

| | 12 | 8 | 1 | 4 | 1 | 4 | 2 | 7 | 1 | 8 |
|---|---|---|---|---|---|---|---|---|---|---|
| EHT variant user information field (User Info 2) | AID 12 (Association identifier 12) | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/ Secondary 160 MHz indication) | Feedback Segment Retransmission Bitmap (Feedback segment retransmission bitmap)-part 1 |

b25                                                                          b39    b40                    b47

| | 12 | 8 | 1 | 4 | 1 | 4 | 2 | 7 | 1 | 8 |
|---|---|---|---|---|---|---|---|---|---|---|
| EHT variant user information field (User Info 3) | AID 12 (Association identifier 12) | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/ Secondary 160 MHz indication) | Feedback Segment Retransmission Bitmap (Feedback segment retransmission bitmap)-part 2 |

b25                                                                          b39

TO FIG. 6D          TO FIG. 6D                          FIG. 6C                                    TO FIG. 6D

CONT.
FROM
FIG. 6C

CONT.
FROM
FIG. 6C

CONT.
FROM
FIG. 6C

| | 12 | 8 | 1 | 4 | 1 | 4 | 2 | 7 | 1 | 8 |
|---|---|---|---|---|---|---|---|---|---|---|
| EHT variant user information field (User Info 4) | **AID 12** (**Association identifier 12**) | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/Secondary 160 MHz indication) | **Feedback Segment Retransmission Bitmap** (**Feedback segment retransmission bitmap**)-**part 3** |

b25                                    b39

| | 12 | 8 | 1 | 4 | 1 | 4 | 2 | 7 | 1 | 8 |
|---|---|---|---|---|---|---|---|---|---|---|
| EHT variant user information field (User Info 5) | **AID 12** (**Association identifier 12**) | RU Allocation (Resource unit allocation) | UL FEC Coding Type (Uplink forward error correction coding type) | UL EHT-MCS (Modulation and coding scheme) | Reserved (Reserved) | Start value of a spatial stream | Number of spatial streams | UL Target RSSI (Uplink target received signal strength indicator) | PS160 (Primary/Secondary 160 MHz indication) | **Feedback Segment Retransmission Bitmap** (**Feedback segment retransmission bitmap**)-**part 4** |

b25                                    b39

FIG. 6D

EP 4 355 020 A1

Number of bits

(a)

| (Bits): 4 | 4 | 3 | 1 | 2 | 1 | 2 |
|---|---|---|---|---|---|---|
| Nc Index (Number of columns index) | Nr Index (Number of rows index) | BW (Bandwidth) | Grouping (Ng) (Grouping) | Feedback Type (Feedback type) | Reserved (Reserved) | **Remaining Feedback Segment-high (Remaining feedback segment-high)** |

b15      A

| 3 | 1 | 9 | 6 | 1 | 3 |
|---|---|---|---|---|---|
| Remaining Feedback Segment-low (Remaining feedback segment-low) | First Feedback Segment (First feedback segment) | Partial BW Info (Partial bandwidth information) | Sounding Dialog Token Number (Sounding dialog token number) | Codebook Information (Codebook information) | Reserved (Reserved) |

b17      b19      b20

(a)

Number of bits

| (Bits): 4 | 4 | 3 | 1 | 2 | 3 |
|---|---|---|---|---|---|
| Nc Index (Number of columns index) | Nr Index (Number of rows index) | BW (Bandwidth) | Grouping (Ng) (Grouping) | Feedback Type (Feedback type) | Reserved (Reserved) |

| 3 | 1 | 9 | 6 | 1 | 2 | 1 |
|---|---|---|---|---|---|---|
| Remaining Feedback Segment-low (Remaining feedback segment-low) | First Feedback Segment (First feedback segment) | Partial BW Info (Partial bandwidth information) | Sounding Dialog Token Number (Sounding dialog token number) | Codebook Information (Codebook information) | **Remaining Feedback Segment-high (Remaining feedback segment-high)** | Reserved (Reserved) |

b17      b19      b20          b37      b38

(b)

FIG. 7

EP 4 355 020 A1

One or more times

| First device | S804:<br>EHT<br>NDPA<br>frame | SIFS | S805:<br>EHT<br>sounding<br>null data<br>packet | SIFS | S806:<br>Second<br>BFRP<br>trigger<br>frame | SIFS | | **S801:**<br>**Acknowledgment**<br>**frame**<br>**(including a**<br>**bitmap of each**<br>**STA)** | SIFS | S802:<br>First<br>BRP<br>trigger<br>frame | SIFS |

| Second device 1 | S807: Second EHT compressed beamforming/ channel quality indication frame | S803: First EHT compressed beamforming/ channel quality indication frame |

| Second device 2 | S807: Second EHT compressed beamforming/ channel quality indication frame | S803: First EHT compressed beamforming/ channel quality indication frame |

| Second device 3 | S807: Second EHT compressed beamforming/ channel quality indication frame | S803: First EHT compressed beamforming/ channel quality indication frame |

FIG. 8

Number of bytes
(Octets):

| 2 | 2 | 6 | 6 | 1 | 4 | | 4 | 4 |
|---|---|---|---|---|---|---|---|---|
| Frame Control (Frame control) | Duration (Duration) | RA (Receiver address) | TA (Transmitter address) | Sounding Dialog Token (Sounding dialog token) | STA Info 1 (Station information 1) | ... | STA Info N (Station information N) | FCS (Frame check sequence) |

Number of bits
(Bits):

| 11 | 9 | 1 | 4 | 2 | 1 | 1 | 3 |
|---|---|---|---|---|---|---|---|
| AID 11 (Association identifier 11) | Partial BW Info (Partial bandwidth information) | Reserved | Nc (Number of columns) index | Feedback Type And Ng (Feedback type and number of grouping) | Disambiguation (Disambiguation) | Codebook Size (Codebook size) | Reserved |

Number of bits
(Bits):

| 1 | 8 |
|---|---|
| Resolution | Feedback bitmap |

FIG. 9

EP 4 355 020 A1

EP 4 355 020 A1

One or more times

First device

| S1001: EHT NDPA frame | SIFS | S1002: EHT sounding null data packet | SIFS | S1003: Third BFRP trigger frame | SIFS |

| S1005: EHT NDPA frame | SIFS | S1006: EHT sounding null data packet | SIFS | S1007: Third BFRP trigger frame | SIFS |

Second device 1

| S1004: Third EHT compressed beamforming/ channel quality indication frame |

| S1008: First EHT compressed beamforming/ channel quality indication frame |

Second device 2

| S1004: Third EHT compressed beamforming/ channel quality indication frame |

| S1008: First EHT compressed beamforming/ channel quality indication frame |

Second device 3

| S1004: Third EHT compressed beamforming/ channel quality indication frame |

| S1008: First EHT compressed beamforming/ channel quality indication frame |

FIG. 10

First device

Second device

S1101: Generate a third frame

S1102: Send the third frame

S1103: Parse the third frame

FIG. 11

| Variable | Variable | | Variable | 0 to 3 |
|---|---|---|---|---|
| A-MPDU subframe 1 (A-MPDU subframe 1) | A-MPDU subframe 2 (A-MPDU subframe 2) | ... | A-MPDU subframe n (A-MPDU subframe n) | EOF padding (End of frame padding) |

| MPDU Delimiter (MPDU delimiter) | MPDU | Padding (Padding) |
|---|---|---|

Number of bytes (Octets):     4          Variable       0 to 3

FIG. 12

| B0 | B1 | B2          B15 | B16    B23 | B24          B31 |
|---|---|---|---|---|
| EOF<br>(End of frame) | Reserved<br>(Reserved) | MPDU Length<br>(MPDU length) | CRC (Cyclic<br>redundancy<br>code) | Delimiter Signature<br>(Delimiter signature) |
| 1 | 1 | 14 | 8 | 8 |

| B0        B1 | B2        B13 |
|---|---|
| MPDU Length High<br>(MPDU length high) | MPDU Length Low<br>(MPDU length low) |
| 2 | 12 |

Number
of bits
(Bits):

FIG. 13

EP 4 355 020 A1

| B0 | B1 | B2 | B15 | B16 | B23 | B24 | B31 |
|---|---|---|---|---|---|---|---|
| EOF (End of frame) | **MPDU Length Higher (MPDU length higher)** | MPDU Length (MPDU length) | | CRC (Cyclic redundancy code) | | Delimiter Signature (Delimiter signature) | |

Bits:　　1　　　　　　　　　1　　　　　　　　14　　　　　　　8　　　　　　　　8

| B0 | B1 | B2 | B13 |
|---|---|---|---|
| MPDU Length High (MPDU length high) | | MPDU Length Low (MPDU length low) | |

　　　　　　　　　　2　　　　　　　　　　12

(a)

| B0 | B1 | B15 | B16 | B23 | B24 | B31 |
|---|---|---|---|---|---|---|
| EOF (End of frame) | MPDU Length (MPDU length) | | CRC (Cyclic redundancy code) | | Delimiter Signature (Delimiter signature) | |

Bits:　　1　　　　　　14　　　　　　　8　　　　　　　8

| B0 | B1 | B2 | B3 | B14 |
|---|---|---|---|---|
| **MPDU Length Higher (MPDU length higher)** | MPDU Length High (MPDU length high) | | MPDU Length Low (MPDU length low) | |

　　　1　　　　　　　2　　　　　　　　12

(b)

FIG. 14

| Number of bytes: | 2 | 2 | 0 or 6 | 0 or 6 | 0 or 6 | 0 or 2 | 0 or 6 | 0 or 2 | 0 or 4 | Variable Variable | >4 |
|---|---|---|---|---|---|---|---|---|---|---|---|
| | Frame Control (Frame control) | Duration/ ID (Duration/ Identifier) | A1 (Address 1) | A2 (Address 2) | A3 (Address 3) | Sequence Control (Sequence control) | A4 (Address 4) | QoS Control (Quality of service control) | HT Control (High throughput control) | Frame Body (Frame body) | FCS (Frame check sequence) |

FIG. 15

FIG. 16

FIG. 17

| First device | S1801: EHT NDPA frame | SIFS | S1802: EHT sounding null data packet | SIFS | S1803: BFRP trigger frame | SIFS | | S1805: EHT NDPA frame | SIFS | S1806: EHT sounding null data packet | SIFS | S1807: BFRP trigger frame | SIFS |

Second device 1 — S1804: EHT compressed beamforming/ channel quality indication frame ... S1808: EHT compressed beamforming/ channel quality indication frame

Second device 2 — S1804: EHT compressed beamforming/ channel quality indication frame ... S1808: EHT compressed beamforming/ channel quality indication frame

Second device 3 — S1804: EHT compressed beamforming/ channel quality indication frame ... S1808: EHT compressed beamforming/ channel quality indication frame

First round of channel sounding          Second round of channel sounding

FIG. 18

| First device | | Second device |

S1901: Send a first frame

S1902: Send a second frame

FIG. 19

Communication apparatus 2000

2001

Processor

CPU 0

CPU 1

2004

Processor

CPU 2

CPU 3

2002

Memory

2003

Transceiver

FIG. 20

Communication apparatus 2100

2101

Processing module

Sending module

2103

2102

Receiving module

FIG. 21

Communication apparatus 2200

2202

Processing module

Transceiver module

2201

FIG. 22

## INTERNATIONAL SEARCH REPORT

| International application No. |
| --- |
| **PCT/CN2022/094799** |

| A. | CLASSIFICATION OF SUBJECT MATTER |
| --- | --- |

H04W 84/12(2009.01)i; H04B 17/309(2015.01)i; H04W 24/10(2009.01)i

According to International Patent Classification (IPC) or to both national classification and IPC

| B. | FIELDS SEARCHED |
| --- | --- |

Minimum documentation searched (classification system followed by classification symbols)

H04W84/-, H04B17/-, H04W24/-

Documentation searched other than minimum documentation to the extent that such documents are included in the fields searched

Electronic data base consulted during the international search (name of data base and, where practicable, search terms used)

CNABS, CNTXT, CNKI: 波束成形, 信道质量, 报告, 请求, 帧, 分片, 分段, 反馈段, 数量, 个数; VEN, USTXT, WOTXT, EPTXT, 3gpp, IEEE: beam form+, channel quality, CQI, report, request, frame, segment, feedback, num+.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2019349067 A1 (HUANG, P. K. et al.) 14 November 2019 (2019-11-14) description, paragraphs [0068]-[0098], and figures 1-3 | 1-20 |
| X | CN 111162825 A (HUAWEI TECHNOLOGIES CO., LTD.) 15 May 2020 (2020-05-15) description, paragraphs [0082]-[0102] and [0173]-[0181], and figures 3 and 18 | 1-20 |
| X | US 2015372795 A1 (MEDIATEK SINGAPORE PTE. LTD.) 24 December 2015 (2015-12-24) description, paragraphs [0030]-[0043], and figures 5-9 | 1-20 |
| A | CN 106454930 A (ZTE CORP.) 22 February 2017 (2017-02-22) entire document | 1-20 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 August 2022** | **29 August 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/094799**

| Patent document cited in search report | | | Publication date (day/month/year) | Patent family member(s) | | | Publication date (day/month/year) |
|---|---|---|---|---|---|---|---|
| US | 2019349067 | A1 | 14 November 2019 | US | 11115104 | B2 | 07 September 2021 |
| CN | 111162825 | A | 15 May 2020 | EP | 3866505 | A1 | 18 August 2021 |
| | | | | US | 2021266054 | A1 | 26 August 2021 |
| | | | | JP | 2022506632 | A | 17 January 2022 |
| | | | | WO | 2020094098 | A1 | 14 May 2020 |
| | | | | BR | 112021008941 | A2 | 10 August 2021 |
| | | | | KR | 20210082512 | A | 05 July 2021 |
| | | | | AU | 2019375823 | A1 | 10 June 2021 |
| | | | | SG | 11202104817 | A1 | 29 June 2021 |
| | | | | IN | 202117022475 | A | 01 October 2021 |
| | | | | EP | 3866505 | A4 | 22 December 2021 |
| US | 2015372795 | A1 | 24 December 2015 | WO | 2015195050 | A1 | 23 December 2015 |
| | | | | EP | 3146689 | A1 | 29 March 2017 |
| | | | | EP | 3146689 | A4 | 03 January 2018 |
| | | | | EP | 3146689 | B1 | 06 March 2019 |
| CN | 106454930 | A | 22 February 2017 | WO | 2017097115 | A1 | 15 June 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110633428X